# EUROPEAN PATENT APPLICATION

(11) **EP 3 796 468 A1**
(43) Date of publication of application: **24.03.2021**
(21) Application number: 19802830.0
(22) Date of filing: 13.05.2019
(51) Int. Cl.: H01Q 1/12, F16B 17/00, F16B 35/00, F16B 37/00, F16B 43/00, H01Q 13/08, H01Q 23/00

(54) **WIRELESS COMMUNICATION BOLT, WIRELESS COMMUNICATION NUT, WIRELESS COMMUNICATION WASHER, WIRELESS COMMUNICATION RIVET, WIRELESS COMMUNICATION FASTENER, AND STRUCTURE**

(30) Priority: 18.05.2018 JP 2018096196
(71) Applicant: Kyocera Corporation, Kyoto-shi, Kyoto 612-8501 (JP)
(72) Inventor: IKUTA, Takanori, Kyoto-shi, Kyoto 612-8501 (JP); YAMASAKI, Hiroshi, Kyoto-shi, Kyoto 612-8501 (JP)
(74) Representative: Viering, Jentschura & Partner mbB Patent- und Rechtsanwälte
(86) International application number: PCT/JP2019/018912
(87) International publication number: WO 2019/221052

(57) **Abstract**

An example of embodiments of the present disclosure includes a wireless communication bolt. The wireless communication bolt includes a bolt and a wireless communication module. The bolt includes a shaft part and a head part. The wireless communication module includes an antenna. The antenna includes a first conductor, a second conductor, a plurality of third conductors, a fourth conductor, and a feeding line. The second conductor faces the first conductor along a first axis. The plurality of third conductors are positioned between the first conductor and the second conductor. The plurality of third conductors extend along the first axis. The fourth conductor is connected to the first conductor and the second conductor. The fourth conductor extends along the first axis. The feeding line is electromagnetically connected to the third conductor. The fourth conductor faces the head part.

## Description

### Cross-reference to Related Application

The present application claims the priority of Japanese Patent Application No. 2018-096196 filed in Japan on May 18, 2018, the disclosure of which is incorporated herein by reference in its entirety.

### Field

The present disclosure relates to a wireless communication bolt, a wireless communication nut, a wireless communication washer, a wireless communication rivet, and a wireless communication fastener, that are capable of wireless communication, and a structure. Background

Electromagnetic waves radiated from an antenna are reflected by a metal conductor. The electromagnetic waves reflected by the metal conductor have a phase shift of 180°. The reflected electromagnetic waves are synthesized with the electromagnetic waves radiated from the antenna. The electromagnetic waves radiated from the antenna may have a small amplitude when synthesized with the electromagnetic waves having a phase shift. As a result, the amplitude of the electromagnetic waves radiated from the antenna is decreased. The influence of the reflected waves is reduced by setting a distance between the antenna and the metal conductor to be 1/4 of a wavelength λ of the electromagnetic waves to be radiated.

On the other hand, technologies for reducing the influence of reflected waves by using an artificial magnetic conductor have been suggested. These technologies are described in, for example, Non Patent Literature 1 and Non Patent Literature 2.

### Citation List

### Non Patent Literature

Non Patent Literature 1: Murakami et al., "Low profile design and bandwidth characteristics of artificial magnetic conductor using dielectric substrate", IEICE (B), Vol. J98-B No. 2, pp. 172-179.

Non Patent Literature 2: Murakami et al., "Optimized configuration of reflector for dipole antenna with AMC reflector", IEICE (B), Vol. J98-B No. 11, pp. 212-1220.

### Summary

A wireless communication bolt of embodiments of the present disclosure includes a bolt and a wireless communication module. The bolt includes a shaft part and a head part. The wireless communication module includes an antenna. The antenna includes a first conductor, a second conductor, a plurality of third conductors, a fourth conductor, and a feeding line. The second conductor faces the first conductor along a first axis. The plurality of third conductors are positioned between the first conductor and the second conductor. The plurality of third conductors extend along the first axis. The fourth conductor is connected to the first conductor and the second conductor. The fourth conductor extends along the first axis. The feeding line is electromagnetically connected to the third conductor. The fourth conductor faces the head part.

A wireless communication bolt of embodiments of the present disclosure includes a bolt and a wireless communication module. The bolt includes a shaft part and a head part. The wireless communication module includes an antenna. The antenna includes a first conductor, a second conductor, a plurality of third conductors, a fourth conductor, and a feeding line. The second conductor faces the first conductor along a first axis. The plurality of third conductors are positioned between the first conductor and the second conductor. The plurality of third conductors extend along the first axis. The fourth conductor is connected to the first conductor and the second conductor. The fourth conductor extends along the first axis. The feeding line is electromagnetically connected to the third conductor. The antenna is positioned at a tip end portion of the shaft part.

A wireless communication nut according to embodiments of the present disclosure includes a nut and a wireless communication module. The wireless communication module includes an antenna. The antenna includes a first conductor, a second conductor, a plurality of third conductors, a fourth conductor, and a feeding line. The second conductor faces the first conductor along a first axis. The plurality of third conductors are positioned between the first conductor and the second conductor. The plurality of third conductors extend along the first axis. The fourth conductor is connected to the first conductor and the second conductor. The fourth conductor extends along the first axis. The feeding line is electromagnetically connected to the third conductor. The fourth conductor faces the nut.

A wireless communication washer according to embodiments of the present disclosure includes a washer and a wireless communication module. The washer has an extension extending outward from an outer periphery of a nut or a bolt. The wireless communication module includes an antenna. The antenna includes a first conductor, a second conductor, a plurality of third conductors, a fourth conductor, and a feeding line. The second conductor faces the first conductor along a first axis. The plurality of third conductors are positioned between the first conductor and the second conductor. The plurality of third conductors extend along the first axis. The fourth conductor is connected to the first conductor and the second conductor. The fourth conductor extends along the first axis. The feeding line is electromagnetically connected to the third conductor. The antenna is positioned on the extension.

A wireless communication rivet according to embodiments of the present disclosure includes a rivet and a wireless communication module. The rivet includes a head part. The wireless communication module includes an antenna. The antenna includes a first conductor, a second conductor, a plurality of third conductors, a fourth conductor, and a feeding line. The second conductor faces the first conductor along a first axis. The plurality of third conductors are positioned between the first conductor and the second conductor. The plurality of third conductors extend along the first axis. The fourth conductor is connected to the first conductor and the second conductor. The fourth conductor extends along the first axis. The feeding line is electromagnetically connected to the third conductor. The fourth conductor faces the head part.

A wireless communication fastener of embodiments of the present disclosure includes any one of the wireless communication bolt, the wireless communication nut, or the wireless communication washer.

A structure according to embodiments of the present disclosure is fixed with the wireless communication fastener or the wireless communication rivet.

### Brief Description of Drawings

FIG. 1 is a perspective view illustrating an embodiment of a resonator.
FIG. 2 is a plan view of the resonator illustrated in FIG. 1.
FIG. 3A is a cross-sectional view of the resonator illustrated in FIG. 1.
FIG. 3B is a cross-sectional view of the resonator illustrated in FIG. 1.
FIG. 4 is a cross-sectional view of the resonator illustrated in FIG. 1.
FIG. 5 is a conceptual view illustrating a unit structure of the resonator illustrated in FIG. 1.
FIG. 6 is a perspective view illustrating an embodiment of a resonator.
FIG. 7 is a plan view of the resonator illustrated in FIG. 6.
FIG. 8A is a cross-sectional view of the resonator illustrated in FIG. 6.
FIG. 8B is a cross-sectional view of the resonator illustrated in FIG. 6.
FIG. 9 is a cross-sectional view of the resonator illustrated in FIG. 6.
FIG. 10 is a perspective view illustrating an embodiment of a resonator.
FIG. 11 is a plan view of the resonator illustrated in FIG. 10.
FIG. 12A is a cross-sectional view of the resonator illustrated in FIG. 10.
FIG. 12B is a cross-sectional view of the resonator illustrated in FIG. 10.
FIG. 13 is a cross-sectional view of the resonator illustrated in FIG. 10.
FIG. 14 is a perspective view illustrating an embodiment of a resonator.
FIG. 15 is a plan view of the resonator illustrated in FIG. 14.
FIG. 16A is a cross-sectional view of the resonator illustrated in FIG. 14.
FIG. 16B is a cross-sectional view of the resonator illustrated in FIG. 14.
FIG. 17 is a cross-sectional view of the resonator illustrated in FIG. 14.
FIG. 18 is a plan view illustrating an embodiment of a resonator.
FIG. 19A is a cross-sectional view of the resonator illustrated in FIG. 18.
FIG. 19B is a cross-sectional view of the resonator illustrated in FIG. 18.
FIG. 20 is a cross-sectional view illustrating an embodiment of a resonator.
FIG. 21 is a plan view of an embodiment of a resonator.
FIG. 22A is a cross-sectional view illustrating an embodiment of a resonator.
FIG. 22B is a cross-sectional view illustrating an embodiment of a resonator.
FIG. 22C is a cross-sectional view illustrating an embodiment of a resonator.
FIG. 23 is a plan view of an embodiment of a resonator.
FIG. 24 is a plan view of an embodiment of a resonator.
FIG. 25 is a plan view of an embodiment of a resonator.
FIG. 26 is a plan view of an embodiment of a resonator.
FIG. 27 is a plan view of an embodiment of a resonator.
FIG. 28 is a plan view of an embodiment of a resonator.
FIG. 29A is a plan view of an embodiment of a resonator.
FIG. 29B is a plan view of an embodiment of a resonator.
FIG. 30 is a plan view of an embodiment of a resonator.
FIG. 31A is a schematic view illustrating an example of a resonator.
FIG. 31B is a schematic view illustrating an example of a resonator.
FIG. 31C is a schematic view illustrating an example of a resonator.
FIG. 31D is a schematic view illustrating an example of a resonator.
FIG. 32A is a plan view of an embodiment of a resonator.
FIG. 32B is a plan view of an embodiment of a resonator.
FIG. 32C is a plan view of an embodiment of a resonator.
FIG. 32D is a plan view of an embodiment of a resonator.
FIG. 33A is a plan view of an embodiment of a resonator.
FIG. 33B is a plan view of an embodiment of a resonator.
FIG. 33C is a plan view of an embodiment of a resonator.
FIG. 33D is a plan view of an embodiment of a resonator.
FIG. 34A is a plan view of an embodiment of a resonator.
FIG. 34B is a plan view of an embodiment of a resonator.
FIG. 34C is a plan view of an embodiment of a resonator.
FIG. 34D is a plan view of an embodiment of a resonator.
FIG. 35 is a plan view of an embodiment of a resonator.
FIG. 36A is a cross-sectional view illustrating an embodiment of a resonator.
FIG. 36B is a cross-sectional view illustrating an embodiment of a resonator.
FIG. 37 is a plan view of an embodiment of a resonator.
FIG. 38 is a plan view of an embodiment of a resonator.
FIG. 39 is a plan view of an embodiment of a resonator.
FIG. 40 is a plan view of an embodiment of a resonator.
FIG. 41 is a plan view of an embodiment of a resonator.
FIG. 42 is a plan view of an embodiment of a resonator.
FIG. 43 is a cross-sectional view illustrating an embodiment of a resonator.
FIG. 44 is a plan view of an embodiment of a resonator.
FIG. 45 is a cross-sectional view illustrating an embodiment of a resonator.
FIG. 46 is a plan view of an embodiment of a resonator.
FIG. 47 is a cross-sectional view illustrating an embodiment of a resonator.
FIG. 48 is a plan view of an embodiment of a resonator.
FIG. 49 is a cross-sectional view illustrating an embodiment of a resonator.
FIG. 50 is a plan view of an embodiment of a resonator.
FIG. 51 is a cross-sectional view illustrating an embodiment of a resonator.
FIG. 52 is a plan view of an embodiment of a resonator.
FIG. 53 is a cross-sectional view illustrating an embodiment of a resonator.
FIG. 54 is a cross-sectional view illustrating an embodiment of a resonator.
FIG. 55 is a plan view of an embodiment of a resonator.
FIG. 56A is a cross-sectional view illustrating an embodiment of a resonator.
FIG. 56B is a cross-sectional view illustrating an embodiment of a resonator.
FIG. 57 is a plan view of an embodiment of a resonator.
FIG. 58 is a plan view of an embodiment of a resonator.
FIG. 59 is a plan view of an embodiment of a resonator.
FIG. 60 is a plan view of an embodiment of a resonator.
FIG. 61 is a plan view of an embodiment of a resonator.
FIG. 62 is a plan view of an embodiment of a resonator.
FIG. 63 is a plan view illustrating an embodiment of a resonator.
FIG. 64 is a cross-sectional view illustrating an embodiment of a resonator.
FIG. 65 is a plan view of an embodiment of an antenna.
FIG. 66 is a cross-sectional view illustrating an embodiment of an antenna.
FIG. 67 is a plan view of an embodiment of an antenna.
FIG. 68 is a cross-sectional view illustrating an embodiment of an antenna.
FIG. 69 is a plan view of an embodiment of an antenna.
FIG. 70 is a cross-sectional view illustrating an embodiment of an antenna.
FIG. 71 is a cross-sectional view illustrating an embodiment of an antenna.
FIG. 72 is a plan view of an embodiment of an antenna.
FIG. 73 is a cross-sectional view illustrating an embodiment of an antenna.
FIG. 74 is a plan view of an embodiment of an antenna.
FIG. 75 is a cross-sectional view illustrating an embodiment of an antenna.
FIG. 76 is a plan view of an embodiment of an antenna.
FIG. 77A is a cross-sectional view illustrating an embodiment of an antenna.
FIG. 77B is a cross-sectional view illustrating an embodiment of an antenna.
FIG. 78 is a plan view of an embodiment of an antenna.
FIG. 79 is a plan view of an embodiment of an antenna.
FIG. 80 is a cross-sectional view of the antenna illustrated in FIG. 79.
FIG. 81 is a block diagram illustrating an embodiment of a wireless communication module.
FIG. 82 is a partial cross-sectional perspective view illustrating an embodiment of a wireless communication module.
FIG. 83 is a partial cross-sectional view illustrating an embodiment of a wireless communication module.
FIG. 84 is a partial cross-sectional view illustrating an embodiment of a wireless communication module.
FIG. 85 is a block diagram illustrating an embodiment of a wireless communication device.
FIG. 86 is a plan view illustrating an embodiment of a wireless communication device.
FIG. 87 is a cross-sectional view illustrating an embodiment of a wireless communication device.
FIG. 88 is a cross-sectional view illustrating an embodiment of a wireless communication device.
FIG. 89 is a cross-sectional view illustrating an embodiment of a wireless communication device.
FIG. 90 is a plan view illustrating an embodiment of a wireless communication device.
FIG. 91 is a cross-sectional view illustrating an embodiment of a wireless communication device.
FIG. 92 is a plan view illustrating an embodiment of a wireless communication device.
FIG. 93 is a diagram illustrating a schematic circuit of a wireless communication device.
FIG. 94 is a diagram illustrating a schematic circuit of a wireless communication device.
FIG. 95 is a plan view illustrating an embodiment of a wireless communication device.
FIG. 96 is a perspective view illustrating an embodiment of a wireless communication device.
FIG. 97A is a side view illustrating an embodiment of a wireless communication device.
FIG. 97B is a cross-sectional view illustrating an embodiment of a wireless communication device.
FIG. 98 is a perspective view illustrating an embodiment of a wireless communication device.
FIG. 99 is a cross-sectional view illustrating an embodiment of a wireless communication device.
FIG. 100 is a perspective view illustrating an embodiment of a wireless communication device.
FIG. 101 is a cross-sectional view illustrating an embodiment of a resonator.
FIG. 102 is a plan view illustrating an embodiment of a resonator.
FIG. 103 is a plan view illustrating an embodiment of a resonator.
FIG. 104 is a cross-sectional view illustrating an embodiment of a resonator.
FIG. 105 is a plan view illustrating an embodiment of a resonator.
FIG. 106 is a plan view illustrating an embodiment of a resonator.
FIG. 107 is a cross-sectional view illustrating an embodiment of a resonator.
FIG. 108 is a plan view illustrating an embodiment of a wireless communication module.
FIG. 109 is a plan view illustrating an embodiment of a wireless communication module.
FIG. 110 is a cross-sectional view illustrating an embodiment of a wireless communication module.
FIG. 111 is a plan view illustrating an embodiment of a wireless communication module.
FIG. 112 is a plan view illustrating an embodiment of a wireless communication module.
FIG. 113 is a cross-sectional view illustrating an embodiment of a wireless communication module.
FIG. 114 is a cross-sectional view illustrating an embodiment of a wireless communication module.
FIG. 115 is a cross-sectional view illustrating an embodiment of a resonator.
FIG. 116 is a cross-sectional view illustrating an embodiment of a resonance structure.
FIG. 117 is a cross-sectional view illustrating an embodiment of a resonance structure.
FIG. 118 is a perspective view illustrating a conductor shape of a first antenna used in a simulation.
FIG. 119 is a graph corresponding to results shown in Table 1.
FIG. 120 is a graph corresponding to results shown in Table 2.
FIG. 121 is a graph corresponding to results shown in Table 3.
FIG. 122 is a schematic view illustrating an embodiment of a wireless communication bolt.
FIG. 123A is a perspective view illustrating an embodiment of a wireless communication bolt.
FIG. 123B is a plan view illustrating an embodiment of a wireless communication bolt.
FIG. 124A is a perspective view illustrating an embodiment of a wireless communication bolt.
FIG. 124B is a cross-sectional view illustrating an embodiment of a wireless communication bolt.
FIG. 125A is a perspective view illustrating an embodiment of a wireless communication bolt.
FIG. 125B is a plan view illustrating an embodiment of a wireless communication bolt.
FIG. 126A is a perspective view illustrating an embodiment of a wireless communication bolt.
FIG. 126B is a plan view illustrating an embodiment of a wireless communication bolt.
FIG. 127A is a perspective view illustrating an embodiment of a wireless communication bolt.
FIG. 127B is a plan view illustrating an embodiment of a wireless communication bolt.
FIG. 128A is a perspective view illustrating an embodiment of a wireless communication bolt.
FIG. 128B is a plan view illustrating an embodiment of a wireless communication bolt.
FIG. 129A is a perspective view illustrating an embodiment of a wireless communication bolt.
FIG. 129B is a plan view illustrating an embodiment of a wireless communication bolt.
FIG. 130A is a perspective view illustrating an embodiment of a wireless communication nut.
FIG. 130B is a plan view illustrating an embodiment of a wireless communication nut.
FIG. 131A is a perspective view illustrating an embodiment of a wireless communication nut.
FIG. 131B is a cross-sectional view illustrating an embodiment of a wireless communication nut.
FIG. 132A is a perspective view illustrating an embodiment of a wireless communication nut.
FIG. 132B is a plan view illustrating an embodiment of a wireless communication nut.
FIG. 133A is a perspective view illustrating an embodiment of a wireless communication nut.
FIG. 133B is a plan view illustrating an embodiment of a wireless communication nut.
FIG. 134A is a perspective view illustrating an embodiment of a wireless communication nut.
FIG. 134B is a plan view illustrating an embodiment of a wireless communication nut.
FIG. 135A is a perspective view illustrating an embodiment of a wireless communication nut.
FIG. 135B is a plan view illustrating an embodiment of a wireless communication nut.
FIG. 136 is a perspective view illustrating an embodiment of a wireless communication rivet.

### Description of Embodiments

The present disclosure relates to providing a structure with a novel resonance structure.

With a wireless communication bolt, a wireless communication nut, a wireless communication washer, a wireless communication rivet, a wireless communication fastener, and a structure according to the present disclosure, an influence of a reflected wave caused by a fastening target is small.

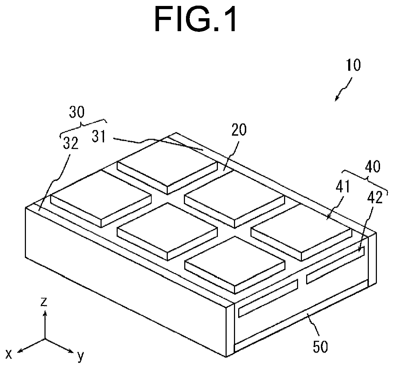

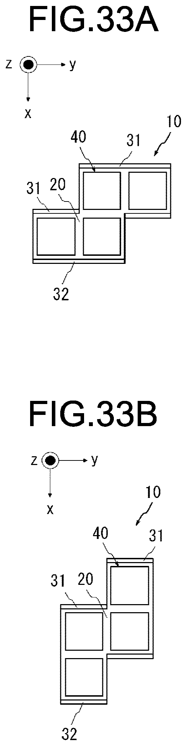

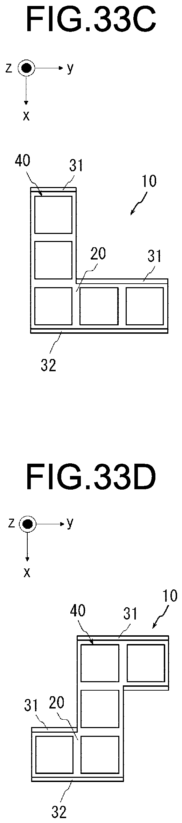

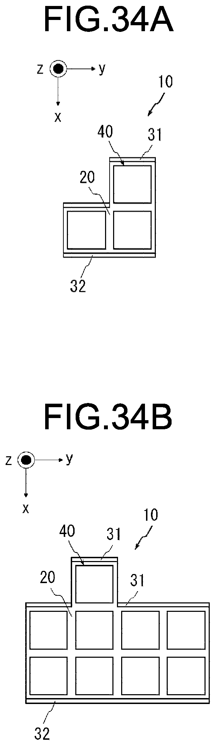

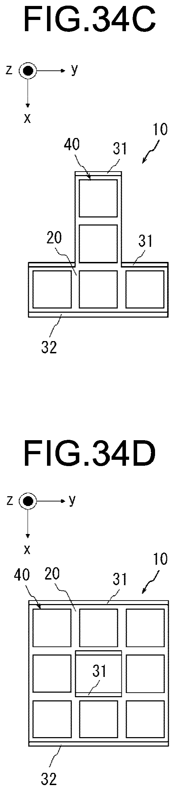

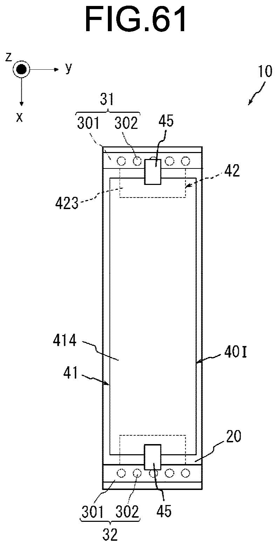

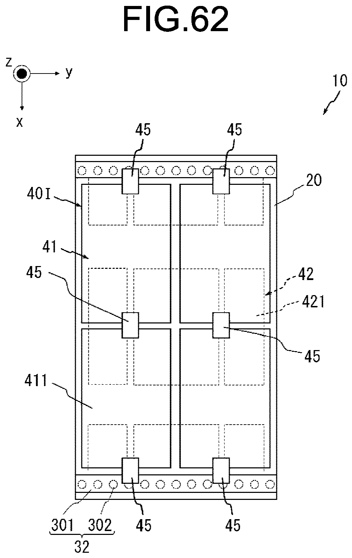

Embodiments of the present disclosure will be described below. A resonance structure can include a resonator. The resonance structure can include a resonator and another member, and be implemented by a combination thereof. A resonator 10 illustrated in FIGS. 1 to 62 includes a base 20, pair conductors 30, a third conductor 40, and a fourth conductor 50. The base 20 is in contact with the pair conductors 30, the third conductor 40, and the fourth conductor 50. In the resonator 10, the pair conductors 30, the third conductor 40, and the fourth conductor 50 function as a resonator. The resonator 10 can resonate at a plurality of resonant frequencies. One of the resonant frequencies of the resonator 10 will be referred to as a first frequency f₁. A wavelength of the first frequency f₁ is λᵢ. The resonator 10 can have at least one of one or more resonant frequencies as an operating frequency. The resonator 10 uses the first frequency f₁ as the operating frequency.

The base 20 can include any one of a ceramic material or a resin material as a composition. The ceramic material is an aluminum oxide sintered body, an aluminum nitride sintered body, a mullite sintered body, a glass ceramic sintered body, a crystallized glass in which a crystalline component is precipitated in a glass base material, and a microcrystalline sintered body of mica, aluminum titanate, or the like. The resin material is an epoxy resin, a polyester resin, a polyimide resin, a polyamideimide resin, a polyetherimide resin, and a material obtained by curing an uncured material such as a liquid crystal polymer.

The pair conductors 30, the third conductor 40, and the fourth conductor 50 can include, as a composition, any one of a metal material, an alloy of metal materials, a hardened material of a metal paste, or a conductive polymer. The pair conductors 30, the third conductor 40, and the fourth conductor 50 may all be formed of the same material. The pair conductors 30, the third conductor 40, and the fourth conductor 50 may each be formed of a different material. Any combination of the pair conductors 30, the third conductor 40, and the fourth conductor 50 may be formed of the same material. The metal material includes copper, silver, palladium, gold, platinum, aluminum, chromium, nickel, cadmium lead, selenium, manganese, tin, vanadium, lithium, cobalt, titanium, or the like. The alloy includes a plurality of metal materials. A metal paste is a paste obtained by kneading powder of a metal material with an organic solvent and a binder. The binder is an epoxy resin, a polyester resin, a polyimide resin, a polyamideimide resin, or a polyetherimide resin. The conductive polymer is a polythiophene-based polymer, a polyacetylene-based polymer, a polyaniline-based polymer, a polypyrrole-based polymer, or the like.

The resonator 10 includes two pair conductors 30. The pair conductors 30 include a plurality of conductors. The pair conductors 30 include a first conductor 31 and a second conductor 32. The pair conductors 30 can include three or more conductors. Each conductor of the pair conductors 30 is separated from another conductor along a first axis. Each one of the conductors of the pair conductors 30 can be paired with another conductor. Each conductor of the pair conductors 30 can be seen as an electric conductor for the resonator between the paired conductors. The first conductor 31 is positioned away from the second conductor 32 along the first axis. Each conductor 31 or 32 extends along a second plane that intersects the first axis.

In the present disclosure, the first axis is referred to as an x direction. In the present disclosure, a third axis is referred to as a y direction. In the present disclosure, a second axis is referred to as a z direction. In the present disclosure, a first plane is referred to as an xy plane. In the present disclosure, the second plane is referred to as a yz plane. In the present disclosure, a third plane is referred to as a zx plane. These planes are planes in a coordinate space, and do not indicate specific planes or specific surfaces. In the present disclosure, a surface integral in the xy plane may be referred to as a first surface integral. In the present disclosure, a surface integral in the yz plane may be referred to as a second surface integral. In the present disclosure, a surface integral in the zx plane may be referred to as a third surface integral. The surface integral is expressed in a unit such as a square meter. In the present disclosure, a length in the x direction may be simply referred to as "length". In the present disclosure, a length in the y direction may be simply referred to as "width". In the present disclosure, a length in the z direction may be simply referred to as "height".

In one example, the respective conductors 31 and 32 are positioned at opposite end portions of the base 20 in the x direction. Each conductor 31 or 32 can partially face the outside of the base 20. Each conductor 31 or 32 can be partially positioned inside the base 20, and partially positioned outside the base 20. Each conductor 31, 32 can be positioned inside the base 20.

The third conductor 40 functions as a resonator. The third conductor 40 can include at least one of a line-type resonator, a patch-type resonator, or a slot-type resonator. In one example, the third conductor 40 is positioned on the base 20. In one example, the third conductor 40 is positioned at an end of the base 20 in the z direction. In one example, the third conductor 40 can be positioned inside the base 20. The third conductor 40 can be partially positioned inside the base 20, and partially positioned outside the base 20. A partial surface of the third conductor 40 can face the outside of the base 20.

The third conductor 40 includes at least one conductor. The third conductor 40 can include a plurality of conductors. In a case where the third conductor 40 includes a plurality of conductors, the third conductor 40 can be referred to as a third conductor group. The third conductor 40 includes at least one conductive layer. The third conductor 40 includes at least one conductor in one conductive layer. The third conductor 40 can include a plurality of conductive layers. For example, the third conductor 40 can include three or more conductive layers. The third conductor 40 includes at least one conductor in each of the plurality of conductive layers. The third conductor 40 extends in the xy plane. The xy plane includes the x direction. Each conductive layer of the third conductor 40 extends along the xy plane.

In one example of the embodiments, the third conductor 40 includes a first conductive layer 41 and a second conductive layer 42. The first conductive layer 41 extends along the xy plane. The first conductive layer 41 can be positioned on the base 20. The second conductive layer 42 extends along the xy plane. The second conductive layer 42 can be capacitively coupled to the first conductive layer 41. The second conductive layer 42 can be electrically connected to the first conductive layer 41. Two conductive layers capacitively coupled to each other may face each other in the y direction. Two conductive layers capacitively coupled to each other may face each other in the x direction. Two conductive layers capacitively coupled to each other may face each other in the first plane. Two conductive layers facing each other in the first plane can be paraphrased as two conductors in one conductive layer. The second conductive layer 42 can be positioned such that at least a portion thereof overlaps the first conductive layer 41 in the z direction. The second conductive layer 42 can be positioned inside the base 20.

The fourth conductor 50 is positioned away from the third conductor 40. The fourth conductor 50 is electrically connected to each conductor 31 or 32 of the pair conductors 30. The fourth conductor 50 is electrically connected to the first conductor 31 and the second conductor 32. The fourth conductor 50 extends along the third conductor 40. The fourth conductor 50 extends along the first plane. The fourth conductor 50 extends from the first conductor 31 to the second conductor 32. The fourth conductor 50 is positioned on the base 20. The fourth conductor 50 may be positioned inside the base 20. The fourth conductor 50 can be partially positioned inside the base 20, and partially positioned outside the base 20. A partial surface of the fourth conductor 50 can face the outside of the base 20.

In one example of the embodiments, the fourth conductor 50 can function as a ground conductor in the resonator 10. The fourth conductor 50 can serve as an electric potential reference point for the resonator 10. The fourth conductor 50 may be connected to a ground of a device including the resonator 10.

In an example of the embodiments, the resonator 10 can include the fourth conductor 50 and a reference potential layer 51. The reference potential layer 51 is positioned away from the fourth conductor 50 in the z direction. The reference potential layer 51 is electrically insulated from the fourth conductor 50. The reference potential layer 51 can serve as an electric potential reference point for the resonator 10. The reference potential layer 51 can be electrically connected to the ground of the device including the resonator 10. The fourth conductor 50 can be electrically separated from the ground of the device including the resonator 10. The reference potential layer 51 faces any one of the third conductor 40 or the fourth conductor 50 in the z direction.

In one example of the embodiments, the reference potential layer 51 faces the third conductor 40 while having the fourth conductor 50 interposed therebetween.

The fourth conductor 50 is positioned between the third conductor 40 and the reference potential layer 51. An interval between the reference potential layer 51 and the fourth conductor 50 is smaller than an interval between the third conductor 40 and the fourth conductor 50.

In the resonator 10 including the reference potential layer 51, the fourth conductor 50 can include one or more conductors. In the resonator 10 including the reference potential layer 51, the fourth conductor 50 can include one or more conductors, and the third conductor 40 can be one conductor connected to the pair conductors 30. In the resonator 10 including the reference potential layer 51, each of the third conductor 40 and the fourth conductor 50 can include at least one resonator.

In the resonator 10 including the reference potential layer 51, the fourth conductor 50 can include a plurality of conductive layers. For example, the fourth conductor 50 can include a third conductive layer 52 and a fourth conductive layer 53. The third conductive layer 52 can be capacitively coupled to the fourth conductive layer 53. The third conductive layer 52 can be electrically connected to the first conductive layer 41. Two conductive layers capacitively coupled to each other may face each other in the y direction. Two conductive layers capacitively coupled to each other may face each other in the x direction. Two conductive layers capacitively coupled to each other may face each other in the xy plane.

A distance between two conductive layers facing each other in the z direction and capacitively coupled to each other is smaller than a distance between a corresponding conductor group and the reference potential layer 51. For example, a distance between the first conductive layer 41 and the second conductive layer 42 is smaller than a distance between the third conductor 40 and the reference potential layer 51. For example, a distance between the third conductive layer 52 and the fourth conductive layer 53 is smaller than a distance between the fourth conductor 50 and the reference potential layer 51.

Each of the first conductor 31 and the second conductor 32 can include one or more conductors. Each of the first conductor 31 and the second conductor 32 can be one conductor. Each of the first conductor 31 and the second conductor 32 can include a plurality of conductors. Each of the first conductor 31 and the second conductor 32 can include at least one fifth conductive layer 301 and a plurality of fifth conductors 302. The pair conductors 30 include at least one fifth conductive layer 301 and a plurality of fifth conductors 302.

The fifth conductive layer 301 extends in the y direction. The fifth conductive layer 301 extends along the xy plane. The fifth conductive layer 301 is a conductor having a layer form. The fifth conductive layer 301 can be positioned on the base 20. The fifth conductive layer 301 can be positioned inside the base 20. The plurality of fifth conductive layers 301 are separated from each other in the z direction. The plurality of fifth conductive layers 301 are arranged in the z direction. The plurality of fifth conductive layers 301 partially overlap each other in the z direction. The fifth conductive layer 301 electrically connects the plurality of fifth conductors 302. The fifth conductive layer 301 is a connecting conductor that connects the plurality of fifth conductors 302. The fifth conductive layer 301 can be electrically connected to any conductive layer of the third conductor 40. In embodiments, the fifth conductive layer 301 is electrically connected to the second conductive layer 42. The fifth conductive layer 301 can be integrated with the second conductive layer 42. In embodiments, the fifth conductive layer 301 can be electrically connected to the fourth conductor 50. The fifth conductive layer 301 can be integrated with the fourth conductor 50.

Each fifth conductor 302 extends in the z direction. The plurality of fifth conductors 302 are separated from each other in the y direction. A distance between the fifth conductors 302 is equal to or smaller than 1/2 of the wavelength λ₁. When the distance between the electrically connected fifth conductors 302 is equal to or smaller than λ₁/2, each of the first conductor 31 and the second conductor 32 can reduce the leakage of electromagnetic waves in a resonant frequency band from between the fifth conductors 302. Since the leakage of electromagnetic waves in the resonant frequency band is reduced, the pair conductors 30 are seen as electric conductor for a unit structure. At least some of the plurality of fifth conductors 302 are electrically connected to the fourth conductor 50. In embodiments, some of the plurality of fifth conductors 302 can electrically connect the fourth conductor 50 and the fifth conductive layer 301 to each other. In embodiments, the plurality of fifth conductors 302 can be electrically connected to the fourth conductor 50 via the fifth conductive layer 301. Some of the plurality of fifth conductors 302 can electrically connect one fifth conductive layer 301 and another fifth conductive layer 301 to each other. The fifth conductor 302 can use a via conductor and a through-hole conductor.

The resonator 10 includes the third conductor 40 that functions as a resonator. The third conductor 40 can function as an artificial magnetic conductor (AMC). The artificial magnetic conductor can also be referred to as a reactive impedance surface (RIS).

The resonator 10 includes the third conductor 40 that functions as a resonator and is provided between two pair conductors 30 facing each other in the x direction. The two pair conductors 30 can be seen as electric conductors extending in the yz plane for the third conductor 40. Ends of the resonator 10 in the y direction are electrically opened. In the resonator 10, zx planes at the opposite ends in the y direction are in a high impedance state. The zx planes at the opposite ends of the resonator 10 in the y direction are seen as magnetic conductors for the third conductor 40. The resonator 10 is surrounded by two electric conductors and two high impedance surfaces (magnetic conductors), so that the resonator of the third conductor 40 has an artificial magnetic conductor character in the z direction. Since the resonator 10 is surrounded by two electric conductors and two high impedance surfaces, the resonator of the third conductor 40 has the artificial magnetic conductor character with a finite value.

With the "artificial magnetic conductor character", a phase difference between an incident wave and a reflected wave at the operating frequency is 0 degrees. In the resonator 10, a phase difference between the incident wave and the reflected wave at the first frequency f₁ is 0 degrees. With the "artificial magnetic conductor character", a phase difference between the incident wave and the reflected wave in an operating frequency band is - 90 degrees to +90 degrees. The operating frequency band is a frequency band between a second frequency f₂ and a third frequency f₃. The second frequency f₂ is a frequency at which the phase difference between the incident wave and the reflected wave is +90 degrees. The third frequency f₃ is a frequency at which the phase difference between the incident wave and the reflected wave is -90 degrees. The width of the operating frequency band determined based on the second and third frequencies may be, for example, 100 MHz or more when the operating frequency is about 2.5 GHz. The width of the operating frequency band may be, for example, 5 MHz or more when the operating frequency is about 400 MHz.

The operating frequency of the resonator 10 can be different from the resonant frequency of each resonator of the third conductor 40. The operating frequency of the resonator 10 can vary depending on the length, size, shape, material, and the like of each of the base 20, the pair conductors 30, the third conductor 40, and the fourth conductor 50.

In one example of embodiments, the third conductor 40 can include at least one unit resonator 40X. The third conductor 40 can include one unit resonator 40X. The third conductor 40 can include a plurality of unit resonators 40X. The unit resonator 40X is positioned in such a manner as to overlap the fourth conductor 50 in the z direction. The unit resonator 40X faces the fourth conductor 50. The unit resonator 40X can function as a frequency selective surface (FSS). The plurality of unit resonators 40X are arranged along the xy plane. The plurality of unit resonators 40X can be regularly arranged in the xy plane. The unit resonators 40X can be arranged in a square grid, an oblique grid, a rectangular grid, or a hexagonal grid.

The third conductor 40 can include a plurality of conductive layers arranged in the z direction. Each of the plurality of conductive layers of the third conductor 40 includes parts equivalent to at least one unit resonator. For example, the third conductor 40 includes a first conductive layer 41 and a second conductive layer 42.

The first conductive layer 41 includes parts equivalent to at least one first unit resonator 41X. The first conductive layer 41 can include one first unit resonator 41X. The first conductive layer 41 can include a plurality of first divisional resonators 41Y subdivided from one first unit resonator 41X. The plurality of first divisional resonators 41Y can become at least one first unit resonator 41X by an adjacent unit structure 10X. The plurality of first divisional resonators 41Y are positioned at end portions of the first conductive layer 41. The first unit resonator 41X and the first divisional resonator 41Y can be referred to as the third conductor 40.

The second conductive layer 42 includes parts equivalent to at least one second unit resonator 42X. The second conductive layer 42 can include one second unit resonator 42X. The second conductive layer 42 can include a plurality of second divisional resonators 42Y subdivided from one second unit resonator 42X. The plurality of second divisional resonators 42Y can become at least one second unit resonator 42X by an adjacent unit structure 10X. The plurality of second divisional resonators 42Y are positioned at end portions of the second conductive layer 42. The second unit resonator 42X and the second divisional resonator 42Y can be referred to as the third conductor 40.

At least a portion of the second unit resonator 42X and the second divisional resonator 42Y is positioned in such a manner as to overlap the first unit resonator 41X and the first divisional resonator 41Y in the z direction. In the third conductor 40, at least portions of the unit resonator and the divisional resonator of each layer overlap with each other in the z direction and form one unit resonator 40X. The unit resonator 40X includes parts equivalent to at least one unit resonator in each layer.

In a case where the first unit resonator 41X is a line-type resonator or a patch-type resonator, the first conductive layer 41 includes at least one first unit conductor 411. The first unit conductor 411 can function as the first unit resonator 41X or the first divisional resonator 41Y. The first conductive layer 41 includes a plurality of first unit conductors 411 arranged in n rows and m columns in the x direction and the y direction. n and m are natural numbers of 1 or more, which are independent of each other. In the example illustrated in FIGS. 1 to 9 and the like, the first conductive layer 41 includes six first unit conductors 411 arranged in a grid pattern of two rows and three columns. The first unit conductors 411 can be arranged in a square grid, an oblique grid, a rectangular grid, or a hexagonal grid. The first unit conductor 411 corresponding to the first divisional resonator 41Y is positioned at an end portion of the first conductive layer 41 in the xy plane.

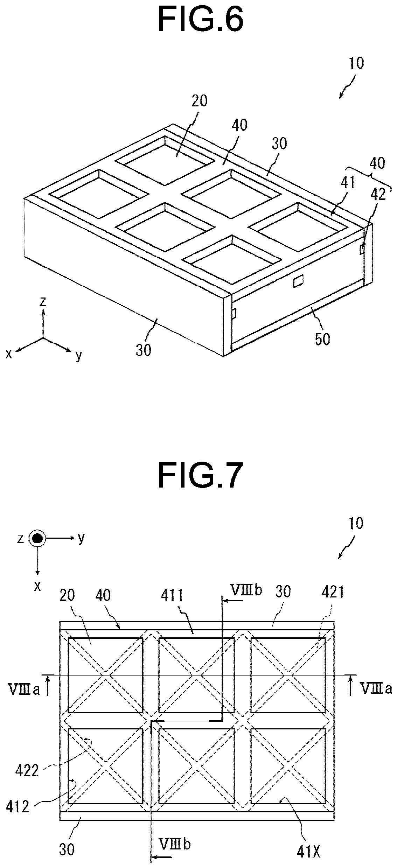

In a case where the first unit resonator 41X is a slot-type resonator, as the first conductive layer 41, at least one conductive layer extends in the x direction and the y direction. The first conductive layer 41 includes at least one first unit slot 412. The first unit slot 412 can function as the first unit resonator 41X or the first divisional resonator 41Y. The first conductive layer 41 can include a plurality of first unit slots 412 arranged in n rows and m columns in the x direction and the y direction. n and m are natural numbers of 1 or more, which are independent of each other. In the example illustrated in FIGS. 6 to 9 and the like, the first conductive layer 41 includes six first unit slots 412 arranged in a grid pattern of two rows and three columns. The first unit slots 412 can be arranged in a square grid, an oblique grid, a rectangular grid, or a hexagonal grid. The first unit slot 412 corresponding to the first divisional resonator 41Y is positioned at an end portion of the first conductive layer 41 in the xy plane.

In a case where the second unit resonator 42X is a line-type resonator or a patch-type resonator, the second conductive layer 42 includes at least one second unit conductor 421. The second conductive layer 42 can include a plurality of second unit conductors 421 arranged in the x direction and the y direction. The second unit conductors 421 can be arranged in a square grid, an oblique grid, a rectangular grid, or a hexagonal grid. The second unit conductor 421 can function as the second unit resonator 42X or the second divisional resonator 42Y. The second unit conductor 421 corresponding to the second divisional resonator 42Y is positioned at an end portion of the second conductive layer 42 in the xy plane.

At least a portion of the second unit conductor 421 overlaps at least one of the first unit resonator 41X or the first divisional resonator 41Y in the z direction. The second unit conductor 421 can overlap the plurality of first unit resonators 41X. The second unit conductor 421 can overlap the plurality of first divisional resonators 41Y. The second unit conductor 421 can overlap one first unit resonator 41X and four first divisional resonators 41Y. The second unit conductor 421 can overlap only one first unit resonator 41X. The center of gravity of the second unit conductor 421 can overlap one first unit conductor 411. The center of gravity of the second unit conductor 421 can be positioned between the plurality of first unit conductors 411 and the first divisional resonator 41Y. The center of gravity of the second unit conductor 421 can be positioned between two first unit resonators 41X arranged in the x direction or the y direction.

At least a portion of the second unit conductor 421 can overlap two first unit conductors 411. The second unit conductor 421 can overlap only one first unit conductor 411. The center of gravity of the second unit conductor 421 can be positioned between two first unit conductors 411. The center of gravity of the second unit conductor 421 can overlap one first unit conductor 411. At least a portion of the second unit conductor 421 can overlap the first unit slot 412. The second unit conductor 421 can overlap only one first unit slot 412. The center of gravity of the second unit conductor 421 can be positioned between two first unit slots 412 arranged in the x direction or the y direction. The center of gravity of the second unit conductor 421 can overlap one first unit slot 412.

In a case where the second unit resonator 42X is a slot-type resonator, as the second conductive layer 42, at least one conductive layer extends along the xy plane. The second conductive layer 42 includes at least one second unit slot 422. The second unit slot 422 can function as the second unit resonator 42X or the second divisional resonator 42Y. The second conductive layer 42 can include a plurality of second unit slots 422 arranged in the xy plane. The second unit slots 422 can be arranged in a square grid, an oblique grid, a rectangular grid, or a hexagonal grid. The second unit slot 422 corresponding to the second divisional resonator 42Y is positioned at an end portion of the second conductive layer 42 in the xy plane.

At least a portion of the second unit slot 422 overlaps at least one of the first unit resonator 41X or the first divisional resonator 41Y in the y direction. The second unit slot 422 can overlap the plurality of first unit resonators 41X. The second unit slot 422 can overlap the plurality of first divisional resonators 41Y. The second unit slot 422 can overlap one first unit resonator 41X and four first divisional resonators 41Y. The second unit slot 422 can overlap only one first unit resonator 41X. The center of gravity of the second unit slot 422 can overlap one first unit conductor 411. The center of gravity of the second unit slot 422 can be positioned between the plurality of first unit conductors 411. The center of gravity of the second unit slot 422 can be positioned between one first unit resonator 41X and one first divisional resonator 41Y arranged in the x direction or the y direction.

At least a portion of the second unit slot 422 can overlap two first unit conductors 411. The second unit slot 422 can overlap only one first unit conductor 411. The center of gravity of the second unit slot 422 can be positioned between two first unit conductors 411. The center of gravity of the second unit slot 422 can overlap one first unit conductor 411. At least a portion of the second unit slot 422 can overlap the first unit slot 412. The second unit slot 422 can overlap only one first unit slot 412. The center of gravity of the second unit slot 422 can be positioned between two first unit slots 412 arranged in the x direction or the y direction. The center of the second unit slot 422 can overlap one first unit slot 412.

The unit resonator 40X includes parts equivalent to at least one first unit resonator 41X and parts equivalent to at least one second unit resonator 42X. The unit resonator 40X can include one first unit resonator 41X. The unit resonator 40X can include a plurality of first unit resonators 41X. The unit resonator 40X can include one first divisional resonator 41Y. The unit resonator 40X can include a plurality of first divisional resonators 41Y. The unit resonator 40X can include a portion of the first unit resonator 41X. The unit resonator 40X can include one or more partial first unit resonators 41X. The unit resonator 40X includes a plurality of partial resonators of one or more partial first unit resonators 41X and one or more first divisional resonators 41Y. The plurality of partial resonators included in the unit resonator 40X are combined into at least one first unit resonator 41X. The unit resonator 40X can include a plurality of first divisional resonators 41Y without including the first unit resonator 41X. The unit resonator 40X can include, for example, four first divisional resonators 41Y. The unit resonator 40X can include only a plurality of partial first unit resonators 41X. The unit resonator 40X can include one or more partial first unit resonators 41X and one or more first divisional resonators 41Y. The unit resonator 40X can include, for example, two partial first unit resonators 41X and two first divisional resonators 41Y. The unit resonator 40X can have substantially the same mirror image of the included first conductive layer 41 at opposite ends of the unit resonator 40X in the x direction. In the unit resonator 40X, the included first conductive layer 41 can be substantially symmetrical with respect to the center line extending in the z direction.

The unit resonator 40X can include one second unit resonator 42X. The unit resonator 40X can include a plurality of second unit resonators 42X. The unit resonator 40X can include one second divisional resonator 42Y. The unit resonator 40X can include a plurality of second divisional resonators 42Y. The unit resonator 40X can include a portion of the second unit resonator 42X. The unit resonator 40X can include one or more partial second unit resonators 42X. The unit resonator 40X includes a plurality of partial resonators of one or more partial second unit resonators 42X and one or more second divisional resonators 42Y. The plurality of partial resonators included in the unit resonator 40X are combined into at least one second unit resonator 42X. The unit resonator 40X can include a plurality of second divisional resonators 42Y without including the second unit resonator 42X. The unit resonator 40X can include, for example, four second divisional resonators 42Y. The unit resonator 40X can include only a plurality of partial second unit resonators 42X. The unit resonator 40X can include one or more partial second unit resonators 42X and one or more second divisional resonators 42Y. The unit resonator 40X can include, for example, two partial second unit resonators 42X and two second divisional resonators 42Y. The unit resonator 40X can have substantially the same mirror image of the included second conductive layer 42 at opposite ends of the unit resonator 40X in the x direction. In the unit resonator 40X, the included second conductive layer 42 can be substantially symmetrical with respect to the center line extending in the y direction.

In one example of embodiments, the unit resonator 40X includes one first unit resonator 41X and a plurality of partial second unit resonators 42X. For example, the unit resonator 40X includes one first unit resonator 41X and half of four second unit resonators 42X. The unit resonator 40X includes parts equivalent to one first unit resonator 41X and parts equivalent to two second unit resonators 42X. Components included in the unit resonator 40X are not limited to this example.

The resonator 10 can include at least one unit structure 10X. The resonator 10 can include a plurality of unit structures 10X. The plurality of unit structures 10X can be arranged in the xy plane. The plurality of unit structures 10X can be arranged in a square grid, an oblique grid, a rectangular grid, or a hexagonal grid. The unit structure 10X includes a repeating unit of any one of a square grid, an oblique grid, a rectangular grid, or a hexagonal grid. The unit structures 10X can function as artificial magnetic conductors (AMC) when arranged infinitely in the xy plane.

The unit structure 10X can include at least a portion of the base 20, at least a portion of the third conductor 40, and at least a portion of the fourth conductor 50. Portions of the base 20, the third conductor 40, and the fourth conductor 50 included in the unit structure 10X overlap in the z direction. The unit structure 10X includes the unit resonator 40X, a portion of the base 20 that overlaps the unit resonator 40X in the z direction, and the fourth conductor 50 that overlaps the unit resonator 40X in the z direction. The resonator 10 can include, for example, six unit structures 10X arranged in two rows and three columns.

The resonator 10 can include at least one unit structure 10X between two pair conductors 30 facing each other in the x direction. The two pair conductors 30 can be seen as electric conductors extending in the yz plane for the unit structure 10X. Ends of the unit structure 10X in the y direction is opened. In the unit structure 10X, zx planes at the opposite ends in the y direction are in a high impedance state. In the unit structure 10X, the zx planes at the opposite ends in the y direction can be seen as magnetic conductors. The unit structures 10X may have a line symmetry with respect to the z direction when repeatedly arranged. Since the unit structure 10X is surrounded by two electric conductors and two high impedance surfaces (magnetic conductors), the unit structure 10X has an artificial magnetic conductor character in the z direction. Since the unit structure 10X is surrounded by two electric conductors and two high impedance surfaces (magnetic conductors), the unit structure 10X has the artificial magnetic conductor character with a finite value.

The operating frequency of the resonator 10 can be different from the operating frequency of the first unit resonator 41X. The operating frequency of the resonator 10 can be different from the operating frequency of the second unit resonator 42X. The operating frequency of the resonator 10 can be changed by the coupling of the first unit resonator 41X and the second unit resonator 42X that form the unit resonator 40X, or the like.

The third conductor 40 can include the first conductive layer 41 and the second conductive layer 42. The first conductive layer 41 includes at least one first unit conductor 411. The first unit conductor 411 includes a first connecting conductor 413 and a first floating conductor 414. The first connecting conductor 413 is connected to any one of the pair conductors 30. The first floating conductor 414 is not connected to the pair conductors 30. The second conductive layer 42 includes at least one second unit conductor 421. The second unit conductor 421 includes a second connecting conductor 423 and a second floating conductor 424. The second connecting conductor 423 is connected to any one of the pair conductors 30. The second floating conductor 424 is not connected to the pair conductors 30. The third conductor 40 can include the first unit conductor 411 and the second unit conductor 421.

The first connecting conductor 413 can have a length larger than that of the first floating conductor 414 in the x direction. The first connecting conductor 413 can have a length smaller than that of the first floating conductor 414 in the x direction. The first connecting conductor 413 can have a length that is half that of the first floating conductor 414 in the x direction. The second connecting conductor 423 can have a length larger than that of the second floating conductor 424 in the x direction. The second connecting conductor 423 can have a length smaller than that of the second floating conductor 424 in the x direction. The second connecting conductor 423 can have a length that is half that of the second floating conductor 424 in the x direction.

The third conductor 40 can include a current path 401 that serves as a current path between the first conductor 31 and the second conductor 32 when the resonator 10 resonates. The current path 401 can be connected to the first conductor 31 and the second conductor 32. The current path 401 has a capacitance between the first conductor 31 and the second conductor 32. The capacitance of the current path 401 is electrically connected in series between the first conductor 31 and the second conductor 32. In the current path 401, a conductor is positioned between the first conductor 31 and the second conductor 32 while being in a separated state. The current path 401 can include an electrical conductive body connected to the first conductor 31 and a conductor connected to the second conductor 32.

In embodiments, in the current path 401, the first unit conductor 411 and the second unit conductor 421 partially face each other in the z direction. In the current path 401, the first unit conductor 411 and the second unit conductor 421 are capacitively coupled to each other. The first unit conductor 411 includes a capacitive component at an end portion in the x direction. The first unit conductor 411 can include a capacitive component at an end portion in the y direction that faces the second unit conductor 421 in the z direction. The first unit conductor 411 can include capacitive components at an end portion in the x direction that faces the second unit conductor 421 in the z direction and at an end portion in the y direction. The second unit conductor 421 includes a capacitive component at an end portion in the x direction. The second unit conductor 421 can include a capacitive component at an end portion in the y direction that faces the first unit conductor 411 in the z direction. The second unit conductor 421 can include capacitive components at an end portion in the x direction that faces the first unit conductor 411 in the z direction and at an end portion in the y direction.

The resonator 10 can reduce the resonant frequency by increasing the capacitive coupling in the current path 401. When realizing a desired operating frequency, the resonator 10 can reduce the length in the x direction by increasing the capacitive coupling in the current path 401. In the third conductor 40, the first unit conductor 411 and the second unit conductor 421 face each other in a stacking direction of the base 20 and are capacitively coupled to each other. In the third conductor 40, the capacitance between the first unit conductor 411 and the second unit conductor 421 can be adjusted by a surface integral of an area by which the first unit conductor 411 and the second unit conductor 421 face each other.

In embodiments, the length of the first unit conductor 411 in the y direction is different from the length of the second unit conductor 421 in the y direction. When the relative positions of the first unit conductor 411 and the second unit conductor 421 are deviated from ideal positions in the xy plane, in the resonator 10, a change in magnitude of the capacitance can be reduced due to a difference in length in a third direction between the first unit conductor 411 and the second unit conductor 421.

In embodiments, the current path 401 includes one conductor that is spatially separated from the first conductor 31 and the second conductor 32 and is capacitively coupled to the first conductor 31 and the second conductor 32.

In embodiments, the current path 401 includes the first conductive layer 41 and the second conductive layer 42. The current path 401 includes at least one first unit conductor 411 and at least one second unit conductor 421. The current path 401 includes two first connecting conductors 413, two second connecting conductors 423, and one first connecting conductor 413 or one second connecting conductor 423. In the current path 401, the first unit conductor 411 and the second unit conductor 421 can be arranged alternately along the first axis.

In embodiments, the current path 401 includes the first connecting conductor 413 and the second connecting conductor 423. The current path 401 includes at least one first connecting conductor 413 and at least one second connecting conductor 423. In the current path 401, the third conductor 40 has a capacitance between the first connecting conductor 413 and the second connecting conductor 423. In one example of embodiments, the first connecting conductor 413 can face the second connecting conductor 423 and have a capacitance. In one example of embodiments, the first connecting conductor 413 can be capacitively connected to the second connecting conductor 423 via another conductor.

In embodiments, the current path 401 includes the first connecting conductor 413 and the second floating conductor 424. The current path 401 includes two first connecting conductors 413. In the current path 401, the third conductor 40 has a capacitance between two first connecting conductors 413. In one example of embodiments, two first connecting conductors 413 can be capacitively connected to each other via at least one second floating conductor 424. In one example of embodiments, two first connecting conductors 413 can be capacitively connected to each other via at least one first floating conductor 414 and a plurality of second floating conductors 424.

In embodiments, the current path 401 includes the first floating conductor 414 and the second connecting conductor 423. The current path 401 includes two second connecting conductors 423. In the current path 401, the third conductor 40 has a capacitance between two second connecting conductors 423. In one example of embodiments, two second connecting conductors 423 can be capacitively connected to each other via at least one first floating conductor 414. In one example of embodiments, two second connecting conductors 423 can be capacitively connected to each other via a plurality of first floating conductors 414 and at least one second floating conductor 424.

In embodiments, the first connecting conductor 413 and the second connecting conductor 423 can each have a length corresponding to 1/4 of the wavelength λ at the resonant frequency. The first connecting conductor 413 and the second connecting conductor 423 can each function as a resonator having a length corresponding to a half of the wavelength λ. The first connecting conductor 413 and the second connecting conductor 423 can each oscillate in an odd mode and an even mode due to capacitive coupling of the respective resonators. The resonator 10 can use, as the operating frequency, a resonant frequency in the even mode after the capacitive coupling.

The current path 401 can be connected to the first conductor 31 at a plurality of points. The current path 401 can be connected to the second conductor 32 at a plurality of points. The current path 401 can include a plurality of conductive paths that independently conduct electricity from the first conductor 31 to the second conductor 32.

In the second floating conductor 424 that is capacitively coupled to the first connecting conductor 413, a distance between an end of the second floating conductor 424 on the side where the capacitive coupling is made and the first connecting conductor 413 is smaller than a distance between the end of the second floating conductor 424 and the pair conductors 30. In the first floating conductor 414 that is capacitively coupled to the second connecting conductor 423, a distance between an end of the first floating conductor 414 on the side where the capacitive coupling is made and the second connecting conductor 423 is smaller than a distance between the end of the first floating conductor 414 and the pair conductors 30.

In the resonators 10 of embodiments, each conductive layer of the third conductor 40 can have a different length in the y direction. The conductive layer of the third conductor 40 is capacitively coupled to another conductive layer in the z direction. When each conductive layer of the resonator 10 has a different length in the y direction, a change in capacitance is reduced even in a case where the conductive layer is displaced in the y direction. Since each conductive layer of the resonator 10 has a different length in the y direction, it is possible to widen an allowable range of the displacement of the conductive layer in the y direction.

In the resonators 10 of embodiments, the third conductor 40 has a capacitance due to capacitive coupling between the conductive layers. A plurality of capacitive portions having the capacitance can be arranged in the y direction. The plurality of capacitive portions arranged in the y direction can have an electromagnetically parallel relationship. As the resonator 10 has a plurality of capacitive portions that are arranged in electrically parallel with each other, individual capacitive errors can be mutually complemented.

When the resonator 10 is in a resonance state, a current flowing through the pair conductors 30, the third conductor 40, and the fourth conductor 50 loops. When the resonator 10 is in a resonance state, an alternating current flows through the resonator 10. In the resonator 10, the current flowing through the third conductor 40 is a first current, and the current flowing through the fourth conductor 50 is a second current. When the resonator 10 is in a resonance state, the first current flows toward a side different from that of the second current in the x direction. For example, when the first current flows in the +x direction, the second current flows in the -x direction. For example, when the first current flows in the -x direction, the second current flows in the +x direction. That is, when the resonator 10 is in a resonance state, a loop current alternately flows in the +x direction and the -x direction. The resonator 10 radiates electromagnetic waves by repeating reversal of a loop current that forms a magnetic field.

In embodiments, the third conductor 40 includes the first conductive layer 41 and the second conductive layer 42. Since the first conductive layer 41 and the second conductive layer 42 are capacitively coupled to each other in the third conductor 40, it seems that a current flows over a large area in one direction in a resonance state. In embodiments, a current flowing through each conductor has a high density at an end portion in the y direction.

In the resonator 10, the first current and the second current loop through the pair conductors 30. In the resonator 10, the first conductor 31, the second conductor 32, the third conductor 40, and the fourth conductor 50 form a resonant circuit. The resonant frequency of the resonator 10 is the resonant frequency of the unit resonator. In a case where the resonator 10 includes one unit resonator, or in a case where the resonator 10 includes a portion of the unit resonator, the resonant frequency of the resonator 10 is changed by electromagnetic coupling with the base 20, the pair conductors 30, the third conductor 40, the fourth conductor 50, and the periphery of the resonator 10. For example, when the third conductor 40 has a poor periodicity, the entire resonator 10 forms one unit resonator or a portion of one unit resonator. For example, the resonant frequency of the resonator 10 is changed depending on the lengths of the first conductor 31 and the second conductor 32 in the z direction, the lengths of the third conductor 40 and the fourth conductor 50 in the x direction, the capacitances of the third conductor 40 and the fourth conductor 50. For example, in the resonator 10 in which the capacitance between the first unit conductor 411 and the second unit conductor 421 is large, the lengths of the first conductor 31 and the second conductor 32 in the z direction, and the lengths of the third conductor 40 and the fourth conductor 50 in the x direction can be reduced while reducing the resonant frequency.

In embodiments, in the resonator 10, the first conductive layer 41 serves as an effective radiation surface for electromagnetic waves in the z direction. In embodiments, in the resonator 10, the first surface integral of the first conductive layer 41 is larger than the first surface integral of another conductive layer. The resonator 10 can increase the radiation of electromagnetic waves by increasing the first surface integral of the first conductive layer 41.

In embodiments, in the resonator 10, the first conductive layer 41 serves as an effective radiation surface for electromagnetic waves in the z direction. The resonator 10 can increase the radiation of electromagnetic waves by increasing the first surface integral of the first conductive layer 41. In addition, the resonant frequency of the resonator 10 is not changed even in a case where the resonator includes a plurality of unit resonators. By utilizing this characteristic, the resonator 10 can easily increase the first surface integral of the first conductive layer 41 as compared with a case where one unit resonator resonates.

In embodiments, the resonator 10 can include one or more impedance elements 45. The impedance element 45 has an impedance value between a plurality of terminals. The impedance element 45 changes the resonant frequency of the resonator 10. The impedance element 45 can include a resistor, a capacitor, and an inductor. The impedance element 45 can include a variable element whose impedance value can be changed. The variable element can change the impedance value according to an electric signal. The variable element can change the impedance value by a physical mechanism.

The impedance element 45 can be connected to two unit conductors of the third conductor 40 that are arranged in the x direction. The impedance element 45 can be connected to two first unit conductors 411 arranged in the x direction. The impedance element 45 can be connected to the first connecting conductor 413 and the first floating conductor 414 arranged in the x direction. The impedance element 45 can be connected to the first conductor 31 and the first floating conductor 414. The impedance element 45 is connected to the unit conductor of the third conductor 40 at a central portion in the y direction. The impedance element 45 is connected to a central portion of each of two first unit conductors 411 in the y direction.

The impedance element 45 is electrically connected in series between two conductors arranged in the x direction in the xy plane. The impedance element 45 can be electrically connected in series between two first unit conductors 411 arranged in the x direction. The impedance element 45 can be electrically connected in series between the first connecting conductor 413 and the first floating conductor 414 arranged in the x direction. The impedance element 45 can be electrically connected in series between the first conductor 31 and the first floating conductor 414.

The impedance element 45 can be electrically connected in parallel with the first unit conductors 411 and the second unit conductor 421 that overlap each other in the z direction and have a capacitance. The impedance element 45 can be electrically connected in parallel with the second connecting conductor 423 and the first floating conductor 414 that overlap each other in the z direction and have a capacitance.

The resonator 10 can reduce the resonant frequency by adding a capacitor as the impedance element 45. The resonator 10 can increase the resonant frequency by adding an inductor as the impedance element 45. The resonator 10 can include impedance elements 45 with different impedance values. The resonator 10 can include capacitors with different electric capacities as the impedance elements 45. The resonator 10 can include inductors with different inductances as the impedance elements 45. In the resonator 10, an adjustment range of the resonant frequency is increased by adding impedance elements 45 with different impedance values. The resonator 10 can include both a capacitor and an inductor as the impedance elements 45. In the resonator 10, the adjustment range of the resonant frequency is increased by adding both a capacitor and an inductor as the impedance elements 45. As the resonator 10 includes the impedance element 45, the entire resonator 10 can form one unit resonator, or a portion of one unit resonator.

In embodiments, the resonator 10 can include one or more conductive components 46. The conductive component 46 is a functional component including a conductor therein. The functional component can be a processor, a memory, or a sensor. The conductive component 46 is aligned with the resonator 10 in the y direction. In the conductive component 46, a ground terminal can be electrically connected to the fourth conductor 50. The conductive component 46 is not limited to the configuration in which the ground terminal is electrically connected to the fourth conductor 50, and can be electrically independent of the resonator 10. As the conductive component 46 is adjacent to the resonator 10 in the y direction, the resonant frequency of the resonator 10 is increased. As a plurality of conductive components 46 are adjacent to the resonator 10 in the y direction, the resonant frequency of the resonator 10 is further increased. The resonant frequency of the resonator 10 is increased in accordance with an increase in length of the conductive component 46 in the z direction. When the length of the conductive component 46 in the z direction becomes larger than that of the resonator 10, a change amount of the resonant frequency per increment of a unit length is reduced.

In embodiments, the resonator 10 can include one or more dielectric components 47. The dielectric component 47 faces the third conductor 40 in the z direction. The dielectric component 47 is an object of which at least a part of a portion facing the third conductor 40 does not include an electrical conductive body and has a dielectric constant greater than that of air. As the dielectric components 47 face each other in the z direction, the resonant frequency of the resonator 10 is reduced. The resonant frequency of the resonator 10 is reduced in accordance with a decrease in distance from the dielectric component 47 in the z direction. The resonant frequency of the resonator 10 is reduced in accordance with an increase in surface integral of an area by which the third conductor 40 and the dielectric component 47 face each other.

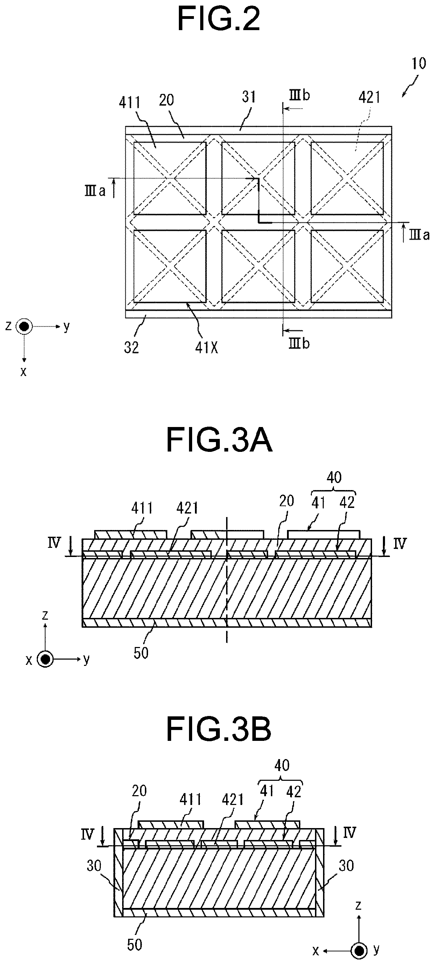

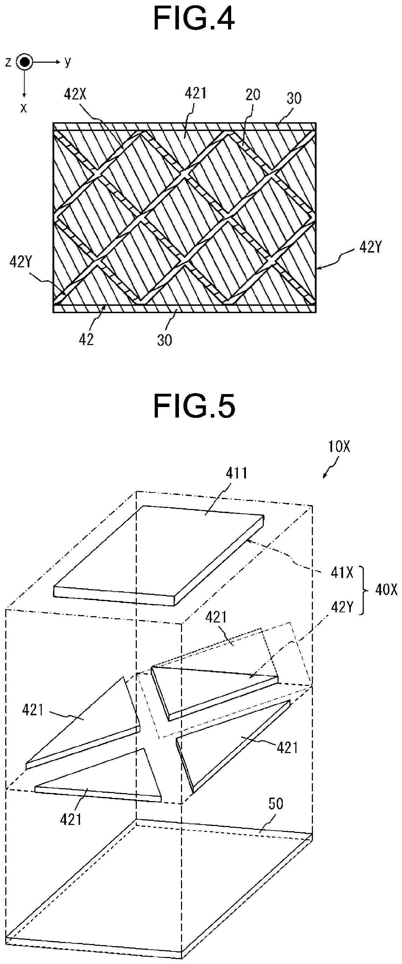

FIGS. 1 to 5 are views each illustrating the resonator 10 as an example of embodiments. FIG. 1 is a schematic view of the resonator 10. FIG. 2 is a plan view illustrating the xy plane viewed from the z direction. FIG. 3A is a cross-sectional view taken along line IIIa-IIIa illustrated in FIG. 2. FIG. 3B is a cross-sectional view taken along line IIIb-IIIb illustrated in FIG. 2. FIG. 4 is a cross-sectional view taken along line IV-IV illustrated in FIGS. 3A and 3B. FIG. 5 is a conceptual view illustrating the unit structure 10X as an example of embodiments.

In the resonator 10 illustrated in FIGS. 1 to 5, the first conductive layer 41 includes a patch-type resonator as the first unit resonator 41X. The second conductive layer 42 includes a patch-type resonator as the second unit resonator 42X. The unit resonator 40X includes one first unit resonator 41X and four second divisional resonators 42Y. The unit structure 10X includes the unit resonator 40X, and a portion of the base 20 and a portion of the fourth conductor 50 that overlap the unit resonator 40X in the z direction.

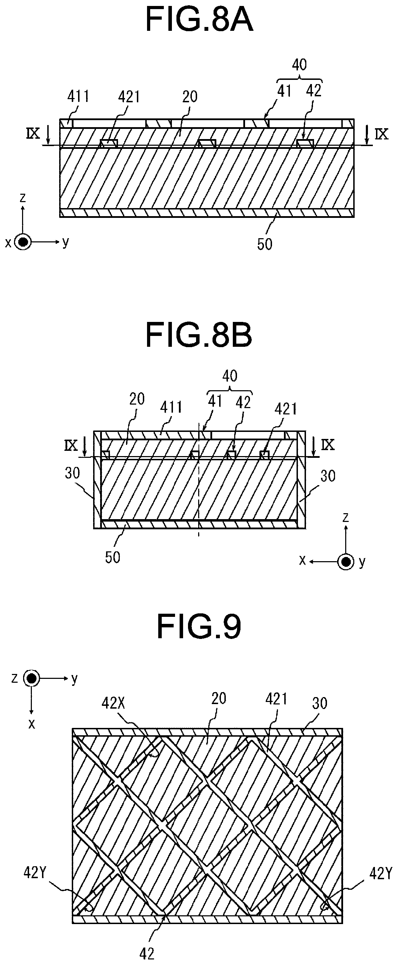

FIGS. 6 to 9 are views each illustrating the resonator 10 as an example of embodiments. FIG. 6 is a schematic view of the resonator 10. FIG. 7 is a plan view illustrating the xy plane viewed from the z direction. FIG. 8A is a cross-sectional view taken along line VIIIa-VIIIa illustrated in FIG. 7. FIG. 8B is a cross-sectional view taken along line VIIIb-VIIIb illustrated in FIG. 7. FIG. 9 is a cross-sectional view taken along line IX-IX illustrated in FIGS. 8A and 8B.

In the resonator 10 illustrated in FIGS. 6 to 9, the first conductive layer 41 includes a slot-type resonator as the first unit resonator 41X. The second conductive layer 42 includes a slot-type resonator as the second unit resonator 42X. The unit resonator 40X includes one first unit resonator 41X and four second divisional resonators 42Y. The unit structure 10X includes the unit resonator 40X, and a portion of the base 20 and a portion of the fourth conductor 50 that overlap the unit resonator 40X in the z direction.

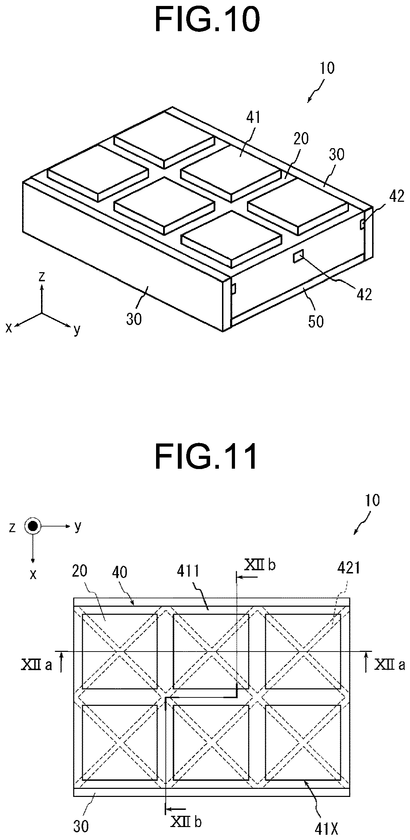

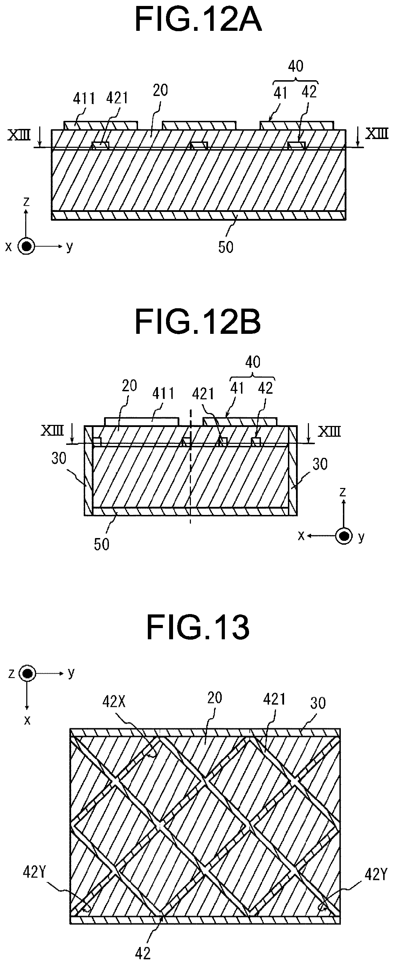

FIGS. 10 to 13 are views each illustrating the resonator 10 as an example of embodiments. FIG. 10 is a schematic view of the resonator 10. FIG. 11 is a plan view illustrating the xy plane viewed from the z direction. FIG. 12A is a cross-sectional view taken along line XIIa-XIIa illustrated in FIG. 11. FIG. 12B is a cross-sectional view taken along line XIIb-XIIb illustrated in FIG. 11. FIG. 13 is a cross-sectional view taken along line XIII-XIII illustrated in FIGS. 12A and 12B.

In the resonator 10 illustrated in FIGS. 10 to 13, the first conductive layer 41 includes a patch-type resonator as the first unit resonator 41X. The second conductive layer 42 includes a slot-type resonator as the second unit resonator 42X. The unit resonator 40X includes one first unit resonator 41X and four second divisional resonators 42Y. The unit structure 10X includes the unit resonator 40X, and a portion of the base 20 and a portion of the fourth conductor 50 that overlap the unit resonator 40X in the z direction.

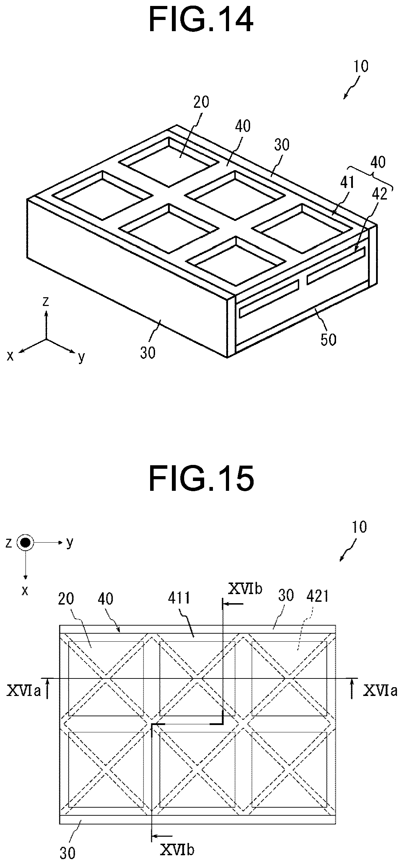

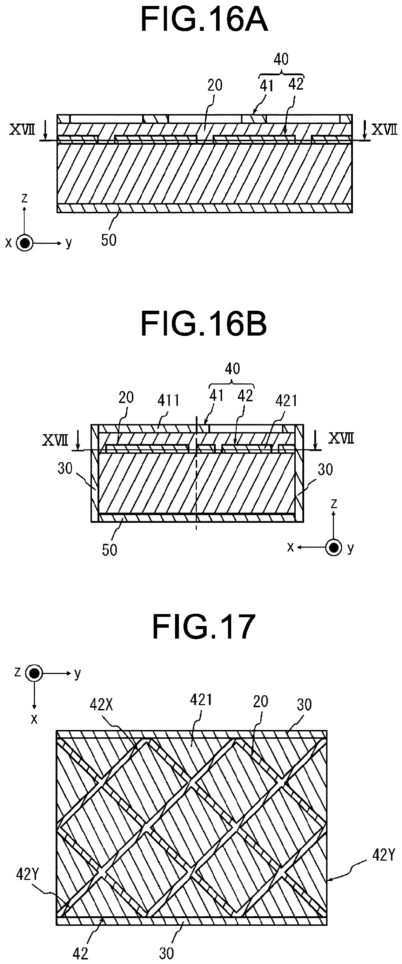

FIGS. 14 to 17 are views each illustrating the resonator 10 as an example of embodiments. FIG. 14 is a schematic view of the resonator 10. FIG. 15 is a plan view illustrating the xy plane viewed from the z direction. FIG. 16A is a cross-sectional view taken along line XVIa-XVIa illustrated in FIG. 15. FIG. 16B is a cross-sectional view taken along line XVIb-XVIb illustrated in FIG. 15. FIG. 17 is a cross-sectional view taken along line XVII-XVII illustrated in FIGS. 16A and 16B.

In the resonator 10 illustrated in FIGS. 14 to 17, the first conductive layer 41 includes a slot-type resonator as the first unit resonator 41X. The second conductive layer 42 includes a patch-type resonator as the second unit resonator 42X. The unit resonator 40X includes one first unit resonator 41X and four second divisional resonators 42Y. The unit structure 10X includes the unit resonator 40X, and a portion of the base 20 and a portion of the fourth conductor 50 that overlap the unit resonator 40X in the z direction.

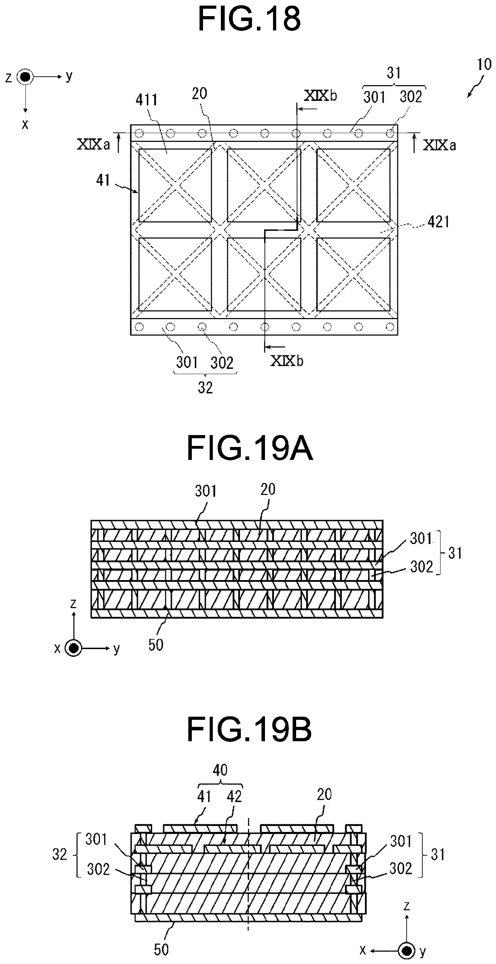

The resonator 10 illustrated in each of FIGS. 1 to 17 is an example. The configuration of the resonator 10 is not limited to the structures illustrated in FIGS. 1 to 17. FIG. 18 is a view illustrating the resonator 10 including pair conductors 30 having another configuration. FIG. 19A is a cross-sectional view taken along line XIXa-XIXa illustrated in FIG. 18. FIG. 19B is a cross-sectional view taken along line XIXb-XIXb illustrated in FIG. 18.

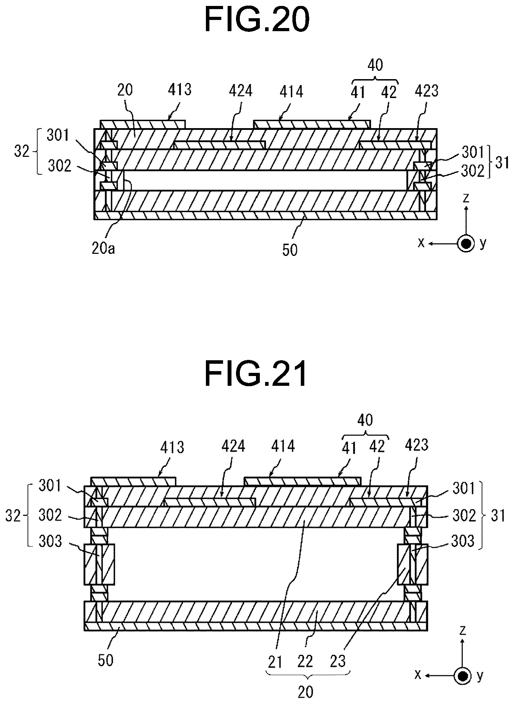

The base 20 illustrated in each of FIGS. 1 to 19B is an example. The configuration of the base 20 is not limited to the configurations illustrated in FIGS. 1 to 19B. The base 20 can have a cavity 20a therein, as illustrated in FIG. 20. The cavity 20a is positioned between the third conductor 40 and the fourth conductor 50 in the z direction. The dielectric constant in the cavity 20a is lower than that of the base 20. Since the base 20 has the cavity 20a, an electromagnetic distance between the third conductor 40 and the fourth conductor 50 can be shortened.

The base 20 can include a plurality of members, as illustrated in FIG. 21. The base 20 can include a first base 21, a second base 22, and a connector 23. The first base 21 and the second base 22 can be mechanically connected via the connector 23. The connector 23 can include a sixth conductor 303 therein. The sixth conductor 303 is electrically connected to the fifth conductive layer 301 or the fifth conductor 302. The sixth conductor 303 forms the first conductor 31 or the second conductor 32, in combination with the fifth conductive layer 301 and the fifth conductor 302.

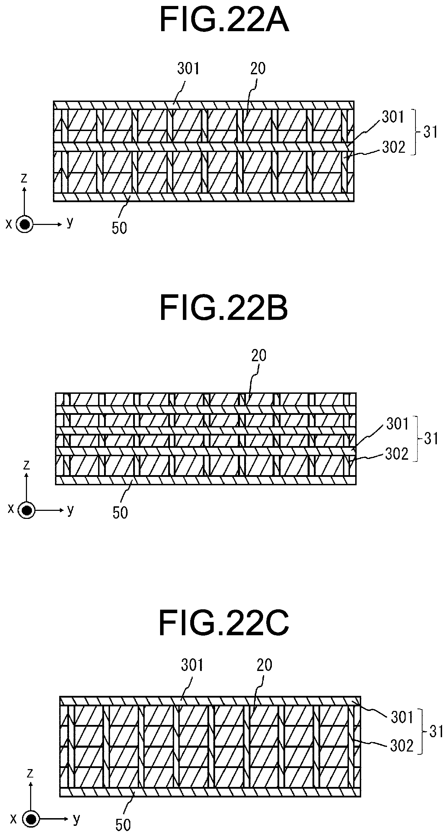

The pair conductors 30 illustrated in each of FIGS. 1 to 21 is an example. The configuration of the pair conductors 30 is not limited to the configurations illustrated in FIGS. 1 to 21. FIGS. 22A to 28 are views illustrating the resonator 10 including pair conductors 30 having another configuration. FIGS. 22A to 22C are cross-sectional views corresponding to FIG. 19A. As illustrated in FIG. 22A, the number of fifth conductive layers 301 can be changed as appropriate. As illustrated in FIG. 22B, the fifth conductive layer 301 does not have to be positioned on the base 20. As illustrated in FIG. 22C, the fifth conductive layer 301 does not have to be positioned inside the base 20.

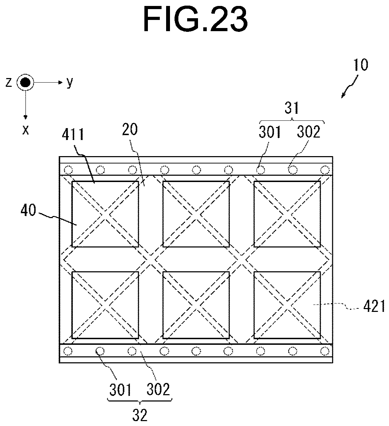

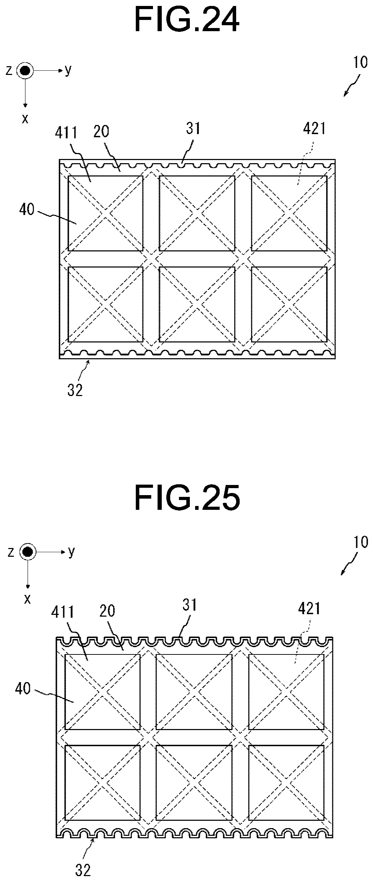

FIG. 23 is a plan view corresponding to FIG. 18. As illustrated in FIG. 23, in the resonator 10, the fifth conductor 302 can be separate from the boundary of the unit resonator 40X. FIG. 24 is a plan view corresponding to FIG. 18. As illustrated in FIG. 24, each of two pair conductors 30 can have a protruding portion that protrudes toward the other pair conductor 30 that is paired therewith. Such a resonator 10 can be formed, for example, by applying a metal paste to the base 20 having recessed portions and hardening the metal paste. In the example illustrated in FIGS. 18 to 23, the recessed portion has a circular shape. The shape of the recessed portion is not limited to a circular shape, and may be a polygon with rounded corners or an ellipse.

FIG. 25 is a plan view corresponding to FIG. 18. As illustrated in FIG. 25, the base 20 can have recessed portions. As illustrated in FIG. 25, the pair conductors 30 each have recessed portions that are recessed inward from an outer surface in the x direction. As illustrated in FIG. 25, the pair conductors 30 each extend along a surface of the base 20. Such a resonator 10 can be formed, for example, by spraying a fine metal material on the base 20 having recessed portions.

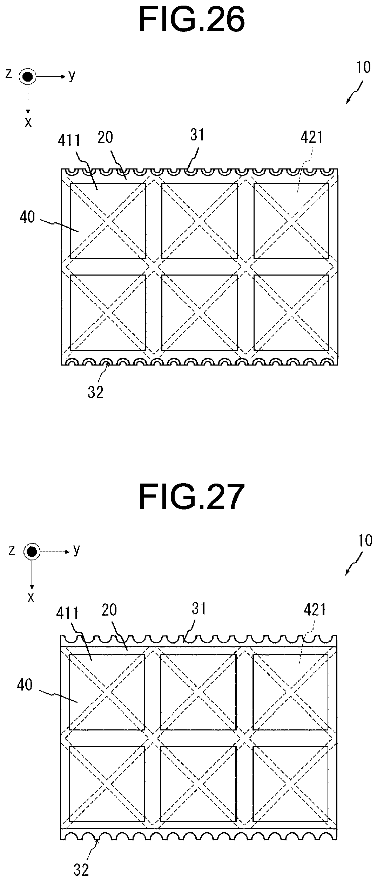

FIG. 26 is a plan view corresponding to FIG. 18. As illustrated in FIG. 26, the base 20 can have recessed portions. As illustrated in FIG. 26, the pair conductors 30 each have recessed portions that is recessed inward from an outer surface in the x direction. As illustrated in FIG. 26, the pair conductors 30 each extend along the recessed portions of the base 20. Such a resonator 10 can be produced, for example, by dividing a mother substrate along a row of through-hole conductors. Such pair conductors 30 can be referred to as castellated holes or the like.

FIG. 27 is a plan view corresponding to FIG. 18. As illustrated in FIG. 27, the base 20 can have recessed portions. As illustrated in FIG. 27, the pair conductors 30 each have recessed portions that are recessed inward from an outer surface in the x direction. Such a resonator 10 can be produced, for example, by dividing a mother substrate along a row of through-hole conductors. Such pair conductors 30 can be referred to as castellated holes or the like. In the example illustrated in FIGS. 24 to 27, the recessed portion has a semicircular shape. The shape of the recessed portion is not limited to a semicircular shape, and may be a portion of a polygon with rounded corners or a portion of an arc of an ellipse. For example, by using a portion of the ellipse along a longitudinal direction, a small number of castellated holes can realize a large surface integral in the yz plane.

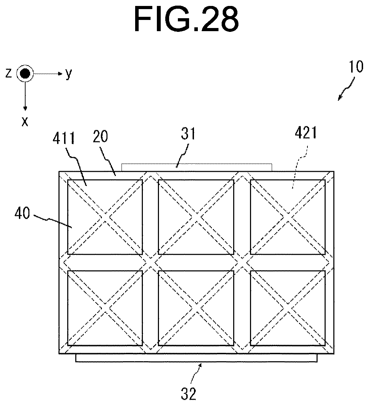

FIG. 28 is a plan view corresponding to FIG. 18. As illustrated in FIG. 28, the pair conductors 30 may each have a smaller length in the x direction than that of the base 20. The configuration of the pair conductors 30 is not limited thereto. In the example illustrated in FIG. 28, the lengths of the pair conductors in the x direction are different from each other, but the lengths of the pair conductors in the x direction can be the same. The length of one or both of the pair conductors 30 in the x direction may be smaller than that of the third conductor 40. The pair conductors 30 each having a length smaller than that of the base 20 in the x direction can have the structures illustrated in FIGS. 18 to 27. The pair conductors 30 each having a length smaller than that of the third conductor 40 in the x direction can have the structures illustrated in FIGS. 18 to 27. The pair conductors 30 can have different configurations. For example, one of the pair conductors 30 can include the fifth conductive layer 301 and the fifth conductor 302, and the other one of the pair conductors 30 can be a castellated hole.

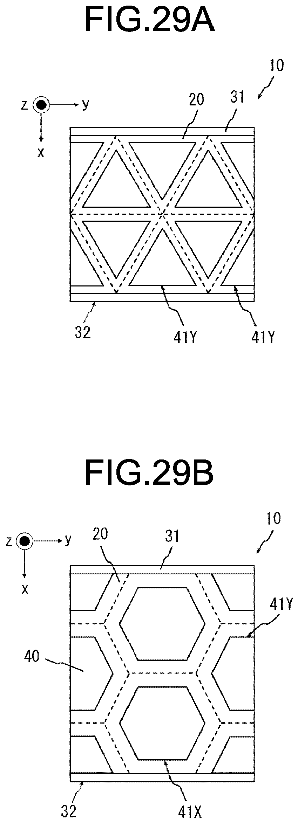

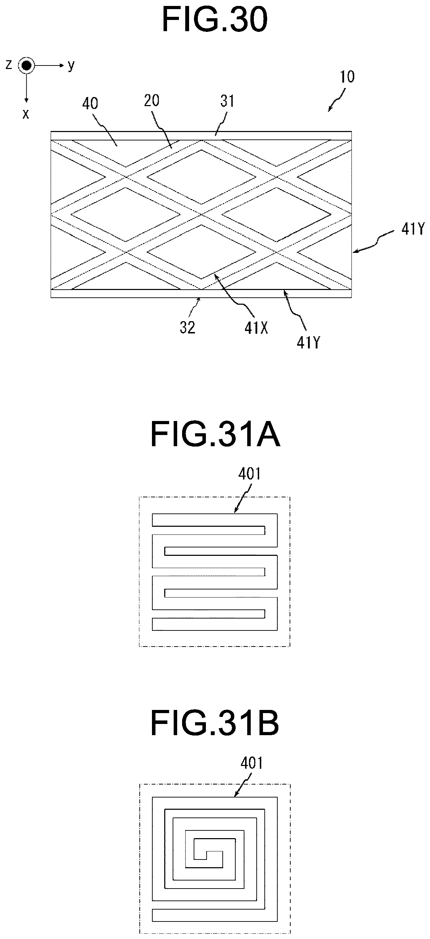

The third conductor 40 illustrated in each of FIGS. 1 to 28 is an example. The configuration of the third conductor 40 is not limited to the configurations illustrated in FIGS. 1 to 28. The unit resonator 40X, the first unit resonator 41X, and the second unit resonator 42X are not limited to have a rectangular shape. The unit resonator 40X, the first unit resonator 41X, and the second unit resonator 42X can be referred to as the unit resonator 40X or the like. For example, the unit resonator 40X or the like may have a triangular shape as illustrated in FIG. 29A and may be a hexagonal shape as illustrated in FIG. 29B. As illustrated in FIG. 30, each side of the unit resonator 40X or the like can extend in a direction different from the x direction and the y direction. In the third conductor 40, the second conductive layer 42 can be positioned on the base 20 and the first conductive layer 41 can be positioned inside the base 20. In the third conductor 40, the second conductive layer 42 can be positioned farther from the fourth conductor 50 than the first conductive layer 41 is.

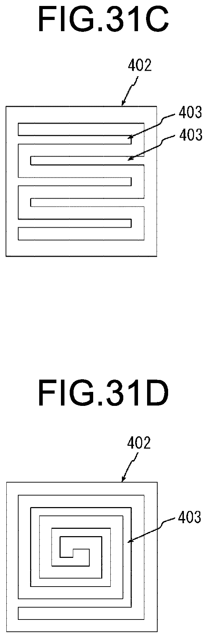

The third conductor 40 illustrated in each of FIGS. 1 to 30 is an example. The configuration of the third conductor 40 is not limited to the configurations illustrated in FIGS. 1 to 30. The resonator including the third conductor 40 may be a line-type resonator 401. FIG. 31A illustrates a meander-line-type resonator 401. FIG. 31B illustrates a spiral-type resonator 401. The resonator including the third conductor 40 may be a slot-type resonator 402. The slot-type resonator 402 can include one or more seventh conductors 403 in an opening. The seventh conductor 403 in the opening has one end opened and the other end electrically connected to a conductor defining the opening. In a unit slot illustrated in FIG. 31C, five seventh conductors 403 are positioned in the opening. The unit slot has a shape corresponding to a meander line by the seventh conductors 403. In a unit slot illustrated in FIG. 31D, one seventh conductor 403 is positioned in the opening. The unit slot has a shape corresponding to a spiral by the seventh conductor 403.

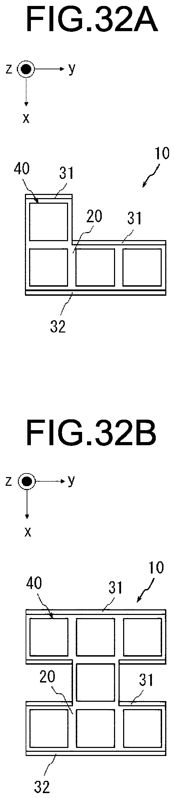

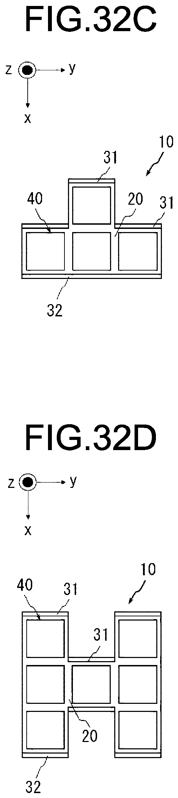

The configuration of the resonator 10 illustrated in each of FIGS. 1 to 31D is an example. The configuration of the resonator 10 is not limited to the configurations illustrated in FIGS. 1 to 31D. For example, the resonator 10 can include three or more pair conductors 30. For example, one pair conductor 30 can face two pair conductors 30 in the x direction. The two pair conductors 30 are different in distance from the one pair conductor 30. For example, the resonator 10 can include two pairs of pair conductors 30. The two pairs of pair conductors 30 can be different in regard to a distance between each pair and the lengths of each pair. The resonator 10 can include five or more first conductors. The unit structure 10X of the resonator 10 can be aligned with another unit structure 10X in the y direction. The unit structure 10X of the resonator 10 can be aligned with another unit structure 10X in the x direction without interposing the pair conductors 30 therebetween. FIGS. 32A to 34D are views each illustrating an example of the resonator 10. In the resonator 10 illustrated in FIGS. 32A to 34D, the unit resonator 40X of the unit structure 10X is shown as having a square shape, but the embodiments are not limited thereto.

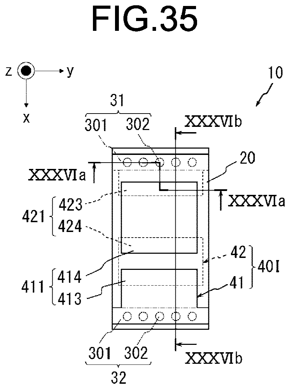

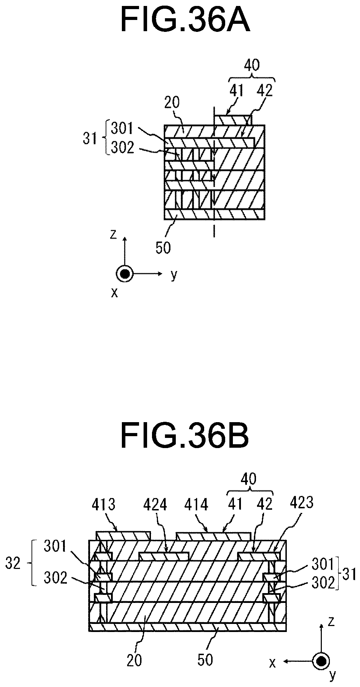

The configuration of the resonator 10 illustrated in each of FIGS. 1 to 34D is an example. The configuration of the resonator 10 is not limited to the configurations illustrated in FIGS. 1 to 34D. FIG. 35 is a plan view illustrating the xy plane viewed from the z direction. FIG. 36A is a cross-sectional view taken along line XXXVIa-XXXVIa illustrated in FIG. 35. FIG. 36B is a cross-sectional view taken along line XXXVIb-XXXVIb illustrated in FIG. 35.

In the resonator 10 illustrated in FIGS. 35 to 36B, the first conductive layer 41 includes a half of a patch-type resonator as the first unit resonator 41X. The second conductive layer 42 includes a half of a patch-type resonator as the second unit resonator 42X. The unit resonator 40X includes one first divisional resonator 41Y and one second divisional resonator 42Y. The unit structure 10X includes the unit resonator 40X, and a portion of the base 20 and a portion of the fourth conductor 50 that overlap the unit resonator 40X in the z direction. In the resonator 10 illustrated in FIG. 35, three unit resonators 40X are arranged in the x direction. The first unit conductor 411 and the second unit conductor 421 included in the three unit resonators 40X form one current path 401.

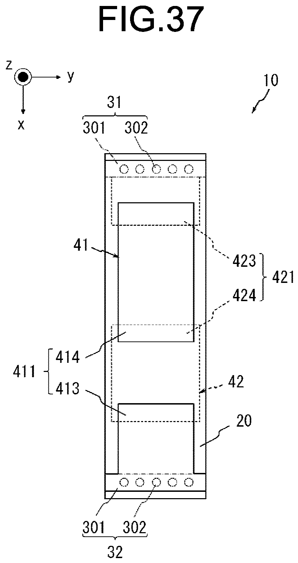

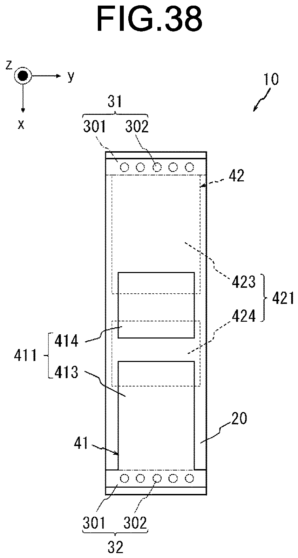

FIG. 37 illustrates another example of the resonator 10 illustrated in FIG. 35. The resonator 10 illustrated in FIG. 37 is longer in the x direction, as compared with the resonator 10 illustrated in FIG. 35. The size of the resonator 10 is not limited to that of the resonator 10 illustrated in FIG. 37 and can be changed as appropriate. In the resonator 10 of FIG. 37, the length of the first connecting conductor 413 in the x direction is different from that of the first floating conductor 414. In the resonator 10 of FIG. 37, the length of the first connecting conductor 413 in the x direction is smaller than that of the first floating conductor 414. FIG. 38 illustrates another example of the resonator 10 illustrated in FIG. 35. In the resonator 10 illustrated in FIG. 38, the length of the third conductor 40 in the x direction is different. In the resonator 10 of FIG. 38, the length of the first connecting conductor 413 in the x direction is larger than that of the first floating conductor 414.

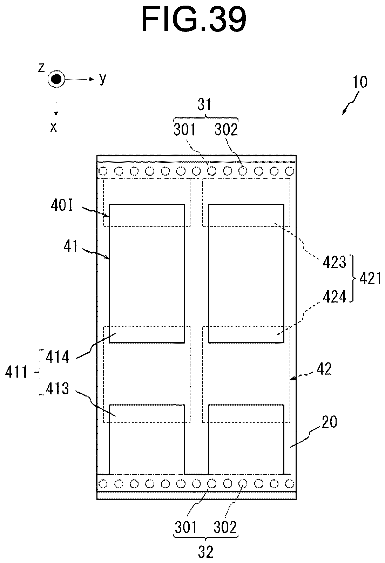

FIG. 39 illustrates another example of the resonator 10. FIG. 39 illustrates another example of the resonator 10 illustrated in FIG. 37. In embodiments, in the resonator 10, a plurality of first unit conductors 411 arranged in the x direction and the second unit conductors 421 are capacitively coupled to each other. In the resonator 10, two current paths 401 can be arranged in the y direction, in which no current flows from one side to the other side.

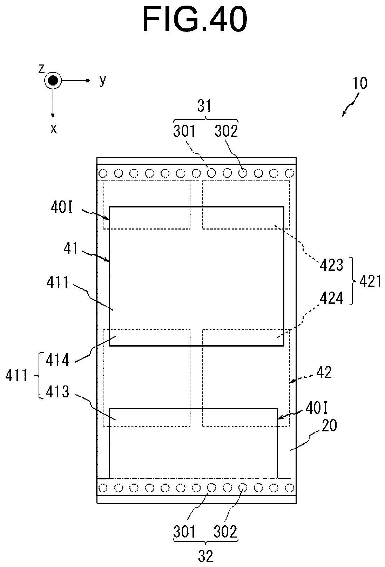

FIG. 40 illustrates another example of the resonator 10. FIG. 40 illustrates another example of the resonator 10 illustrated in FIG. 39. In embodiments, in the resonator 10, the number of conductors connected to the first conductor 31 and the number of conductors connected to the second conductor 32 can be different from each other. In the resonator 10 of FIG. 40, one first connecting conductor 413 is capacitively coupled to two second floating conductors 424. In the resonator 10 of FIG. 40, two second connecting conductors 423 are capacitively coupled to one first floating conductor 414. In embodiments, the number of first unit conductors 411 can be different from the number of second unit conductors 421 that are capacitively coupled to the first unit conductor 411.

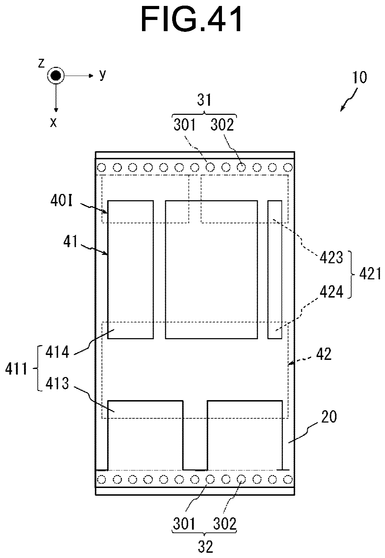

FIG. 41 illustrates another example of the resonator 10 illustrated in FIG. 39. In embodiments, the number of second unit conductors 421 that are capacitively coupled to a first end portion of the first unit conductor 411 in the x direction, and the number of second unit conductors 421 that are capacitively coupled to a second end portion of the first unit conductor 411 in the x direction can be different from each other. In the resonator 10 of FIG. 41, two first connecting conductors 413 are capacitively coupled to a first end portion of one second floating conductor 424 in the x direction and three second floating conductors 424 are capacitively coupled to a second end portion of the one second floating conductor 424. In embodiments, a plurality of conductors arranged in the y direction can have different lengths in the y direction. In the resonator 10 of FIG. 41, three first floating conductors 414 arranged in the y direction have different lengths in the y direction.

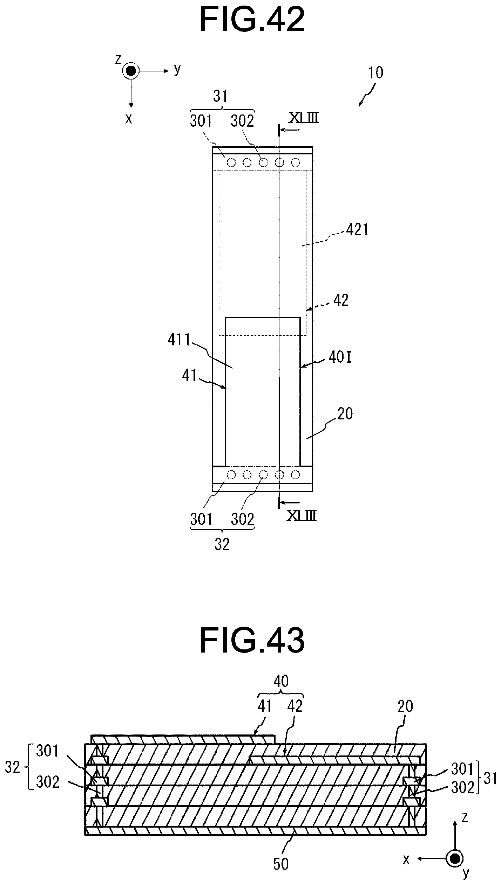

FIG. 42 illustrates another example of the resonator 10. FIG. 43 is a cross-sectional view taken along line XLIII-XLIII illustrated in FIG. 42. In the resonator 10 illustrated in FIGS. 42 and 43, the first conductive layer 41 includes a half of a patch-type resonator as the first unit resonator 41X. The second conductive layer 42 includes a half of a patch-type resonator as the second unit resonator 42X. The unit resonator 40X includes one first divisional resonator 41Y and one second divisional resonator 42Y. The unit structure 10X includes the unit resonator 40X, and a portion of the base 20 and a portion of the fourth conductor 50 that overlap the unit resonator 40X in the z direction. In the resonator 10 illustrated in FIG. 42, one unit resonator 40X extends in the x direction.

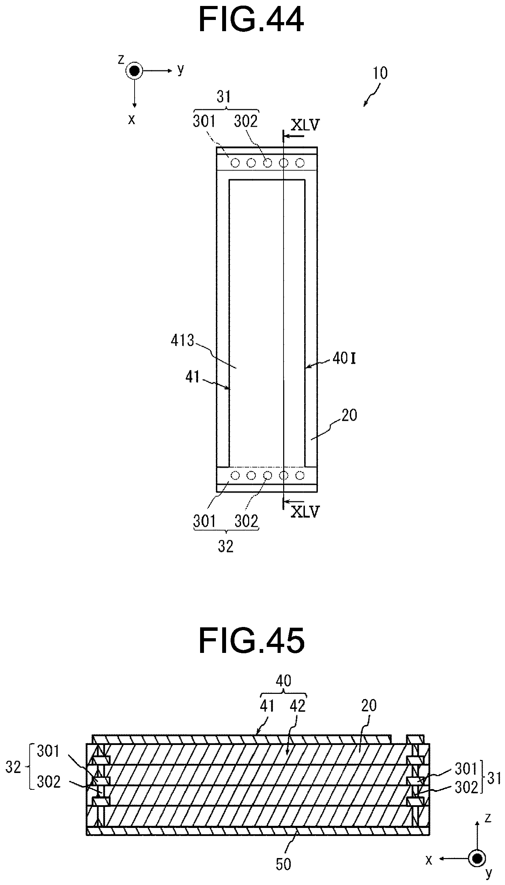

FIG. 44 illustrates another example of the resonator 10. FIG. 45 is a cross-sectional view taken along the line XLV-XLV illustrated in FIG. 44. In the resonator 10 illustrated in FIGS. 44 and 45, the third conductor 40 includes only the first connecting conductor 413. The first connecting conductor 413 faces the first conductor 31 in the xy plane. The first connecting conductor 413 is capacitively coupled to the first conductor 31.

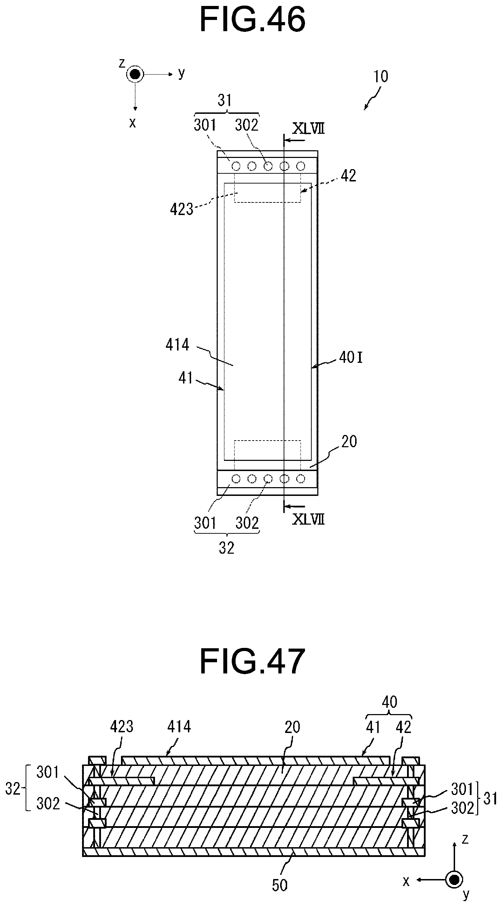

FIG. 46 illustrates another example of the resonator 10. FIG. 47 is a cross-sectional view taken along line XLVII-XLVII illustrated in FIG. 46. In the resonator 10 illustrated in FIGS. 46 and 47, the third conductor 40 includes the first conductive layer 41 and the second conductive layer 42. The first conductive layer 41 includes one first floating conductor 414. The second conductive layer 42 includes two second connecting conductors 423. The first conductive layer 41 faces the pair conductors 30 in the xy plane. The two second connecting conductors 423 overlap the one first floating conductor 414 in the z direction. The one first floating conductor 414 is capacitively coupled to the two second connecting conductors 423.

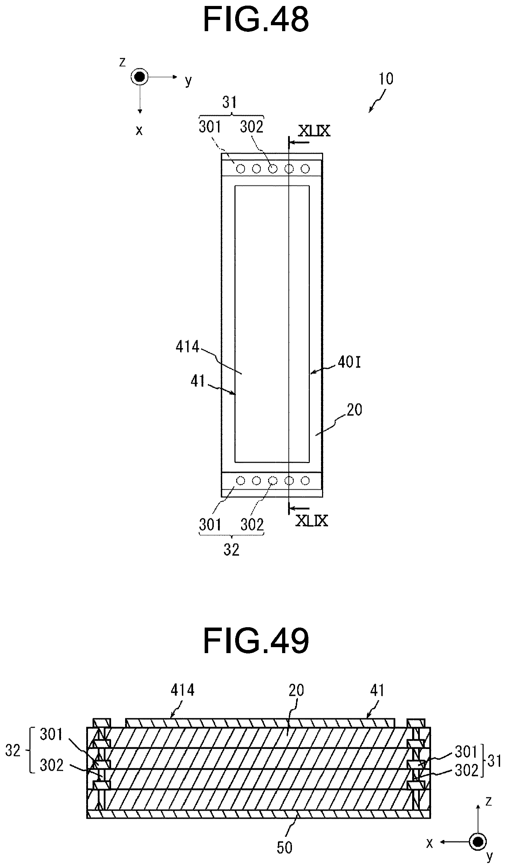

FIG. 48 illustrates another example of the resonator 10. FIG. 49 is a cross-sectional view taken along line XLIX-XLIX illustrated in FIG. 48. In the resonator 10 illustrated in FIGS. 48 and 49, the third conductor 40 includes only the first floating conductor 414. The first floating conductor 414 faces the pair conductors 30 in the xy plane. The first connecting conductor 413 is capacitively coupled to the pair conductors 30.

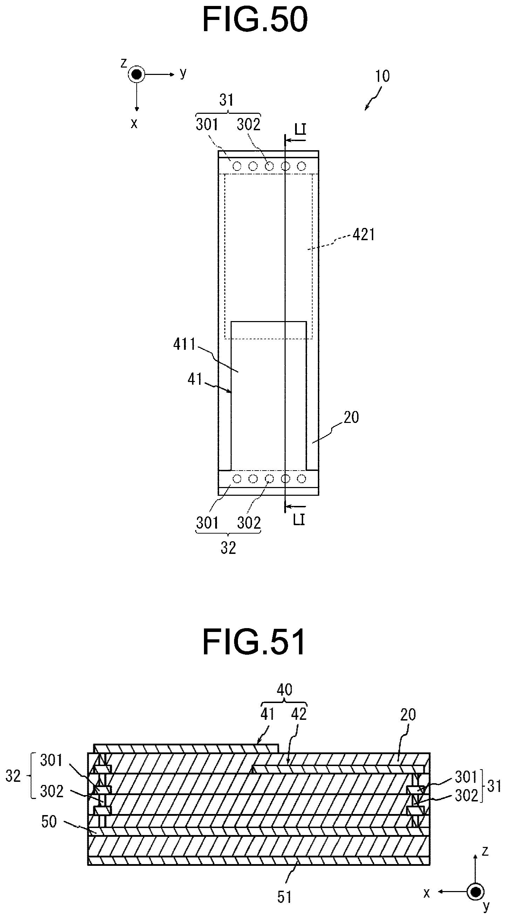

FIG. 50 illustrates another example of the resonator 10. FIG. 51 is a cross-sectional view taken along line LI-LI illustrated in FIG. 50. The resonator 10 illustrated in FIGS. 50 and 51 is different from the resonator 10 illustrated in FIGS. 42 and 43 in regard to the configuration of the fourth conductor 50. The resonator 10 illustrated in FIGS. 50 and 51 includes the fourth conductor 50 and the reference potential layer 51. The reference potential layer 51 is electrically connected to the ground of the device including the resonator 10. The reference potential layer 51 faces the third conductor 40 while having the fourth conductor 50 interposed therebetween. The fourth conductor 50 is positioned between the third conductor 40 and the reference potential layer 51. An interval between the reference potential layer 51 and the fourth conductor 50 is smaller than an interval between the third conductor 40 and the fourth conductor 50.

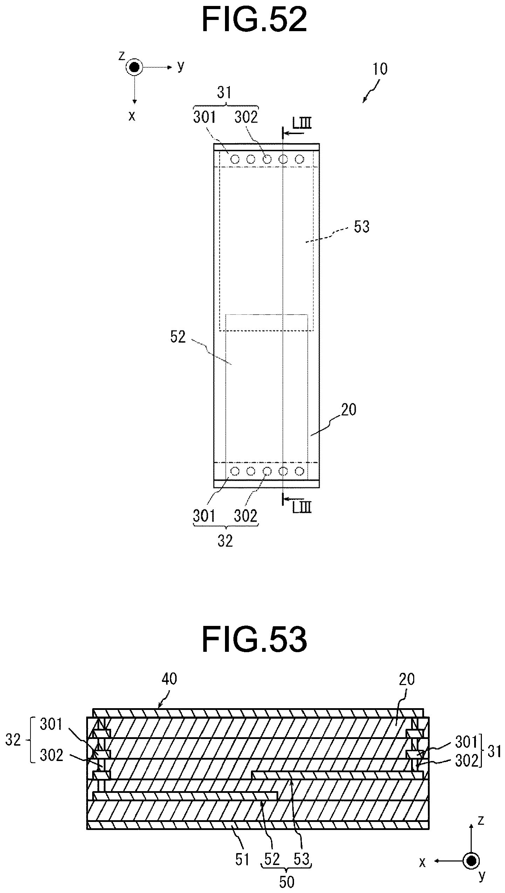

FIG. 52 illustrates another example of the resonator 10. FIG. 53 is a cross-sectional view taken along line LIII-LIII illustrated in FIG. 52. The resonator 10 includes the fourth conductor 50 and the reference potential layer 51. The reference potential layer 51 is electrically connected to the ground of the device including the resonator 10. The fourth conductor 50 includes a resonator. The fourth conductor 50 includes the third conductive layer 52 and the fourth conductive layer 53. The third conductive layer 52 and the fourth conductive layer 53 are capacitively coupled to each other. The third conductive layer 52 and the fourth conductive layer 53 face each other in the z direction. A distance between the third conductive layer 52 and the fourth conductive layer 53 is smaller than a distance between the fourth conductive layer 53 and the reference potential layer 51. The distance between the third conductive layer 52 and the fourth conductive layer 53 is smaller than a distance between the fourth conductor 50 and the reference potential layer 51. The third conductor 40 forms one conductive layer.

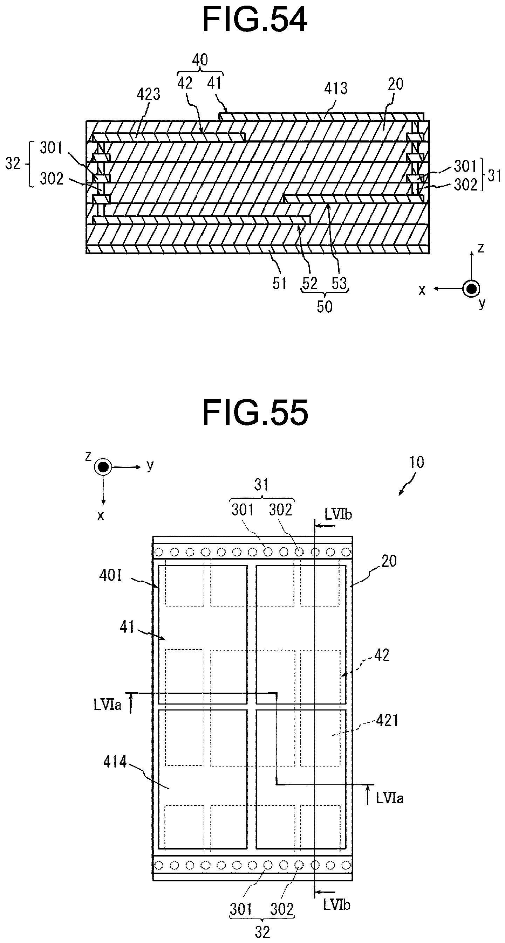

FIG. 54 illustrates another example of the resonator 10 illustrated in FIG. 53. The resonator 10 includes the third conductor 40, the fourth conductor 50, and the reference potential layer 51. The third conductor 40 includes the first conductive layer 41 and the second conductive layer 42. The first conductive layer 41 includes the first connecting conductor 413. The second conductive layer 42 includes the second connecting conductor 423. The first connecting conductor 413 is capacitively coupled to the second connecting conductor 423. The reference potential layer 51 is electrically connected to the ground of the device including the resonator 10. The fourth conductor 50 includes the third conductive layer 52 and the fourth conductive layer 53. The third conductive layer 52 and the fourth conductive layer 53 are capacitively coupled to each other. The third conductive layer 52 and the fourth conductive layer 53 face each other in the z direction. A distance between the third conductive layer 52 and the fourth conductive layer 53 is smaller than a distance between the fourth conductive layer 53 and the reference potential layer 51. The distance between the third conductive layer 52 and the fourth conductive layer 53 is smaller than a distance between the fourth conductor 50 and the reference potential layer 51.

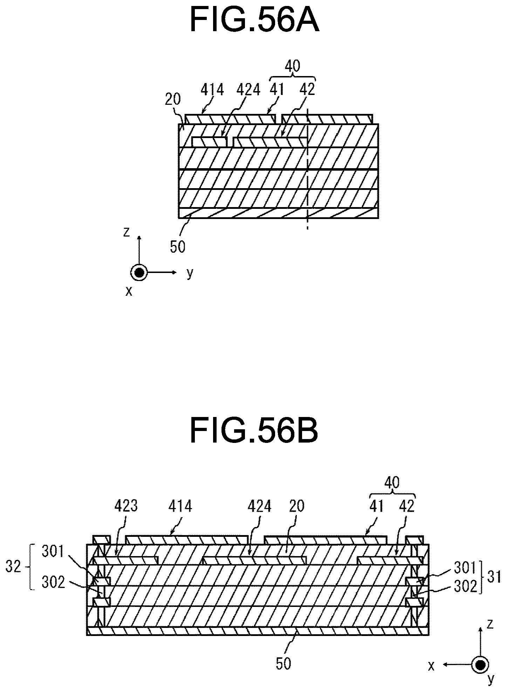

FIG. 55 illustrates another example of the resonator 10. FIG. 56A is a cross-sectional view taken along line LVIa-LVIa illustrated in FIG. 55. FIG. 56B is a cross-sectional view taken along line LVIb-LVIb illustrated in FIG. 55. In the resonator 10 illustrated in FIG. 55, the first conductive layer 41 includes four first floating conductors 414. The first conductive layer 41 illustrated in FIG. 55 does not include the first connecting conductor 413. In the resonator 10 illustrated in FIG. 55, the second conductive layer 42 includes six second connecting conductors 423 and three second floating conductors 424. Two second connecting conductors 423 are each capacitively coupled to two first floating conductors 414. One second floating conductor 424 is capacitively coupled to four first floating conductors 414. Two second floating conductors 424 are capacitively coupled to two first floating conductors 414.

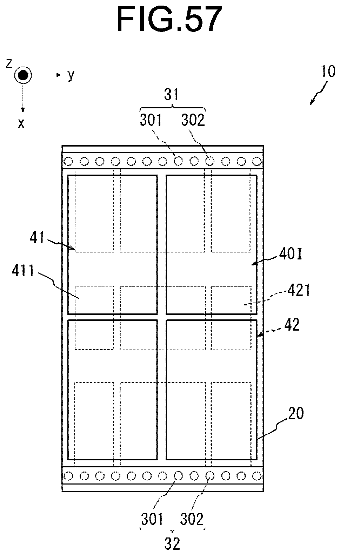

FIG. 57 is a view illustrating another example of the resonator illustrated in FIG. 55. The resonator 10 of FIG. 57 is different from the resonator 10 illustrated in FIG. 55 in regard to the size of the second conductive layer 42. In the resonator 10 illustrated in FIG. 57, the length of the second floating conductor 424 in the x direction is smaller than the length of the second connecting conductor 423 in the x direction.

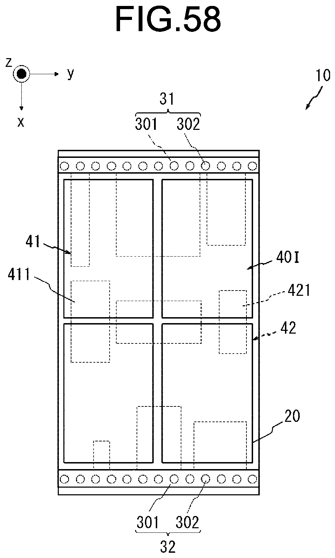

FIG. 58 is a view illustrating another example of the resonator illustrated in FIG. 55. The resonator 10 of FIG. 58 is different from the resonator 10 illustrated in FIG. 55 in regard to the size of the second conductive layer 42. In the resonator 10 illustrated in FIG. 58, a plurality of second unit conductors 421 have different first surface integrals. In the resonator 10 illustrated in FIG. 58, the plurality of second unit conductors 421 have different lengths in the x direction. In the resonator 10 illustrated in FIG. 58, the plurality of second unit conductors 421 have different lengths in the y direction. In FIG. 58, the plurality of second unit conductors 421 have different first surface integrals, lengths, and widths, but the embodiments are not limited thereto. In FIG. 58, some of the first surface integrals, lengths, and widths of the plurality of second unit conductors 421 can be different from each other. Some or all of the first surface integrals, lengths, and widths of the plurality of second unit conductors 421 can be identical to each other. Some or all of the first surface integrals, lengths, and widths of the plurality of second unit conductors 421 can be different from each other. Some or all of the first surface integrals, lengths, and widths of the plurality of second unit conductors 421 can be identical to each other. Some or all of the first surface integrals, lengths, and widths of some of the plurality of second unit conductors 421 can be identical to each other.

In the resonator 10 illustrated in FIG. 58, a plurality of second connecting conductors 423 arranged in the y direction have different first surface integrals. In the resonator 10 illustrated in FIG. 58, the plurality of second connecting conductors 423 arranged in the y direction have different lengths in the x direction. In the resonator 10 illustrated in FIG. 58, the plurality of second connecting conductors 423 arranged in the y direction have different lengths in the y direction. In FIG. 58, the plurality of second connecting conductors 423 have different first surface integrals, lengths, and widths, but the embodiments are not limited thereto. In FIG. 58, some of the first surface integrals, lengths, and widths of the plurality of second connecting conductors 423 can be different from each other. Some or all of the first surface integrals, lengths, and widths of the plurality of second connecting conductors 423 can be identical to each other. Some or all of the first surface integrals, lengths, and widths of the plurality of second connecting conductors 423 can be different from each other. Some or all of the first surface integrals, lengths, and widths of the plurality of second connecting conductors 423 can be identical to each other. Some or all of the first surface integrals, lengths, and widths of some of the plurality of second connecting conductors 423 can be identical to each other.

In the resonator 10 illustrated in FIG. 58, a plurality of second floating conductors 424 arranged in the y direction have different first surface integrals. In the resonator 10 illustrated in FIG. 58, the plurality of second floating conductors 424 arranged in the y direction have different lengths in the x direction. In the resonator 10 illustrated in FIG. 58, the plurality of second floating conductors 424 arranged in the y direction have different lengths in the y direction. In FIG. 58, the plurality of second floating conductors 424 have different first surface integrals, lengths, and widths, but the embodiments are not limited thereto. In FIG. 58, some of the first surface integrals, lengths, and widths of the plurality of second floating conductors 424 can be different from each other. Some or all of the first surface integrals, lengths, and widths of the plurality of second floating conductors 424 can be identical to each other. Some or all of the first surface integrals, lengths, and widths of the plurality of second floating conductors 424 can be different from each other. Some or all of the first surface integrals, lengths, and widths of the plurality of second floating conductors 424 can be identical to each other. Some or all of the first surface integrals, lengths, and widths of some of the plurality of second floating conductors 424 can be identical to each other.

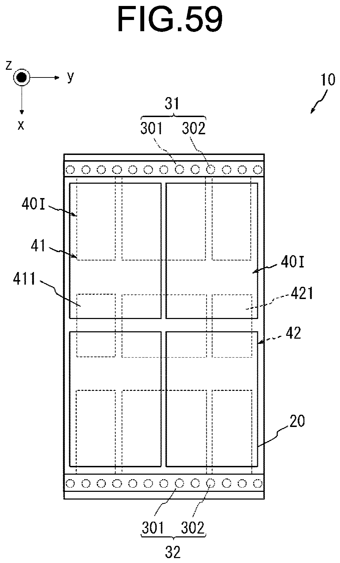

FIG. 59 is a view illustrating another example of the resonator 10 illustrated in FIG. 57. The resonator 10 of FIG. 59 is different from the resonator 10 illustrated in FIG. 57 in regard to an interval between the first unit conductors 411 in the y direction. In the resonator 10 of FIG. 59, the interval between the first unit conductors 411 in the y direction is smaller than an interval between the first unit conductors 411 in the x direction. In the resonator 10, since the pair conductors 30 can function as electric conductors, a current flows in the x direction. In the resonator 10, a current flowing through the third conductor 40 in the y direction can be ignored. The interval between the first unit conductors 411 in the y direction may be smaller than the interval between the first unit conductors 411 in the x direction. By decreasing the interval between the first unit conductors 411 in the y direction, the surface integral of the first unit conductor 411 can be increased.

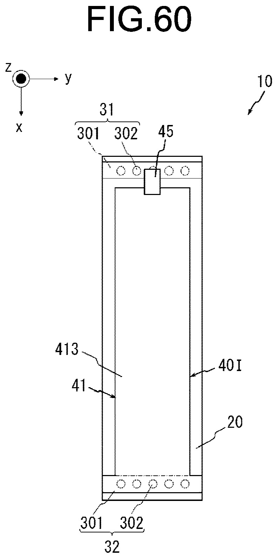

FIGS. 60 to 62 are views each illustrating another example of the resonator 10. These resonators 10 each include the impedance element 45. A unit conductor to which the impedance element 45 is connected is not limited to the examples illustrated in FIGS. 60 to 62. The impedance element 45 illustrated in FIGS. 60 to 62 can be partially omitted. The impedance element 45 can have a capacitance characteristic. The impedance element 45 can have an inductance characteristic. The impedance element 45 can be a mechanical or electrical variable element. The impedance element 45 can connect two different conductors in one layer to each other.

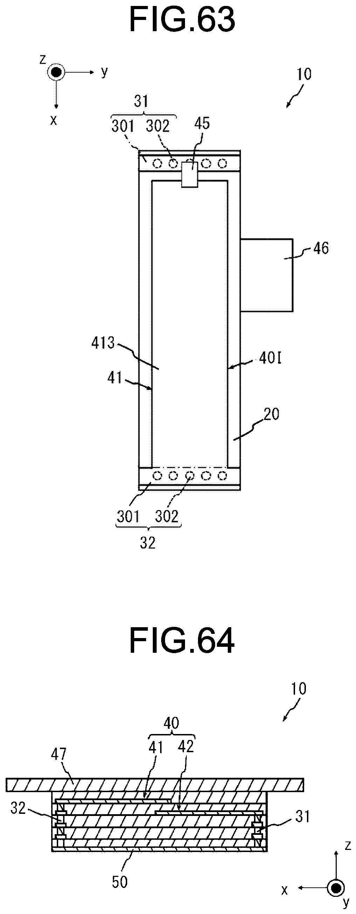

FIG. 63 is a plan view illustrating another example of the resonator 10. The resonator 10 includes the conductive component 46. The resonator 10 including the conductive component 46 is not limited to this structure. The resonator 10 can include a plurality of conductive components 46 on one side of the resonator 10 in the y direction. The resonator 10 can include one or more conductive components 46 on opposite sides of the resonator 10 in the y direction.

FIG. 64 is a cross-sectional view illustrating another example of the resonator 10. The resonator 10 includes the dielectric component 47. In the resonator 10 illustrated in FIG. 64, the dielectric component 47 overlaps the third conductor 40 in the z direction. The resonator 10 including the dielectric component 47 is not limited to this structure. In the resonator 10, the dielectric component 47 can overlap only a portion of the third conductor 40.

An antenna has at least one of a function of radiating electromagnetic waves or a function of receiving electromagnetic waves. Antennas of the present disclosure include, but are not limited to, a first antenna 60 and a second antenna 70.

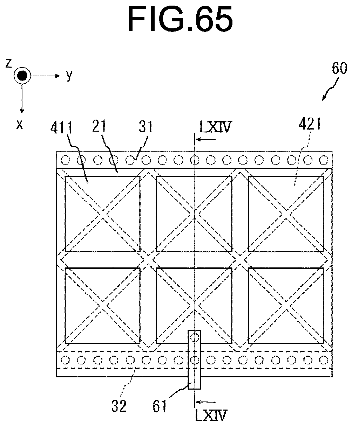

The first antenna 60 includes the base 20, the pair conductors 30, the third conductor 40, the fourth conductor 50, and a first feeding line 61. In one example, the first antenna 60 includes a third base 24 positioned on the base 20. The third base 24 can have a different composition than the base 20. The third base 24 can be positioned over the third conductor 40. FIGS. 65 to 78 are views each illustrating the first antenna 60 as an example of embodiments.

The first feeding line 61 feeds power to at least one of the resonators arranged periodically as artificial magnetic conductors. When feeding power to a plurality of resonators, the first antenna 60 can include a plurality of first feeding lines. The first feeding line 61 can be electromagnetically connected to any one of the resonators arranged periodically as artificial magnetic conductors. The first feeding line 61 can be electromagnetically connected to any one of a pair of conductors that is seen as electric conductors for the resonators that are periodically arranged as artificial magnetic conductors.

The first feeding line 61 feeds power to at least one of the first conductor 31, the second conductor 32, or the third conductor 40. When feeding power to a plurality of portions of the first conductor 31, the second conductor 32, and the third conductor 40, the first antenna 60 can include a plurality of first feeding lines. The first feeding line 61 can be electromagnetically connected to any one of the first conductor 31, the second conductor 32, or the third conductor 40. In a case where the first antenna 60 includes the reference potential layer 51 in addition to the fourth conductor 50, the first feeding line 61 can be electromagnetically connected to any one of the first conductor 31, the second conductor 32, the third conductor 40, or the fourth conductor 50. The first feeding line 61 is electrically connected to any one of the fifth conductive layer 301 or the fifth conductor 302 of the pair conductors 30. A portion of the first feeding line 61 can be integrated with the fifth conductive layer 301.

The first feeding line 61 can be electromagnetically connected to the third conductor 40. For example, the first feeding line 61 is electromagnetically connected to one of the first unit resonators 41X. For example, the first feeding line 61 is electromagnetically connected to one of the second unit resonators 42X. The first feeding line 61 is electromagnetically connected to a unit conductor of the third conductor 40 at a point different from the center in the x direction. The first feeding line 61 supplies power to at least one resonator included in the third conductor 40 in embodiments. In embodiments, the first feeding line 61 feeds power from at least one resonator included in the third conductor 40 to the outside. At least a portion of the first feeding line 61 can be positioned inside the base 20. The first feeding line 61 can be exposed to the outside from any of two zx planes, two yz planes, or two xy planes of the base 20.

The first feeding line 61 can be in contact with the third conductor 40 from forward and rearward in the z direction. The fourth conductor 50 can be omitted in the vicinity of the first feeding line 61. The first feeding line 61 can be electromagnetically connected to the third conductor 40 through an opening of the fourth conductor 50. The first conductive layer 41 can be omitted in the vicinity of the first feeding line 61. The first feeding line 61 can be connected to the second conductive layer 42 through an opening of the first conductive layer 41. The first feeding line 61 can be in contact with the third conductor 40 along the xy plane. The pair conductors 30 can be omitted in the vicinity of the first feeding line 61. The first feeding line 61 can be connected to the third conductor 40 through an opening of the pair conductors 30. The first feeding line 61 is connected to a unit conductor of the third conductor 40 at a point away from a central portion of the unit conductor.

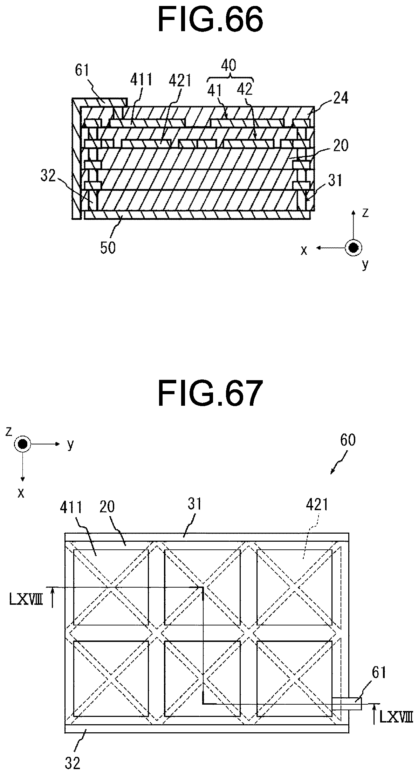

FIG. 65 is a plan view illustrating the xy plane of the first antenna 60 viewed from the z direction. FIG. 66 is a cross-sectional view taken along line LXIV-LXIV illustrated in FIG. 65. The first antenna 60 illustrated in FIGS. 65 and 66 includes the third base 24 positioned over the third conductor 40. The third base 24 has an opening on the first conductive layer 41. The first feeding line 61 is electrically connected to the first conductive layer 41 through the opening of the third base 24.

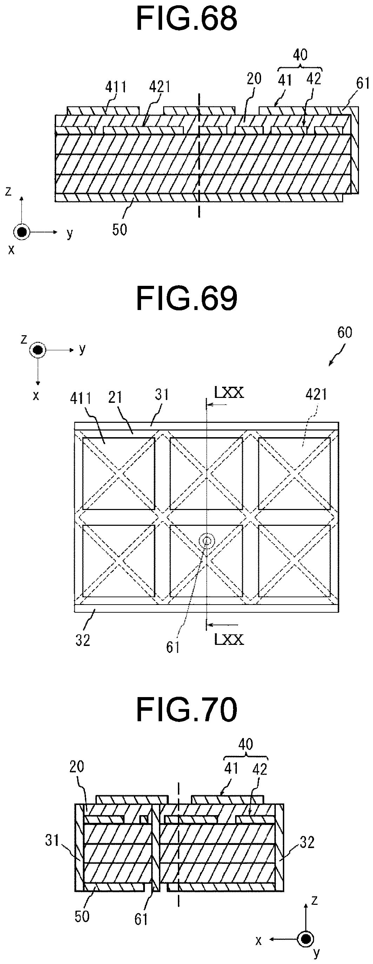

FIG. 67 is a plan view illustrating the xy plane of the first antenna 60 viewed from the z direction. FIG. 68 is a cross-sectional view taken along line LXVIII-LXVIII illustrated in FIG. 67. In the first antenna 60 illustrated in FIGS. 67 and 68, a portion of the first feeding line 61 is positioned on the base 20. The first feeding line 61 can be connected to the third conductor 40 in the xy plane. The first feeding line 61 can be connected to the first conductive layer 41 in the xy plane. In embodiments, the first feeding line 61 can be connected to the second conductive layer 42 in the xy plane.

FIG. 69 is a plan view illustrating the xy plane of the first antenna 60 viewed from the z direction. FIG. 70 is a cross-sectional view taken along line LXX-LXX illustrated in FIG. 69. In the first antenna 60 illustrated in FIGS. 69 and 70, the first feeding line 61 is positioned inside the base 20. The first feeding line 61 can be connected to the third conductor 40 from rearward in the z direction. The fourth conductor 50 can have an opening. The fourth conductor 50 can have the opening at a position where the fourth conductor overlaps the third conductor 40 in the z direction. The first feeding line 61 can be exposed to the outside of the base 20 through the opening.

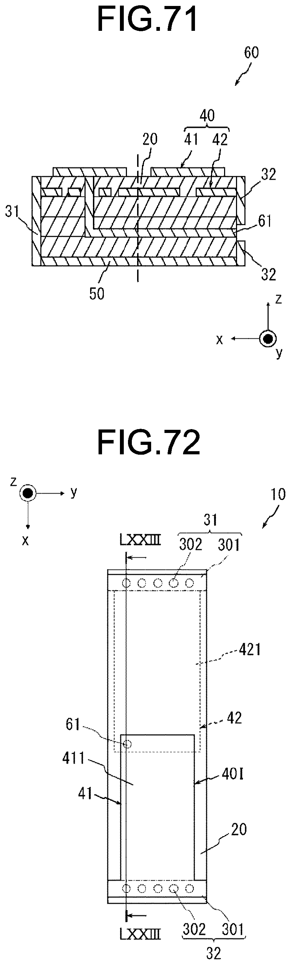

FIG. 71 is a cross-sectional view of the first antenna 60 taken along the zx plane viewed from the y direction. The pair conductors 30 can have an opening. The first feeding line 61 can be exposed to the outside of the base 20 through the opening.

Electromagnetic waves radiated by the first antenna 60 includes polarization components in the x direction more than that in the y direction in the first plane. The polarization components in the x direction are less attenuated than horizontal polarization components when a metal plate approaches the fourth conductor 50 in the z direction. The first antenna 60 can maintain radiation efficiency when the metal plate approaches from the outside.

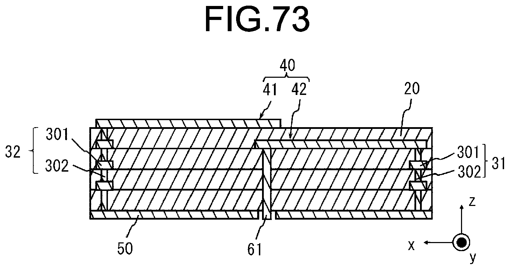

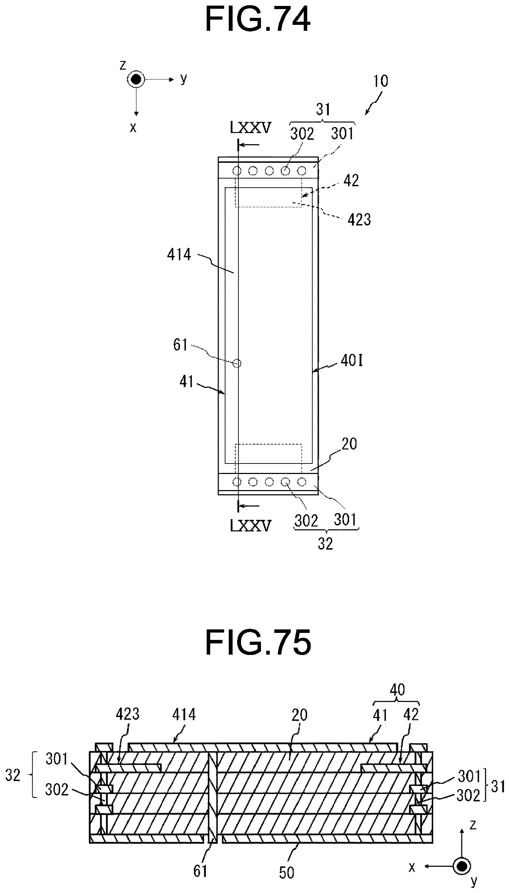

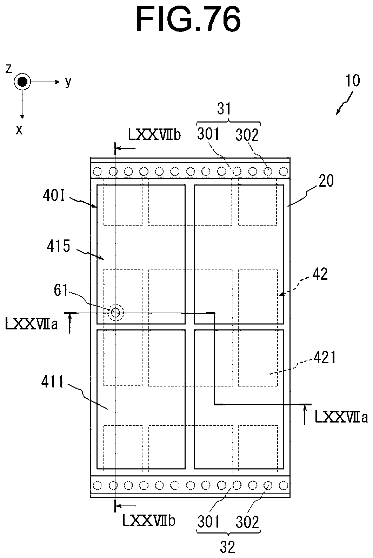

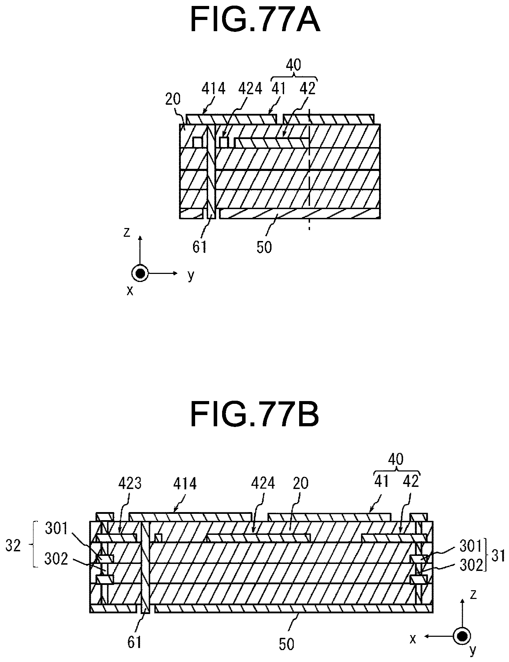

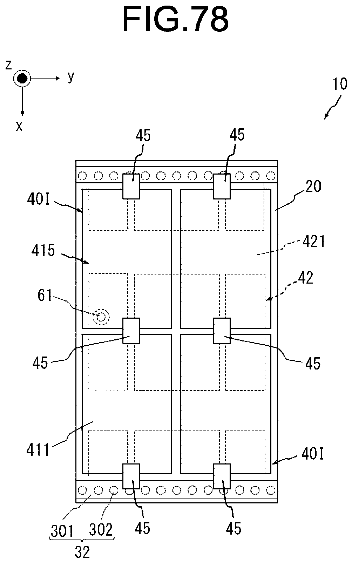

FIG. 72 illustrates another example of the first antenna 60. FIG. 73 is a cross-sectional view taken along line LXXIII-LXXIII illustrated in FIG. 72. FIG. 74 illustrates another example of the first antenna 60. FIG. 75 is a cross-sectional view taken along the line LXXV-LXXV illustrated in FIG. 74. FIG. 76 illustrates another example of the first antenna 60. FIG. 77A is a cross-sectional view taken along line LXXVIIa-LXXVIIa illustrated in FIG. 76. FIG. 77B is a cross-sectional view taken along line LXXVIIb-LXXVIIb illustrated in FIG. 76. FIG. 78 illustrates another example of the first antenna 60. The first antenna 60 illustrated in FIG. 78 includes the impedance element 45.

The operating frequency of the first antenna 60 can be changed by the impedance element 45. The first antenna 60 includes a first feeding conductor 415 connected to the first feeding line 61 and a first unit conductor 411 that is not connected to the first feeding line 61. Impedance matching is changed when the impedance element 45 is connected to the first feeding conductor 415 and another conductor. The impedance matching of the first antenna 60 can be adjusted by connecting the first feeding conductor 415 and another conductor with the impedance element 45. In the first antenna 60, the impedance element 45 can be inserted between the first feeding conductor 415 and another conductor in order to adjust the impedance matching. In the first antenna 60, the impedance element 45 can be inserted between two first unit conductors 411 that are not connected to the first feeding line 61 in order to adjust the operating frequency. In the first antenna 60, the impedance element 45 can be inserted between one of the pair conductors 30 and the first unit conductor 411 that is not connected to the first feeding line 61 in order to adjust the operating frequency.

The second antenna 70 includes the base 20, the pair conductors 30, the third conductor 40, the fourth conductor 50, a second feeding layer 71, and a second feeding line 72. In one example, the third conductor 40 is positioned inside the base 20. In one example, the second antenna 70 includes the third base 24 positioned on the base 20. The third base 24 can have a different composition than the base 20. The third base 24 can be positioned over the third conductor 40. The third base 24 can be positioned on the second feeding layer 71.

The second feeding layer 71 is positioned above the third conductor 40 with a space therebetween. The base 20 or the third base 24 can be positioned between the second feeding layer 71 and the third conductor 40. The second feeding layer 71 includes a line-type resonator, a patch-type resonator, or a slot-type resonator. The second feeding layer 71 can be referred to as an antenna element. In one example, the second feeding layer 71 can be electromagnetically coupled to the third conductor 40. The resonant frequency of the second feeding layer 71 is changed from a single resonant frequency by electromagnetic coupling with the third conductor 40. In one example, the second feeding layer 71 receives power transmitted from the second feeding line 72 and resonates with the third conductor 40. In one example, the second feeding layer 71 receives power transmitted from the second feeding line 72 and resonates with the third conductor 40 and the third conductor.

The second feeding line 72 is electrically connected to the second feeding layer 71. In embodiments, the second feeding line 72 transmits power to the second feeding layer 71. In embodiments, the second feeding line 72 transmits power from the second feeding layer 71 to the outside.

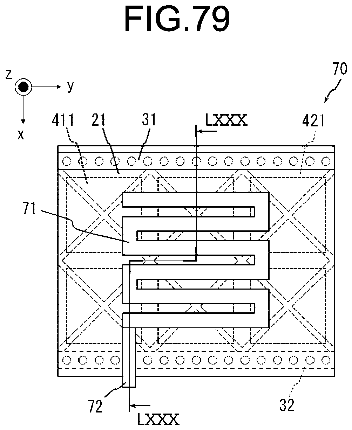

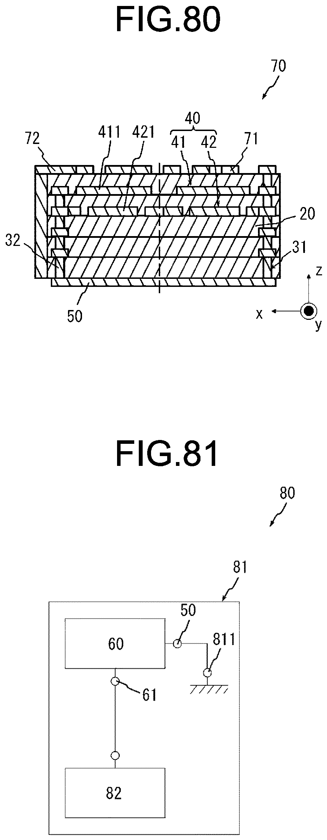

FIG. 79 is a plan view illustrating the xy plane of the second antenna 70 viewed from the z direction. FIG. 80 is a cross-sectional view taken along line LXXX-LXXX illustrated in FIG. 79. In the second antenna 70 illustrated in FIGS. 79 and 80, the third conductor 40 is positioned inside the base 20. The second feeding layer 71 is positioned on the base 20. The second feeding layer 71 is positioned in such a manner as to overlap the unit structure 10X in the z direction. The second feeding line 72 is positioned on the base 20. The second feeding line 72 is electromagnetically connected to the second feeding layer 71 in the xy plane.

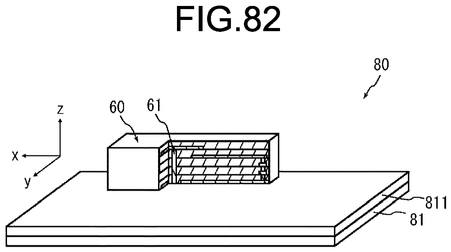

A wireless communication module of the present disclosure includes a wireless communication module 80 as an example of embodiments. FIG. 81 is a block diagram of the wireless communication module 80. FIG. 82 is a schematic configuration diagram of the wireless communication module 80. The wireless communication module 80 includes the first antenna 60, a circuit board 81, and an RF module 82. The wireless communication module 80 can include the second antenna 70 instead of the first antenna 60.

The first antenna 60 is positioned on the circuit board 81. The first feeding line 61 of the first antenna 60 is electromagnetically connected to the RF module 82 via the circuit board 81. The fourth conductor 50 of the first antenna 60 is electromagnetically connected to a ground conductor 811 of the circuit board 81.

The ground conductor 811 can extend in the xy plane. The ground conductor 811 has a surface integral larger than that of the fourth conductor 50 in the xy plane. The ground conductor 811 is longer than the fourth conductor 50 in the y direction. The ground conductor 811 is longer than the fourth conductor 50 in the x direction. The first antenna 60 can be positioned closer to an end side than to the center of the ground conductor 811 in the y direction. The center of the first antenna 60 can be different from the center of the ground conductor 811 in the xy plane. The center of the first antenna 60 can be different from the centers of the first conductive layer 41 and the second conductive layer 42. A point where the first feeding line 61 is connected to the third conductor 40 can be different from the center of the ground conductor 811 in the xy plane.

In the first antenna 60, the first current and the second current loop through the pair conductors 30. Since the first antenna 60 is positioned closer to the end side in the y direction than to the center of the ground conductor 811, the second current flowing through the ground conductor 811 becomes asymmetric. When the second current flowing through the ground conductor 811 becomes asymmetric, in an antenna structure including the first antenna 60 and the ground conductor 811, a polarization component of radiation waves in the x direction is increased. By increasing the polarization component of the radiation waves in the x direction, a total radiation efficiency of the radiation wave can be improved.

The RF module 82 can control power supplied to the first antenna 60. The RF module 82 modulates a baseband signal and supplies the baseband signal to the first antenna 60. The RF module 82 can modulate an electric signal received by the first antenna 60 into a baseband signal.

A change in resonant frequency of the first antenna 60 due to a conductor on the circuit board 81 side is small. The wireless communication module 80 can reduce an influence of an external environment by including the first antenna 60.

The first antenna 60 can be integrated with the circuit board 81. When the first antenna 60 and the circuit board 81 are integrated with each other, the fourth conductor 50 and the ground conductor 811 are integrated with each other.

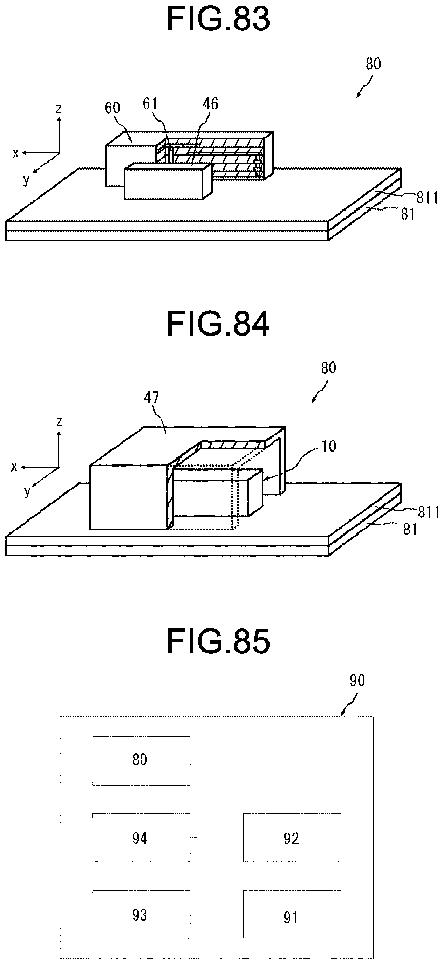

FIG. 83 is a partial cross-sectional view illustrating another example of the wireless communication module 80. The wireless communication module 80 illustrated in FIG. 83 includes the conductive component 46. The conductive component 46 is positioned on the ground conductor 811 of the circuit board 81. The conductive component 46 is aligned with the first antenna 60 in the y direction. The number of conductive components 46 is not limited to one, and a plurality of conductive components 46 can be positioned on the ground conductor 811.

FIG. 84 is a partial cross-sectional view illustrating another example of the wireless communication module 80. The wireless communication module 80 illustrated in FIG. 84 includes the dielectric component 47. The dielectric component 47 is positioned on the ground conductor 811 of the circuit board 81. The conductive component 46 is aligned with the first antenna 60 in the y direction.

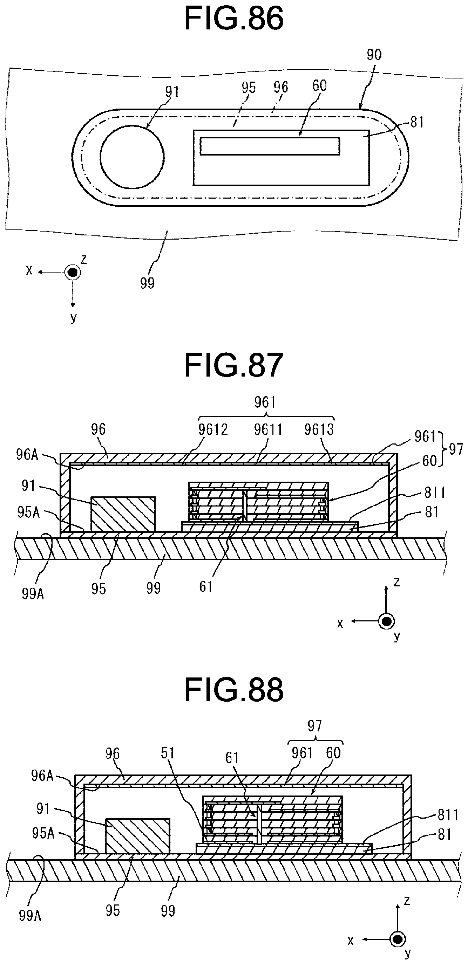

A wireless communication device of the present disclosure includes a wireless communication device 90 as an example of embodiments. FIG. 85 is a block diagram of the wireless communication device 90. FIG. 86 is a plan view of the wireless communication device 90. The configuration of the wireless communication device 90 illustrated in FIG. 86 is partially omitted. FIG. 87 is a cross-sectional view of the wireless communication device 90. The configuration of the wireless communication device 90 illustrated in FIG. 87 is partially omitted. The wireless communication device 90 includes the wireless communication module 80, a battery 91, a sensor 92, a memory 93, a controller 94, a first case 95, and a second case 96. The wireless communication module 80 of the wireless communication device 90 includes the first antenna 60, and can include the second antenna 70. FIG. 88 is one of other embodiments of the wireless communication device 90. The first antenna 60 included in the wireless communication device 90 can include the reference potential layer 51.

The battery 91 supplies power to the wireless communication module 80. The battery 91 can supply power to at least one of the sensor 92, the memory 93, or the controller 94. The battery 91 can include at least one of a primary battery or a secondary battery. A negative electrode of the battery 91 is electrically connected to a ground terminal of the circuit board 81. The negative electrode of the battery 91 is electrically connected to the fourth conductor 50 of the first antenna 60.

Examples of the sensor 92 may include a speed sensor, a vibration sensor, an acceleration sensor, a gyro sensor, a rotation angle sensor, an angular velocity sensor, a geomagnetic sensor, a magnet sensor, a temperature sensor, a humidity sensor, an atmospheric pressure sensor, an optical sensor, an illuminance sensor, a UV sensor, a gas sensor, a gas concentration sensor, an atmosphere sensor, a level sensor, an odor sensor, a pressure sensor, an air pressure sensor, a contact sensor, a wind sensor, an infrared sensor, a motion sensor, a displacement sensor, an image sensor, a weight sensor, a smoke sensor, a leakage sensor, a vital sensor, a state-of-charge (SOC) sensor, an ultrasonic sensor, and a global positioning system (GPS) signal receiving device.

Examples of the memory 93 can include a semiconductor memory. The memory 93 can function as a work memory of the controller 94. The memory 93 can be included in the controller 94. The memory 93 stores a program describing processing for realizing each function of the wireless communication device 90, information used for processing in the wireless communication device 90, and the like.

Examples of the controller 94 can include a processor. The controller 94 may include one or more processors. The processor may be a general-purpose processor that loads a specific program and executes a specific function, or a dedicated processor that is specialized for specific processing. The dedicated processor may include an application-specific integrated circuit (ASIC). The processor may include a programmable logic device (PLD). The PLD may include a field-programmable gate array (FPGA). The controller 94 may be any one of a system on a chip (SoC) in which one or more processors cooperate, or a system in a package (SiP). The controller 94 may store, in the memory 93, various information, a program for operating each component of the wireless communication device 90, or the like.

The controller 94 generates a transmission signal to be transmitted from the wireless communication device 90. The controller 94 may obtain measurement data from the sensor 92, for example. The controller 94 may generate a transmission signal according to the measurement data. The controller 94 can transmit a baseband signal to the RF module 82 of the wireless communication module 80.

The first case 95 and the second case 96 protect other devices of the wireless communication device 90. The first case 95 can extend in the xy plane. The first case 95 supports other devices. The first case 95 can support the wireless communication module 80. The wireless communication module 80 is positioned on an upper surface 95A of the first case 95. The first case 95 can support the battery 91. The battery 91 is positioned on the upper surface 95A of the first case 95. In one example of embodiments, the wireless communication module 80 and the battery 91 are arranged in the x direction on the upper surface 95A of the first case 95. The first conductor 31 is positioned between the battery 91 and the third conductor 40. The battery 91 is positioned on the opposite side of the pair conductors 30 from the third conductor 40.

The second case 96 can cover other devices. The second case 96 has a lower surface 96A positioned to face the first antenna 60 in the z direction. The lower surface 96A extends along the xy plane. The lower surface 96A is not limited to being a flat surface and can be a rugged surface. The second case 96 can include an eighth conductor 961. The eighth conductor 961 is positioned on at least one of an inner portion, the outside, or the inside of the second case 96. The eighth conductor 961 is positioned on at least one of an upper surface or a side surface of the second case 96.

The eighth conductor 961 faces the first antenna 60. A first body 9611 of the eighth conductor 961 faces the first antenna 60 in the z direction. The eighth conductor 961 can include, in addition to the first body 9611, at least one of a second body facing the first antenna 60 in the x direction or a third body facing the first antenna in the y direction. A portion of the eighth conductor 961 faces the battery 91.

The eighth conductor 961 can include a first extra-body 9612 that extends outward from the first conductor 31 in the x direction. The eighth conductor 961 can include a second extra-body 9613 that extends outward from the second conductor 32 in the x direction. The first extra-body 9612 can be electrically connected to the first body 9611. The second extra-body 9613 can be electrically connected to the first body 9611. The first extra-body 9612 of the eighth conductor 961 faces the battery 91 in the z direction. The eighth conductor 961 can be capacitively coupled to the battery 91. A capacitance can be formed between the eighth conductor 961 and the battery 91.

The eighth conductor 961 is separated from the third conductor 40 of the first antenna 60. The eighth conductor 961 is not electrically connected to each conductor of the first antenna 60. The eighth conductor 961 can be separated from the first antenna 60. The eighth conductor 961 can be electromagnetically coupled to any conductor of the first antenna 60. The first body 9611 of the eighth conductor 961 can be electromagnetically coupled to the first antenna 60. The first body 9611 can overlap the third conductor 40 when viewed in plan from the z direction. Since the first body 9611 overlaps the third conductor 40, propagation due to electromagnetic coupling can be increased. Electromagnetic coupling between the eighth conductor 961 and the third conductor 40 can cause a mutual inductance.

The eighth conductor 961 extends in the x direction. The eighth conductor 961 extends along the xy plane. The length of the eighth conductor 961 is larger than the length of the first antenna 60 in the x direction. The length of the eighth conductor 961 in the x direction is larger than the length of the first antenna 60 in the x direction. The length of the eighth conductor 961 can be larger than 1/2 of the operating wavelength λ of the wireless communication device 90. The eighth conductor 961 can include a portion extending in the y direction. The eighth conductor 961 can be bent in the xy plane. The eighth conductor 961 can include a portion extending in the z direction. The eighth conductor 961 can be bent from the xy plane to the yz plane or the zx plane.

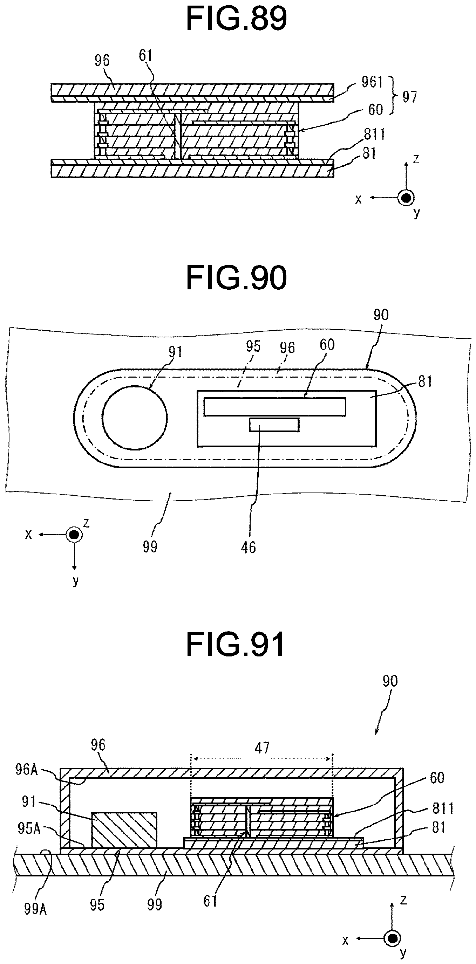

The wireless communication device 90 including the eighth conductor 961 can function as a third antenna 97 by electromagnetically coupling the first antenna 60 and the eighth conductor 961 to each other. The operating frequency f_{c} of the third antenna 97 may be different from the resonant frequency of the first antenna 60 alone. The operating frequency f_{c} of the third antenna 97 may be closer to the resonant frequency of the first antenna 60 than to the resonant frequency of the eighth conductor 961 alone. The operating frequency f_{c} of the third antenna 97 can be within a resonant frequency band of the first antenna 60. The operating frequency f_{c} of the third antenna 97 can be out of a resonant frequency band of the eighth conductor 961 alone. FIG. 89 is another embodiment of the third antenna 97. The eighth conductor 961 can be integrated with the first antenna 60. In FIG. 89, the configuration of the wireless communication device 90 is partially omitted. In the example of FIG. 89, the second case 96 does not have to include the eighth conductor 961.

In the wireless communication device 90, the eighth conductor 961 is capacitively coupled to the third conductor 40. The eighth conductor 961 is electromagnetically coupled to the fourth conductor 50. Since the third antenna 97 includes the first extra-body 9612 and the second extra-body 9613 of the eighth conductor in the air, a gain is improved as compared with the first antenna 60.

FIG. 90 is a plan view illustrating another example of the wireless communication device 90. The wireless communication device 90 illustrated in FIG. 90 includes the conductive component 46. The conductive component 46 is positioned on the ground conductor 811 of the circuit board 81. The conductive component 46 is aligned with the first antenna 60 in the y direction. The number of conductive components 46 is not limited to one, and a plurality of conductive components 46 can be positioned on the ground conductor 811.

FIG. 91 is a cross-sectional view illustrating another example of the wireless communication device 90. The wireless communication device 90 illustrated in FIG. 91 includes the dielectric component 47. The dielectric component 47 is positioned on the ground conductor 811 of the circuit board 81. The dielectric component 47 is aligned with the first antenna 60 in the y direction. As illustrated in FIG. 91, a portion of the second case 96 can function as the dielectric component 47. In the wireless communication device 90, the second case 96 can be the dielectric component 47.

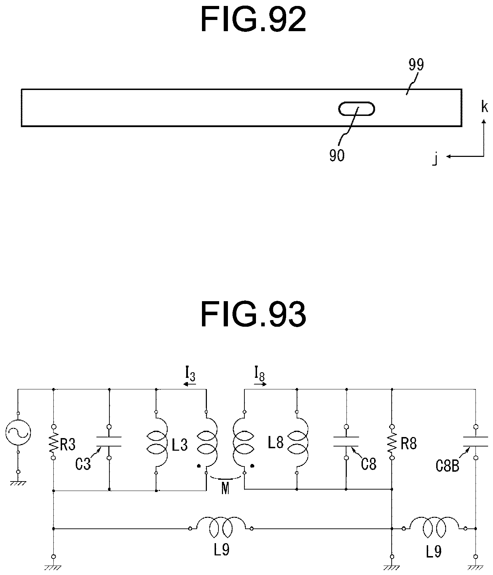

The wireless communication device 90 can be positioned on various objects. The wireless communication device 90 can be positioned on an electrical conductive body 99. FIG. 92 is a plan view illustrating an embodiment of the wireless communication device 90. The electrical conductive body 99 is a conductor that conducts electricity. The material of the electrical conductive body 99 is a metal, a highly doped semiconductor, a conductive plastic, or a liquid containing ions. The electrical conductive body 99 can include a non-conductive layer that does not conduct electricity and is positioned on a surface of the electrical conductive body 99. A portion that conducts electricity and the non-conductive layer can contain a common chemical element. For example, the electrical conductive body 99 containing aluminum can include a non-conductive layer containing aluminum oxide and positioned on the surface thereof. The portion that conducts electricity and the non-conductive layer can each include a different chemical element.

The shape of the electrical conductive body 99 is not limited to a flat plate shape, and can be a three-dimensional shape such as a box shape. The three-dimensional shape of the electrical conductive body 99 is a rectangular parallelepiped or a cylinder. The three-dimensional shape can be a partially depressed shape, a partially penetrated shape, or a partially protruding shape. For example, the electrical conductive body 99 can have a torus shape. The electrical conductive body 99 can have a cavity therein. The electrical conductive body 99 can be a box having a space therein. The electrical conductive body 99 is a cylindrical body having a space therein. The electrical conductive body 99 is a tube having a space therein. The electrical conductive body 99 can be a pipe, a tube, or a hose.

The electrical conductive body 99 has an upper surface 99A on which the wireless communication device 90 can be placed. The upper surface 99A can extend over the entire surface of the electrical conductive body 99. The upper surface 99A can be a portion of the electrical conductive body 99. The upper surface 99A can have a surface integral larger than that of the wireless communication device 90. The wireless communication device 90 can be placed on the upper surface 99A of the electrical conductive body 99. The upper surface 99A can have a surface integral smaller than the wireless communication device 90. The wireless communication device 90 can be partially placed on the upper surface 99A of the electrical conductive body 99. The wireless communication device 90 can be placed on the upper surface 99A of the electrical conductive body 99 in various orientations. The orientation of the wireless communication device 90 can be arbitrary. The wireless communication device 90 can be appropriately fixed on the upper surface 99A of the electrical conductive body 99 by using a fixture. The fixture includes one used for surface-fixation, such as a double-sided tape or an adhesive. The fixture includes one used for point-fixation, such as a screw or a nail.

The upper surface 99A of the electrical conductive body 99 can have a portion extending in a j direction. The length of the portion in the j direction is larger than the length of the portion in a k direction, the portion extending in the j direction. The j direction and the k direction are orthogonal to each other. The j direction is a direction in which the electrical conductive body 99 extends longitudinally. The k direction is a direction in which the electrical conductive body 99 has a length shorter than that in the j direction.

The wireless communication device 90 is placed on the upper surface 99A of the electrical conductive body 99. As the first antenna 60 is electromagnetically coupled with the electrical conductive body 99, a current is induced in the electrical conductive body 99. The electrical conductive body 99 radiates electromagnetic waves by the induced current. As the wireless communication device 90 is placed on the electrical conductive body 99, the electrical conductive body 99 functions as a part of the antenna. A propagation direction of the wireless communication device 90 is changed by the electrical conductive body 99.

The wireless communication device 90 can be placed on the upper surface 99A in such a manner that the x direction is along the j direction. The wireless communication device 90 can be placed on the upper surface 99A of the electrical conductive body 99 in such a manner as to be aligned with the x direction in which the first conductor 31 and the second conductor 32 are arranged. When the wireless communication device 90 is positioned on the electrical conductive body 99, the first antenna 60 can be electromagnetically coupled to the electrical conductive body 99. The second current in the x direction is generated in the fourth conductor 50 of the first antenna 60. A current is induced in the electrical conductive body 99 electromagnetically coupled to the first antenna 60 by the second current. When the x direction of the first antenna 60 and the j direction of the electrical conductive body 99 are aligned, in the electrical conductive body 99, a current flowing in the j direction is increased. When the x direction of the first antenna 60 and the j direction of the electrical conductive body 99 are aligned, in the electrical conductive body 99, the radiation by the induced current is increased. An angle of the x direction with respect to the j direction can be 45 degrees or less.

The ground conductor 811 of the wireless communication device 90 is separated from the electrical conductive body 99. The wireless communication device 90 can be placed on the upper surface 99A in such a manner that a direction along a longer side of the upper surface 99A is aligned with the x direction in which the first conductor 31 and the second conductor 32 are arranged. The upper surface 99A can be a rectangular surface, a rhombus-shaped surface, or a circular surface. The electrical conductive body 99 can have a rhombus-shaped surface. This rhombus-shaped surface can be the upper surface 99A on which the wireless communication device 90 is placed. The wireless communication device 90 can be placed on the upper surface 99A in such a manner that a direction along a longer diagonal line of the upper surface 99A is aligned with the x direction in which the first conductor 31 and the second conductor 32 are arranged. The upper surface 99A is not limited to be a flat surface. The upper surface 99A can be a rugged surface. The upper surface 99A can include a curved surface. The curved surface includes a ruled surface. The curved surface includes a cylindrical surface.

The electrical conductive body 99 extends in the xy plane. The length of the electrical conductive body 99 in the x direction can be larger than the length of the electrical conductive body 99 in the y direction. The length of the electrical conductive body 99 in the y direction can be smaller than a half of a wavelength λ_{c} at the operating frequency f_{c} of the third antenna 97. The wireless communication device 90 can be positioned on an electrical conductive body 99. The electrical conductive body 99 is positioned away from the fourth conductor 50 in the z direction. The length of the electrical conductive body 99 in the x direction is larger than that of the fourth conductor 50. The surface integral of the electrical conductive body 99 in the xy plane is larger than that of the fourth conductor 50. The electrical conductive body 99 is positioned away from the ground conductor 811 in the z direction. The length of the electrical conductive body 99 in the x direction is larger than that of the ground conductor 811. The surface integral of the electrical conductive body 99 in the xy plane is larger than that of the ground conductor 811.

The wireless communication device 90 can be placed on the electrical conductive body 99 in an orientation in which the x direction in which the first conductor 31 and the second conductor 32 are arranged is aligned with the direction in which the electrical conductive body 99 extends longitudinally. In other words, the wireless communication device 90 can be placed on the electrical conductive body 99 in an orientation in which a direction in which the current of the first antenna 60 flows in the xy plane is aligned with the direction in which the electrical conductive body 99 extends longitudinally.

A change in resonant frequency of the first antenna 60 due to a conductor on the circuit board 81 side is small. Since the wireless communication device 90 includes the first antenna 60, an influence of an external environment can be reduced.

In the wireless communication device 90, the ground conductor 811 is capacitively coupled to the electrical conductive body 99. Since the wireless communication device 90 includes a portion of the electrical conductive body 99 that extends outward from the third antenna 97, a gain is increased as compared with the first antenna 60.

The wireless communication device 90 can be attached at a position corresponding to (2n - 1) × λ/4 (an odd multiple of 1/4 of the operating wavelength λ) from a tip end of the electrical conductive body 99, where n is an integer. When the wireless communication device 90 is placed at this position, current standing waves are induced in the electrical conductive body 99. The electrical conductive body 99 serves as a radiation source of electromagnetic waves due to the induced standing waves. The communication performance of the wireless communication device 90 is improved by such installation.

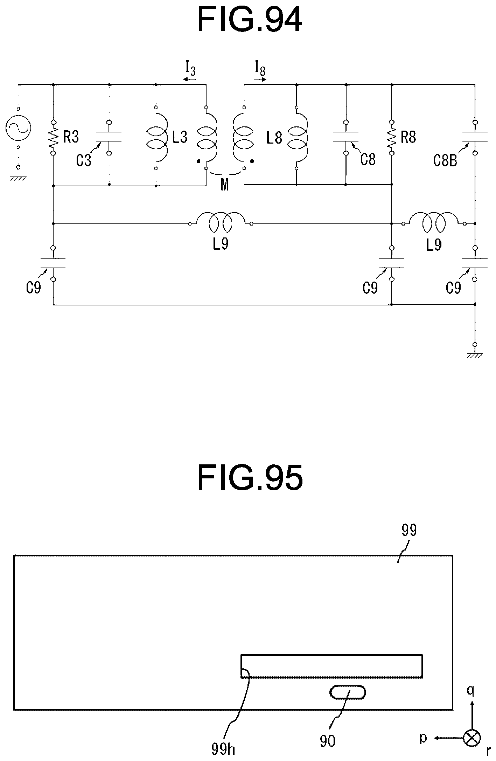

In the wireless communication device 90, a resonant circuit in the air and a resonant circuit on the electrical conductive body 99 can be different from each other. FIG. 93 is a schematic circuit of a resonance structure formed in the air. FIG. 94 is a schematic circuit of a resonance structure formed on the electrical conductive body 99. L3 represents the inductance of the resonator 10, L8 represents the inductance of the eighth conductor 961, L9 represents the inductance of the electrical conductive body 99, and M represents the mutual inductance of L3 and L8. C3 represents the capacitance of the third conductor 40, C4 represents the capacitance of the fourth conductor 50, C8 represents the capacitance of the eighth conductor 961, C8B represents the capacitance of the eighth conductor 961 and the battery 91, and C9 represents the capacitance of the electrical conductive body 99 and the ground conductor 811. R3 represents the radiation resistance of the resonator 10, and R8 represents the radiation resistance of the eighth conductor 961. The operating frequency of the resonator 10 is lower than the resonant frequency of the eighth conductor. In the wireless communication device 90, the ground conductor 811 functions as a chassis ground in the air. In the wireless communication device 90, the fourth conductor 50 is capacitively coupled to the electrical conductive body 99. In the wireless communication device 90 on the electrical conductive body 99, the electrical conductive body 99 functions as a substantial chassis ground.

In embodiments, the wireless communication device 90 includes the eighth conductor 961. The eighth conductor 961 is electromagnetically coupled to the first antenna 60 and capacitively coupled to the fourth conductor 50. The wireless communication device 90 can increase the operating frequency when placed on the electrical conductive body 99 from the air by increasing the capacitance C8B caused by the capacitive coupling. The wireless communication device 90 can reduce the operating frequency when placed on the electrical conductive body 99 from the air by increasing the mutual inductance M caused by the electromagnetic coupling. The wireless communication device 90 can adjust the change in operating frequency when placed on the electrical conductive body 99 from the air by changing a balance between the capacitance C8B and the mutual inductance M. The wireless communication device 90 can reduce the change in operating frequency when placed on the electrical conductive body 99 from the air by changing the balance between the capacitance C8B and the mutual inductance M.

The wireless communication device 90 includes the eighth conductor 961 that is electromagnetically coupled to the third conductor 40 and capacitively coupled to the fourth conductor 50. By including the eighth conductor 961, the wireless communication device 90 can adjust the change in operating frequency when placed on the electrical conductive body 99 from the air. By including the eighth conductor 961, the wireless communication device 90 can reduce the change in operating frequency when placed on the electrical conductive body 99 from the air.

Similarly, in the wireless communication device 90 that does not include the eighth conductor 961, the ground conductor 811 functions as a chassis ground in the air. Similarly, in the wireless communication device 90 that does not include the eighth conductor 961, the electrical conductive body 99 functions as a substantial chassis ground on the electrical conductive body 99. The resonance structure including the resonator 10 can oscillate even when the chassis ground is changed. This corresponds to the fact that the resonator 10 including the reference potential layer 51 and the resonator 10 that does not include the reference potential layer 51 can oscillate.

FIG. 95 is a plan view illustrating an embodiment of the wireless communication device 90. The electrical conductive body 99 can include a through hole 99h. The through hole 99h can include a portion extending in a p direction. The length of the through hole 99h in the p direction is larger than the length of the through hole 99h in a q direction. The p direction and the q direction are orthogonal to each other. The p direction is a direction in which the electrical conductive body 99 extends longitudinally. The q direction is a direction in which the electrical conductive body 99 has a length shorter than that in the p direction. An r direction is a direction orthogonal to the p direction and the q direction.

The wireless communication device 90 can be placed near the through hole 99h of the electrical conductive body 99 so that the x direction is along the p direction. The wireless communication device 90 can be placed near the through hole 99h of the electrical conductive body 99 in such a manner as to be aligned with the x direction in which the first conductor 31 and the second conductor 32 are arranged. When the wireless communication device 90 is positioned on the electrical conductive body 99, the first antenna 60 can be electromagnetically coupled to the electrical conductive body 99. The second current in the x direction is generated in the fourth conductor 50 of the first antenna 60. A current in the p direction is induced in the electrical conductive body 99 electromagnetically coupled to the first antenna 60 by the second current. The induced current can flow around along the through hole 99h. Electromagnetic waves are radiated from the electrical conductive body 99 using the through hole 99h as a slot. The electromagnetic waves radiated through the through hole 99h as a slot is radiated toward a second surface paired with a first surface on which the wireless communication device 90 is placed.

When the x direction of the first antenna 60 and the p direction of the electrical conductive body 99 are aligned, in the electrical conductive body 99, a current flowing in the p direction is increased. When the x direction of the first antenna 60 and the p direction of the electrical conductive body 99 are aligned, the radiation by the induced current through the through hole 99h of the electrical conductive body 99 is increased. An angle of the x direction with respect to the p direction can be 45 degrees or less. When the length of the through hole 99h in the p direction is equal to the operating wavelength at the operating frequency, the radiation of electromagnetic waves is increased. The through hole 99h functions as a slot antenna when the length of the through hole 99h in the p direction is (n × λ)/2, where the operating wavelength is λ and n is an integer. The radiation of electromagnetic waves is increased by standing waves induced in the through hole. The wireless communication device 90 can be positioned at a position corresponding to (m × λ)/2 from an end of the through hole in the p direction. m is an integer of 0 or more and n or less. The wireless communication device 90 can be positioned at a position corresponding to less than λ/4 from the through hole.

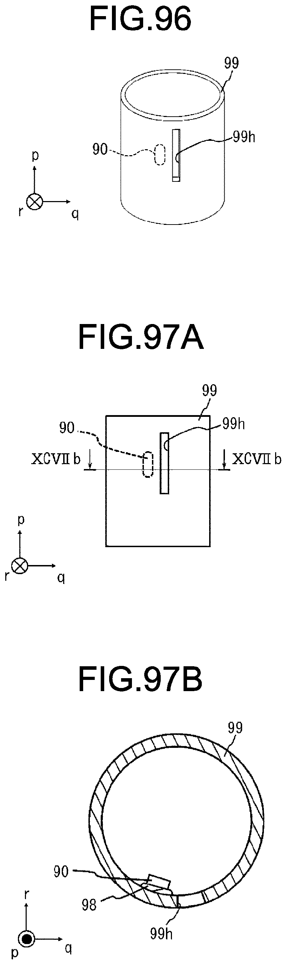

FIG. 96 is a perspective view illustrating an embodiment of the wireless communication device 90. FIG. 97A is a side view corresponding to the perspective view illustrated in FIG. 96. FIG. 97B is a cross-sectional view taken along line XCVIIb-XCVIIb illustrated in FIG. 97A. The wireless communication device 90 is positioned on an inner surface of the electrical conductive body 99 having a cylindrical shape. The electrical conductive body 99 has the through hole 99h extending in the r direction. In the wireless communication device 90, the r direction and the x direction are aligned near the through hole 99h.

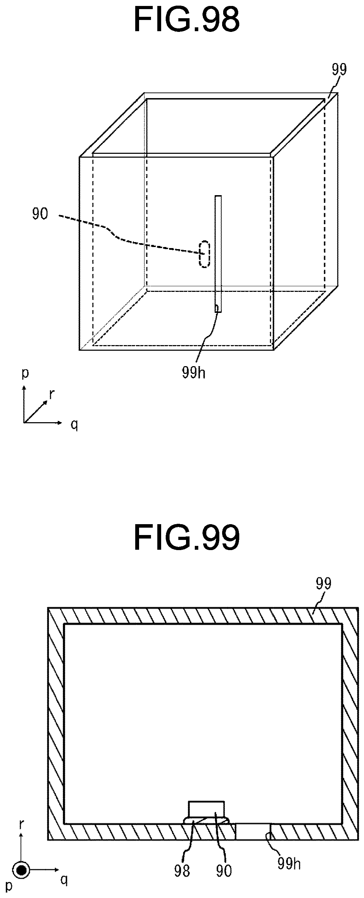

FIG. 98 is a perspective view illustrating an embodiment of the wireless communication device 90. FIG. 99 is a cross-sectional view illustrating the vicinity of the wireless communication device 90 of the perspective view illustrated in FIG. 98. The wireless communication device 90 is positioned on an inner surface of the electrical conductive body 99 having an angular cylindrical shape. The electrical conductive body 99 has the through hole 99h extending in the r direction. In the wireless communication device 90, the r direction and the x direction are aligned near the through hole 99h.

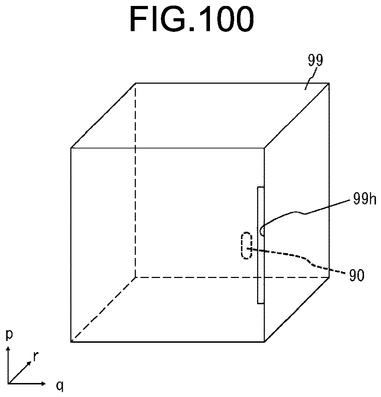

FIG. 100 is a perspective view illustrating an embodiment of the wireless communication device 90. The wireless communication device 90 is positioned on an inner surface of the electrical conductive body 99 having a rectangular parallelepiped shape. The electrical conductive body 99 has the through hole 99h extending in the r direction. In the wireless communication device 90, the r direction and the x direction are aligned near the through hole 99h.

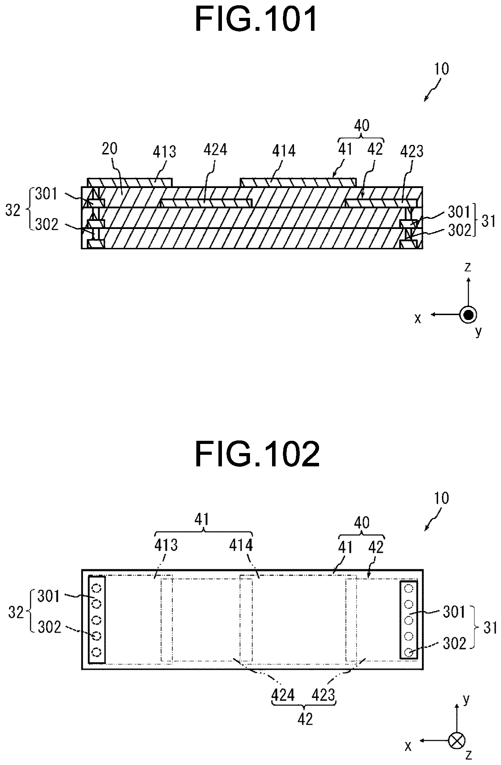

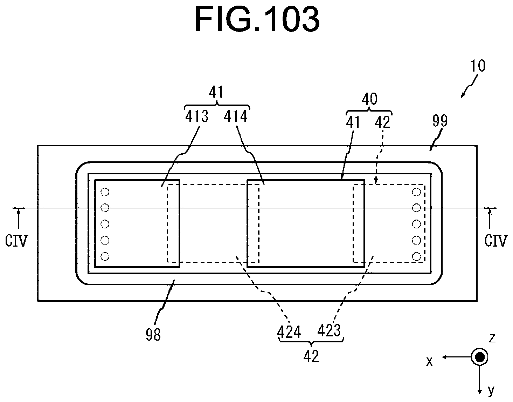

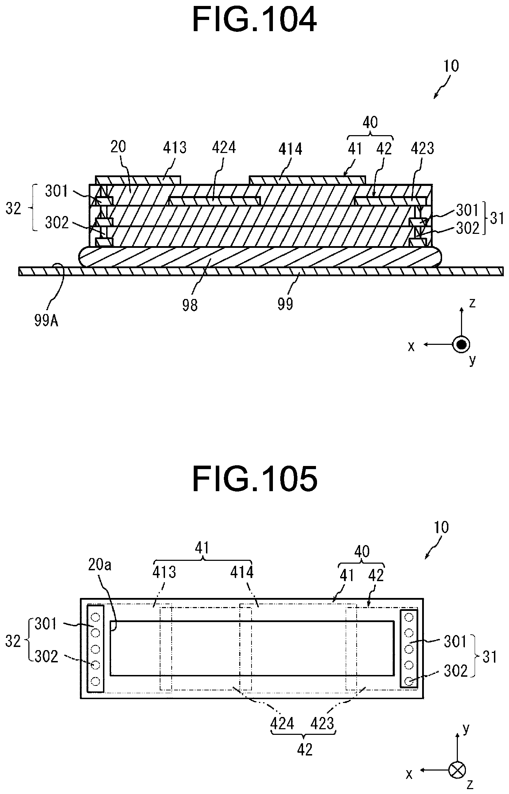

In the resonator 10 placed on the electrical conductive body 99 and used, at least a portion of the fourth conductor 50 can be omitted. The resonator 10 includes the base 20 and the pair conductors 30. FIG. 101 is an example of the resonator 10 that does not include the fourth conductor 50. FIG. 102 is a plan view in which the resonator 10 is oriented such that the +z direction indicates the back side in the drawing. FIG. 103 is an example in which the resonator 10 that does not include the fourth conductor 50 is placed on the electrical conductive body 99 to form a resonance structure. FIG. 104 is a cross-sectional view taken along line CIV-CIV illustrated in FIG. 103. The resonator 10 is attached to the electrical conductive body 99 using an attach member 98. The resonator 10 is not limited to one illustrated in FIGS. 101 to 104. The resonator 10 that does not include the fourth conductor 50 is not limited to the resonator 10 illustrated in FIGS. 19A and 19B from which the fourth conductor 50 is removed. The resonator 10 that does not include the fourth conductor 50 can be implemented by removing the fourth conductor 50 from the resonator 10 illustrated in FIGS. 1 to 62 and the like.

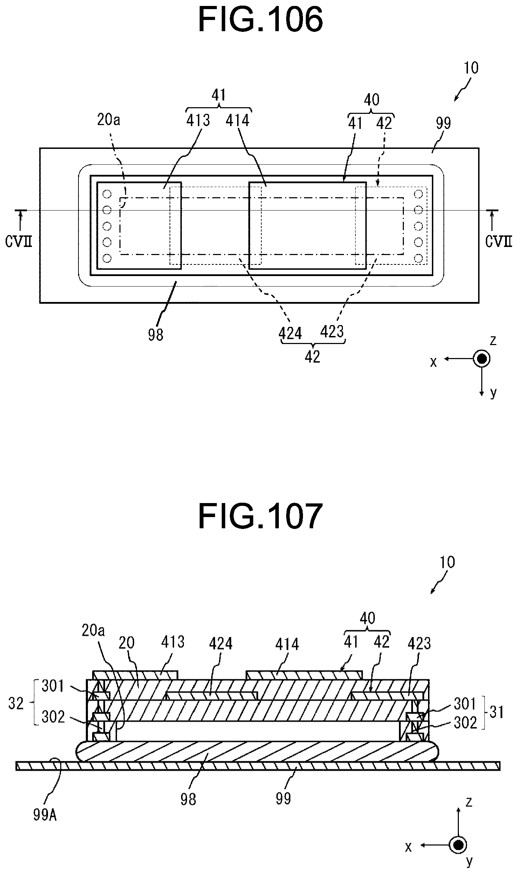

The base 20 can have the cavity 20a. FIG. 105 is an example of the resonator 10 in which the base 20 has the cavity 20a. FIG. 105 is a plan view in which the resonator 10 is oriented such that the +z direction indicates the back side in the drawing. FIG. 106 is an example in which the resonator 10 having the cavity 20a is placed on the electrical conductive body 99 to form a resonance structure. FIG. 107 is a cross-sectional view taken along line CVII-CVII illustrated in FIG. 106. The cavity 20a is positioned between the third conductor 40 and the electrical conductive body 99 in the z direction. The dielectric constant in the cavity 20a is lower than that of the base 20. Since the base 20 has the cavity 20a, an electromagnetic distance between the third conductor 40 and the electrical conductive body 99 can be shortened. The resonator 10 having the cavity 20a is not limited to one illustrated in FIGS. 105 to 107. The resonator 10 having the cavity 20a has a structure in which the fourth conductor 50 is removed from the resonator 10 illustrated in FIGS. 19A and 19B and the base 20 has the cavity 20a. The resonator 10 having the cavity 20a can be implemented by removing the fourth conductor 50 from the resonator 10 illustrated in FIGS. 1 to 62, and the like and providing the cavity 20a in the base 20.

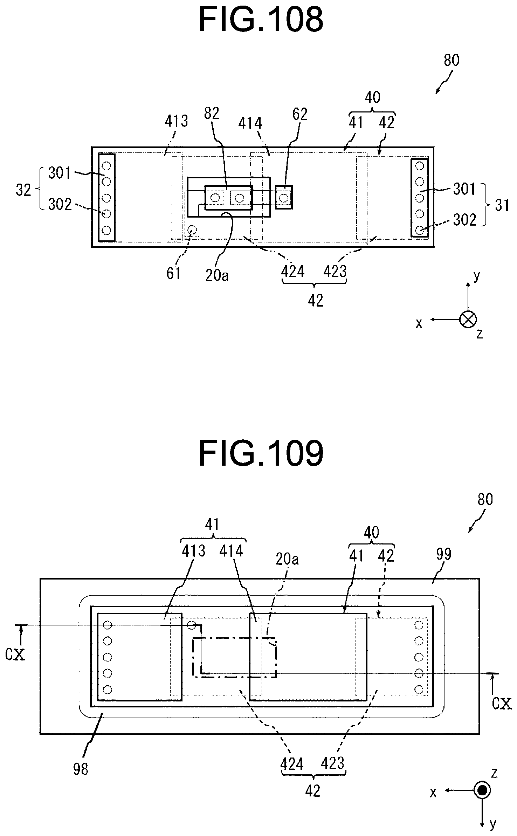

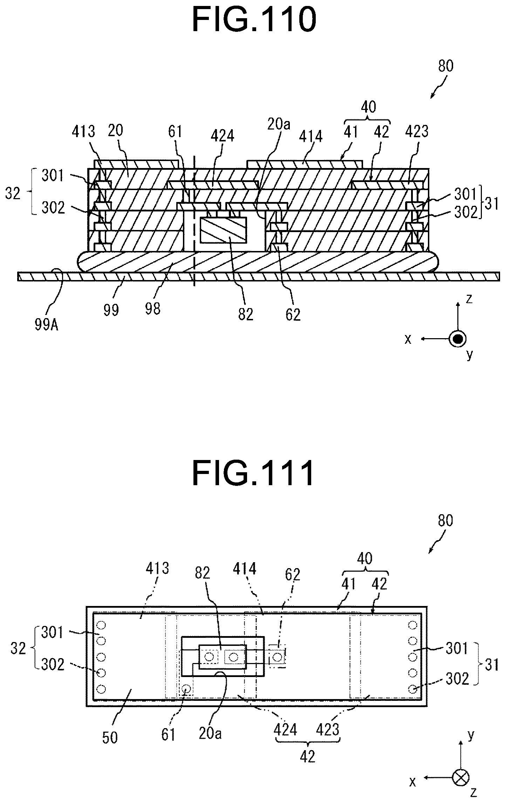

The base 20 can have the cavity 20a. FIG. 108 is an example of the wireless communication module 80 in which the base 20 has the cavity 20a. FIG. 108 is a plan view in which the wireless communication module 80 is oriented such that the +z direction indicates the back side in the drawing. FIG. 109 is an example in which the wireless communication module 80 having the cavity 20a is placed on the electrical conductive body 99 to form a resonance structure. FIG. 110 is a cross-sectional view taken along line CX-CX illustrated in FIG. 109. The wireless communication module 80 can house an electronic device in the cavity 20a. The electronic device includes a processor or a sensor. The electronic device includes the RF module 82. The wireless communication module 80 can house the RF module 82 in the cavity 20a. The RF module 82 can be positioned in the cavity 20a. The RF module 82 is connected to the third conductor 40 via the first feeding line 61. The base 20 can include a ninth conductor 62 that guides the reference potential of the RF module toward the electrical conductive body 99.

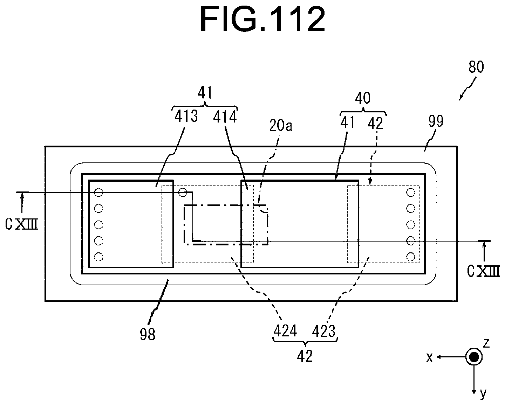

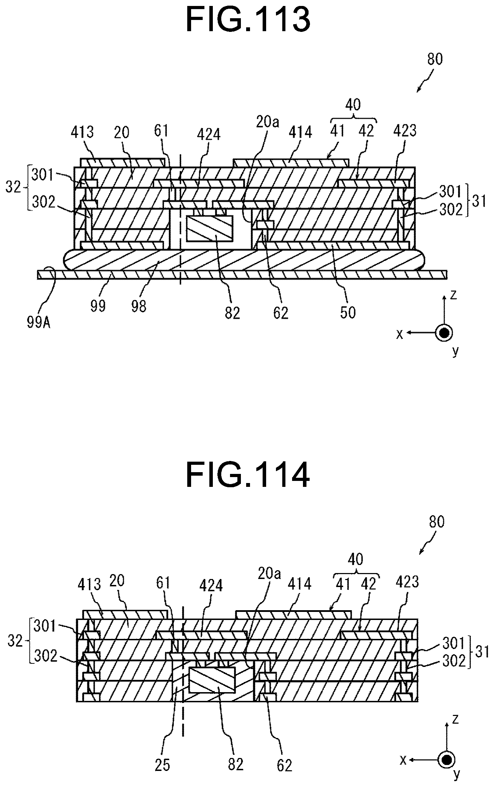

In the wireless communication module 80, a portion of the fourth conductor 50 can be omitted. The cavity 20a can be exposed to the outside through the omitted portion of the fourth conductor 50. FIG. 111 is an example of the wireless communication module 80 in which a portion of the fourth conductor 50 is omitted. FIG. 111 is a plan view in which the resonator 10 is oriented such that the +z direction indicates the back side in the drawing. FIG. 112 is an example in which the wireless communication module 80 having the cavity 20a is placed on the electrical conductive body 99 to form a resonance structure. FIG. 113 is a cross-sectional view taken along line CXIII-CXIII illustrated in FIG. 112.

The wireless communication module 80 can include the fourth base 25 in the cavity 20a. The fourth base 25 can include a resin material as a composition. The resin material is an epoxy resin, a polyester resin, a polyimide resin, a polyamideimide resin, a polyetherimide resin, and a material obtained by curing an uncured material such as a liquid crystal polymer. FIG. 114 is an example of a structure including the fourth base 25 in the cavity 20a.

The attach member 98 is a member having a viscous material on both sides of a base material, a cured or semi-cured organic material, a solder material, or an urging means. The member having a viscous material on both sides of the base material can be referred to as, for example, a double-sided tape. The cured or semi-cured organic materials can be referred to as, for example, an adhesive. The urging means is a screw, a band, or the like. The attach member 98 is a conductive member or a non-conductive member. The conductive attach member 98 is a member formed of a conductive material or a member containing a large amount of conductive material.

When the attach member 98 is non-conductive, the pair conductors 30 of the resonator 10 is capacitively coupled to the electrical conductive body 99. In this case, in the resonator 10, the pair conductors 30, the third conductor 40, and the electrical conductive body 99 form a resonant circuit. In this case, a unit structure of the resonator 10 can include the base 20, the third conductor 40, the attach member 98, and the electrical conductive body 99.

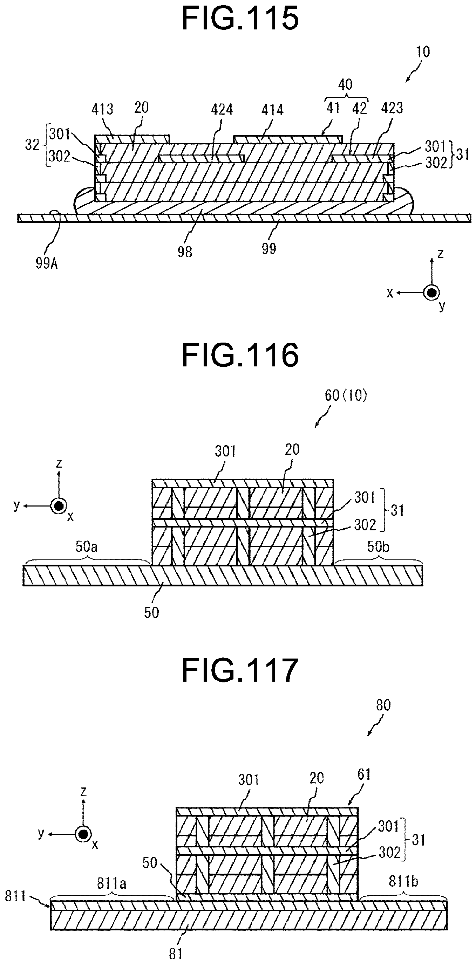

When the attach member 98 is conductive, the pair conductors 30 of the resonator 10 conduct electricity through the attach member 98. By attaching the attach member 98 to the electrical conductive body 99, a resistance value is reduced. In this case, when the pair conductors 30 face the outside in the x direction as illustrated in FIG. 115, a resistance value between the pair conductors 30 via the electrical conductive body 99 is reduced. In this case, in the resonator 10, the pair conductors 30, the third conductor 40, and the attach member 98 form a resonant circuit. In this case, a unit structure of the resonator 10 can include the base 20, the third conductor 40, and the attach member 98.

In a case where the attach member 98 is the urging means, the resonator 10 is pushed from the third conductor 40 and abuts on the electrical conductive body 99. In this case, in one example, the pair conductors 30 of the resonator 10 come into contact with the electrical conductive body 99 and conduct electricity. In this case, in one example, the pair conductors 30 of the resonator 10 are capacitively coupled to the electrical conductive body 99. In this case, in the resonator 10, the pair conductors 30, the third conductor 40, and the electrical conductive body 99 form a resonant circuit. In this case, a unit structure of the resonator 10 can include the base 20, the third conductor 40, and the electrical conductive body 99.

In general, an antenna has a resonant frequency that is changed as an electrical conductive body or a dielectric approaches. When the resonant frequency is changed significantly, an operating gain at the operating frequency is changed in the antenna. In an antenna that is used in the air or used by being brought into close to an electrical conductive body or a dielectric, it is preferable that a change in operating gain due to a change in resonant frequency is small.

In the resonator 10, the lengths of the third conductor 40 and the fourth conductor 50 in the y direction can be different from each other. The length of the third conductor 40 in the y direction is a distance between outer ends of two unit conductors positioned at opposite ends in the y direction when a plurality of unit conductors are arranged in the y direction.

As illustrated in FIG. 116, the length of the fourth conductor 50 can be larger than the length of the third conductor 40. The fourth conductor 50 includes a first wider part 50a and a second wider part 50b that extend outward from end portions of the third conductor 40 in the y direction, respectively. The first wider part 50a and the second wider part 50b are positioned outside the third conductor 40 when viewed in plan in the z direction. The base 20 can extend to the end of the third conductor 40 in the y direction. The base 20 can extend to the end of the fourth conductor 50 in the y direction. The base 20 can extend between the end of the third conductor 40 and the end of the fourth conductor 50 in the y direction.

In the resonator 10, in a case where the length of the fourth conductor 50 is larger than that of the third conductor 40, a change in resonant frequency when an electrical conductive body approaches the outer side of the fourth conductor 50 is reduced. In the resonator 10, in a case where the operating wavelength is λ₁, when the length of the fourth conductor 50 is larger than the length of the third conductor 40 by 0.075λ₁ or more, a change in resonant frequency in the operating frequency band is reduced. In the resonator 10, in a case where the operating wavelength is λ₁, when the length of the fourth conductor 50 is larger than the length of the third conductor 40 by 0.075λ₁ or more, a change in operating gain at the operating frequency f₁ is reduced. In the resonator 10, when a sum of the lengths of the first wider part 50a and the second wider part 50b in the y direction is larger than the length of the third conductor 40 by 0.075λ₁ or more, a change in operating gain at the operating frequency f₁ is reduced. The sum of the lengths of the first wider part 50a and the second wider part 50b in the y direction corresponds to a difference between the length of the fourth conductor 50 and the length of the third conductor 40.

In the resonator 10, when viewed in plan in the - z direction, the fourth conductor 50 extends at opposite sides in the y direction to be longer than the third conductor 40. In the resonator 10, in a case where the fourth conductor 50 extends at opposite sides in the y direction to be longer than the third conductor 40, a change in resonant frequency when an electrical conductive body approaches the outer side of the fourth conductor 50 is reduced. In the resonator 10, in a case where the operating wavelength is λ₁, when the fourth conductor 50 extends longer than the third conductor 40 by 0.025λ₁ or more, a change in resonant frequency in the operating frequency band is reduced. In the resonator 10, in a case where the operating wavelength is λ₁, when the fourth conductor 50 extends longer than the third conductor 40 by 0.025λ₁ or more, a change in operating gain at the operating frequency f₁ is reduced. In the resonator 10, when the length of each of the first wider part 50a and the second wider part 50b in the y direction is 0.025λ₁ or more, a change in operating gain at the operating frequency f₁ is reduced.

In the resonator 10, in a case where the operating wavelength is λ₁, when the fourth conductor 50 extends longer than the third conductor 40 by 0.025λ₁ or more, and the length of the fourth conductor 50 is larger than the length of the third conductor 40 by 0.075λ₁ or more, a change in resonant frequency in the operating frequency band is reduced. In the resonator 10, in a case where the operating wavelength is λ₁, when the fourth conductor 50 extends longer than the third conductor 40 by 0.025λ₁ or more, and the length of the fourth conductor 50 is larger than the length of the third conductor 40 by 0.075λ₁ or more, a change in operating gain in the operating frequency band is reduced. In the resonator 10, when a sum of the lengths of the first wider part 50a and the second wider part 50b in the y direction is larger than the length of the third conductor 40 by 0.075λ₁ or more, and the length of each of the first wider part 50a and the second wider part 50b in the y direction is 0.025λ₁ or more, a change in operating gain at the operating frequency f₁ is reduced.

In the first antenna 60, the length of the fourth conductor 50 can be larger than the length of the third conductor 40. In the first antenna 60, in a case where the length of the fourth conductor 50 is larger than that of the third conductor 40, a change in resonant frequency when an electrical conductive body approaches the outer side of the fourth conductor 50 is reduced. In the first antenna 60, in a case where the operating wavelength is λ₁, when the length of the fourth conductor 50 is larger than the length of the third conductor 40 by 0.075λ₁ or more, a change in resonant frequency in the operating frequency band is reduced. In the first antenna 60, in a case where the operating wavelength is λ₁, when the length of the fourth conductor 50 is larger than the length of the third conductor 40 by 0.075λ₁ or more, a change in operating gain at the operating frequency f₁ is reduced. In the first antenna 60, when a sum of the lengths of the first wider part 50a and the second wider part 50b in the y direction is larger than the length of the third conductor 40 by 0.075λ₁ or more, a change in operating gain at the operating frequency f₁ is reduced. The sum of the lengths of the first wider part 50a and the second wider part 50b in the y direction corresponds to a difference between the length of the fourth conductor 50 and the length of the third conductor 40.

In the first antenna 60, when viewed in plan in the -z direction, the fourth conductor 50 extends at opposite sides in the y direction to be longer than the third conductor 40. In the first antenna 60, in a case where the fourth conductor 50 extends at opposite sides in the y direction to be longer than the third conductor 40, a change in resonant frequency when an electrical conductive body approaches the outer side of the fourth conductor 50 is reduced. In the first antenna 60, in a case where the operating wavelength is λ₁, when the fourth conductor 50 extends longer than the third conductor 40 by 0.025λ₁ or more, a change in resonant frequency in the operating frequency band is reduced. In the first antenna 60, in a case where the operating wavelength is λ₁, when the fourth conductor 50 extends longer than the third conductor 40 by 0.025λ₁ or more, a change in operating gain at the operating frequency f₁ is reduced. In the first antenna 60, when the length of each of the first wider part 50a and the second wider part 50b in the y direction is 0.025λ₁ or more, a change in operating gain at the operating frequency f₁ is reduced.

In the first antenna 60, in a case where the operating wavelength is λ₁, when the fourth conductor 50 extends longer than the third conductor 40 by 0.025λ₁ or more, and the length of the fourth conductor 50 is larger than the length of the third conductor 40 by 0.075λ₁ or more, a change in resonant frequency is reduced. In the first antenna 60, in a case where the operating wavelength is λ₁, when the fourth conductor 50 extends longer than the third conductor 40 by 0.025λ₁ or more, and the length of the fourth conductor 50 is larger than the length of the third conductor 40 by 0.075λ₁ or more, a change in operating gain in the operating frequency band is reduced. In the first antenna 60, in a case where the operating wavelength is λ₁, when the fourth conductor 50 extends longer than the third conductor 40 by 0.025λ₁ or more, and the length of the fourth conductor 50 is larger than the length of the third conductor 40 by 0.075λ₁ or more, a change in operating gain at the operating frequency f₁ is reduced. In the first antenna 60, when a sum of the lengths of the first wider part 50a and the second wider part 50b in the y direction is larger than the length of the third conductor 40 by 0.075λ₁ or more, and the length of each of the first wider part 50a and the second wider part 50b in the y direction is 0.025λ₁ or more, a change in operating gain at the operating frequency f₁ is reduced.

As illustrated in FIG. 117, in the wireless communication module 80, the first antenna 60 is positioned on the ground conductor 811 of the circuit board 81. The fourth conductor 50 of the first antenna 60 is electrically connected to the ground conductor 811. The length of the ground conductor 811 can be larger than the length of the third conductor 40. The ground conductor 811 includes a third wider part 811a and a fourth wider part 811b that extend outward from end portions of the resonator 10 in the y direction, respectively. The third wider part 811a and the fourth wider part 811b are positioned outside the third conductor 40 when viewed in plan in the z direction. In the wireless communication module 80, the lengths of the first antenna 60 and the ground conductor 811 in the y direction can be different from each other. In the wireless communication module 80, the lengths of the third conductor 40 of the first antenna 60 and the ground conductor 811 in the y direction can be different from each other.

In the wireless communication module 80, the length of the ground conductor 811 can be larger than the length of the third conductor 40. In the wireless communication module 80, in a case where the length of the ground conductor 811 is larger than that of the third conductor 40, a change in resonant frequency when an electrical conductive body approaches the outer side of the ground conductor 811 is reduced. In the wireless communication module 80, in a case where the operating wavelength is λ₁, when the length of the ground conductor 811 is larger than the length of the third conductor 40 by 0.075λ₁ or more, a change in operating gain in the operating frequency band is reduced. In the wireless communication module 80, in a case where the operating wavelength is λ₁, when the length of the ground conductor 811 is larger than the length of the third conductor 40 by 0.075λ₁ or more, a change in operating gain at the operating frequency f₁ is reduced. In the wireless communication module 80, when a sum of the lengths of the third wider part 811a and the fourth wider part 811b in the y direction is larger than the length of the third conductor 40 by 0.075λ₁ or more, a change in operating gain at the operating frequency f₁ is reduced. The sum of the lengths of the third wider part 811a and the fourth wider part 811b in the y direction corresponds to a difference between the length of the ground conductor 811 and the length of the third conductor 40.

In the wireless communication module 80, when viewed in plan in the -z direction, the ground conductor 811 extends at opposite sides in the y direction to be longer than the third conductor 40. In the wireless communication module 80, in a case where the ground conductor 811 extends at opposite sides in the y direction to be longer than the third conductor 40, a change in resonant frequency when an electrical conductive body approaches the outer side of the ground conductor 811 is reduced. In the wireless communication module 80, in a case where the operating wavelength is λ₁, when the ground conductor 811 extends longer than the third conductor 40 by 0.025λ₁ or more, a change in operating gain in the operating frequency band is reduced. In the wireless communication module 80, in a case where the operating wavelength is λ₁, when the ground conductor 811 extends longer than the third conductor 40 by 0.025λ₁ or more, a change in operating gain at the operating frequency f₁ is reduced. In the wireless communication module 80, when the length of each of the third wider part 811a and the fourth wider part 811b in the y direction is 0.025λ₁ or more, a change in operating gain at the operating frequency f₁ is reduced.

In the wireless communication module 80, in a case where the operating wavelength is λ₁, when the ground conductor 811 extends longer than the third conductor 40 by 0.025λ₁ or more, and the length of the ground conductor 811 is larger than the length of the third conductor 40 by 0.075λ₁ or more, a change in resonant frequency in the operating frequency band is reduced. In the wireless communication module 80, in a case where the operating wavelength is λ₁, when the ground conductor 811 extends longer than the third conductor 40 by 0.025λ₁ or more, and the length of the ground conductor 811 is larger than the length of the third conductor 40 by 0.075λ₁ or more, a change in operating gain in the operating frequency band is reduced. In the wireless communication module 80, in a case where the operating wavelength is λ₁, when the ground conductor 811 extends longer than the third conductor 40 by 0.025λ₁ or more, and the length of the ground conductor 811 is larger than the length of the third conductor 40 by 0.075λ₁ or more, a change in operating gain at the operating frequency f₁ is reduced. In the wireless communication module 80, when a sum of the lengths of the third wider part 811a and the fourth wider part 811b in the y direction is larger than the length of the third conductor 40 by 0.075λ₁ or more, and the length of each of the third wider part 811a and the fourth wider part 811b in the y direction is 0.025λ₁ or more, a change in operating gain at the operating frequency f₁ is reduced.

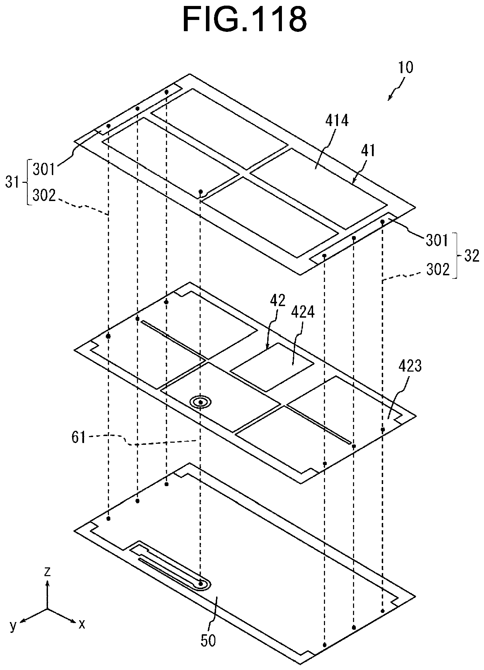

The change in resonant frequency of the first antenna 60 in the operating frequency band was examined by simulation. As a simulation model, a resonance structure in which the first antenna 60 is placed on the first surface of the circuit board 81 including the ground conductor 811 on the first surface was adopted. FIG. 118 is a perspective view illustrating a conductor shape of the first antenna 60 used in the following simulation. The first antenna 60 had a length of 13.6 [mm] in the x direction, a length of 7 [mm] in the y direction, and a length of 1.5 [mm] in the z direction. A difference between a resonant frequency of the resonance structure in a free space and a resonant frequency when the resonance structure is placed on a 100 [millimeter square (mm²)] metal plate was obtained.

In a model of a first simulation, the first antenna 60 was placed at the center of the ground conductor 811 and a difference in resonant frequency between a case of being in the free space and a case of being on the metal plate was obtained while sequentially changing the length of the ground conductor 811 in the y direction. In the model of the first simulation, the length of the ground conductor 811 in the x direction was fixed to 0.13λs. Although the resonant frequency in the free space is changed depending on the length of the ground conductor 811 in the y direction, the resonant frequency of the resonance structure in the operating frequency band is about 2.5 [gigahertz (GHz)]. The wavelength at 2.5 [GHz] is λs. Table 1 shows results of the first simulation.

**Table 1**

| [mm] | [GHz] |
|---|---|
| 9 | 0.041 |
| 11 | 0.028 |
| 13 | 0.018 |
| 15 | 0.011 |
| 17 | 0.010 |
| 19 | 0.009 |
| 21 | 0.010 |
| 23 | 0.006 |
| 25 | 0.006 |
| 30 | 0.008 |
| 60 | 0.007 |

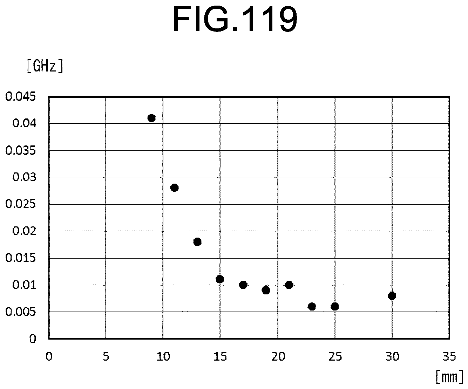

A graph corresponding to the results shown in Table 1 is illustrated in FIG. 119. In FIG. 119, a horizontal axis represents a difference in length between the ground conductor 811 and the first antenna 60, and a vertical axis represents a difference in resonant frequency between the case of being in the free space and the case of being on the metal plate. In FIG. 119, the vertical axis is in gigahertz (GHz) and the horizontal axis is in millimeter (mm). From FIG. 119, it was assumed that the change in resonant frequency is in a first linear region expressed by y = a₁x + b₁ and a second linear region expressed by y = c₁. Then, a₁, b₁, and c₁ were calculated from the results shown in Table 1 by the least square method. As a result of the calculation, a₁ = -0.600, b₁ = 0.052, and c₁ = 0.008. An intersection of the first linear region and the second linear region was 0.0733λs. From the above, it was found that when the length of the ground conductor 811 is larger than the first antenna 60 by more than 0.0733λs, the change in the resonant frequency is reduced.

In a model of a second simulation, a difference in resonant frequency between a case of being in the free space and a case of being on the metal plate was obtained while sequentially changing a place where the first antenna 60 is positioned from the end of the ground conductor 811 in the y direction. In the model of the second simulation, the length of the ground conductor 811 in the y direction was fixed to 25 [mm]. Although the resonant frequency is changed depending on the position on the ground conductor 811, the resonant frequency of the resonance structure in the operating frequency band is about 2.5 [GHz]. The wavelength at 2.5 [GHz] is λs. Table 2 shows results of the second simulation.

**Table 2**

| [λ] | [GHz] |
|---|---|
| 0.004 | 0.033 |
| 0.013 | 0.019 |
| 0.021 | 0.013 |
| 0.029 | 0.012 |
| 0.038 | 0.010 |
| 0.046 | 0.008 |
| 0.054 | 0.010 |
| 0.071 | 0.006 |

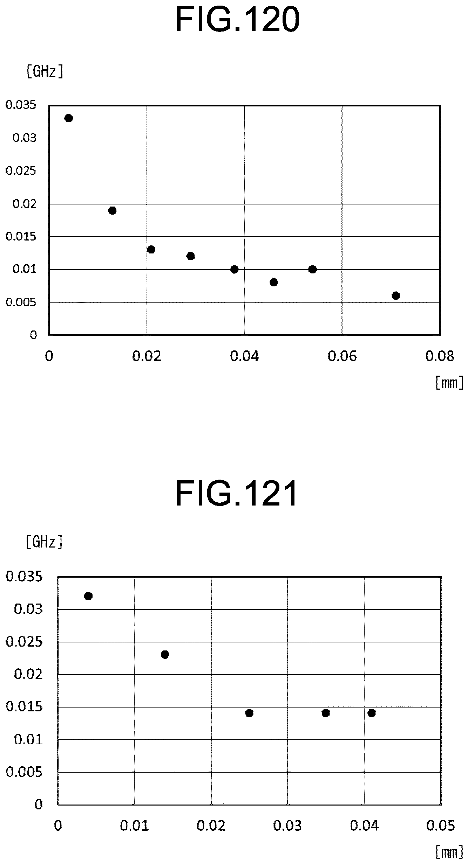

A graph corresponding to the results shown in Table 2 is illustrated in FIG. 120. In FIG. 120, a horizontal axis represents a position of the first antenna 60 from the end of the ground conductor 811, and a vertical axis represents a difference in resonant frequency between the case of being in the free space and the case of being on the metal plate. In FIG. 120, the vertical axis is in gigahertz (GHz) and the horizontal axis is in millimeter (mm). From FIG. 120, it was assumed that the change in resonant frequency is in a first linear region expressed by y = a₂x + b₂ and a second linear region expressed by y = c₂. Then, a₂, b₂ and c₂ were calculated by the least square method. As a result of the calculation, a₂ = -1.200, b₂ = 0.034, and c₂ = 0.009. An intersection of the first linear region and the second linear region was 0.0227λs. From the above, it was found that when the first antenna 60 is positioned at an inner position corresponding to more than 0.0227λs from the end of the ground conductor 811, the change in the resonant frequency is reduced.

In a model of a third simulation, a difference in resonant frequency between a case of being in the free space and a case of being on the metal plate was obtained while sequentially changing a place where the first antenna 60 is positioned from the end of the ground conductor 811 in the y direction. In the model of the third simulation, the length of the ground conductor 811 in the y direction was fixed to 15 [mm]. In the model of the third simulation, the total length of the ground conductor 811 extending outward from the resonator 10 in the y direction was 0.075λs. In the third simulation, the ground conductor 811 is shorter than that in the second simulation, and the resonant frequency is easily changed. Although the resonant frequency is changed depending on the position on the ground conductor 811, the resonant frequency of the resonance structure in the operating frequency band is about 2.5 [GHz]. The wavelength at 2.5 [GHz] is λs. Table 3 shows results of the second simulation.

**Table 3**

| [λ] | [GHz] |
|---|---|
| 0.004 | 0.032 |
| 0.014 | 0.023 |
| 0.025 | 0.014 |
| 0.035 | 0.014 |
| 0.041 | 0.014 |

A graph corresponding to the results shown in Table 3 is illustrated in FIG. 121. In FIG. 121, a horizontal axis represents a position of the first antenna 60 from the end of the ground conductor 811, and a vertical axis represents a difference in resonant frequency between the case of being in the free space and the case of being on the metal plate. In FIG. 121, the vertical axis is in gigahertz (GHz) and the horizontal axis is in millimeter (mm). From FIG. 121, it was assumed that the change in resonant frequency is in a first linear region expressed by y = a₃X + b₃ and a second linear region expressed by y = C₃. Then, a₃, b₃ and c₃ were calculated by the least square method. As a result of the calculation, a_{3 =} -0.878, b₃ = 0.036, and C₃ = 0.014. An intersection of the first linear region and the second linear region was 0.0247λs. From the above, it was found that when the first antenna 60 is positioned at an inner position corresponding to more than 0.0247λs from the end of the ground conductor 811, the change in the resonant frequency is reduced.

From the result of the third simulation, which was under more severe conditions than the second simulation, it was found that when the first antenna 60 is positioned at an inner position corresponding to more than 0.025λs from the end of the ground conductor 811, the change in the resonant frequency is reduced.

In the first simulation, the second simulation, and the third simulation, the length of the ground conductor 811 in the y direction is larger than the length of the third conductor 40 in the y direction. Even in a case where the length of the fourth conductor 50 in the y direction is larger than the length of the third conductor 40 in the y direction in the resonator 10, it is possible to reduce the change in resonant frequency when a conductor is brought close to the resonator 10 from the fourth conductor 50. In a case where the length of the fourth conductor 50 in the y direction is larger than the length of the third conductor 40 in the y direction, the resonator 10 can reduce the change in resonant frequency even when the ground conductor 811 and the circuit board 81 are omitted.

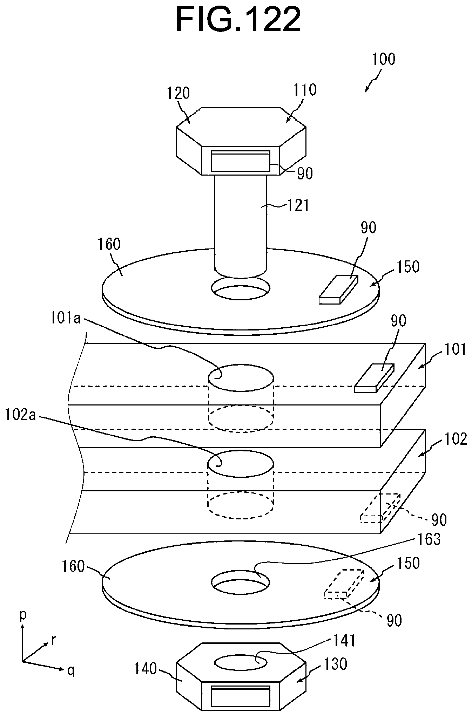

FIG. 122 is an external view illustrating one example of embodiments of a wireless communication fastener 100. The wireless communication fastener 100 includes at least one of a wireless communication bolt 110, a wireless communication nut 130, or a wireless communication washer 150. The wireless communication fastener 100 can include a bolt 120 instead of the wireless communication bolt 110. The wireless communication fastener 100 can include a nut 140 instead of the wireless communication nut 130. The wireless communication fastener 100 can include a washer 160 instead of the wireless communication washer 150. In the wireless communication fastener 100, the wireless communication washer 150 can be omitted.

The bolt 120 includes a shaft part 121. In the bolt 120, a thread is provided on an outer circumference of the shaft part 121. The nut 140 has a screw hole 141. In the nut 140, a thread is provided on an inner circumference of the screw hole 141. The bolt 120 is engaged with the nut 140. The shaft part 121 of the bolt 120 is engaged with the screw hole 141 of the nut 140. The bolt 120 can be referred to as an external thread. The nut 140 can be referred to as an internal thread. The bolt 120 and the nut 140 can be collectively referred to as a screw thread. The wireless communication bolt 110 and the wireless communication nut 130 can be collectively referred to as a wireless communication screw.

In one example of embodiments, the wireless communication fastener 100 fastens a first fastening body 101 and a second fastening body 102. The first fastening body 101 and the second fastening body 102 have through holes 101a and 102a that are continuous with each other, respectively, and the shaft part 121 of the bolt 120 is inserted into the through holes 101a and 102a. The first fastening body 101 and the second fastening body 102 are fastened by the bolt 120 and the nut 140. In one example of embodiments, the wireless communication fastener 100 fastens a third fastening body fastened to the bolt 120 and a fourth fastening body fastened to the nut 140. In one example of embodiments, the wireless communication fastener 100 fastens at least one of the first fastening body 101 independent of the bolt 120 and the nut 140 or the second fastening body 102 independent of the bolt 120 and the nut 140, and at least one of the third fastening body or the fourth fastening body.

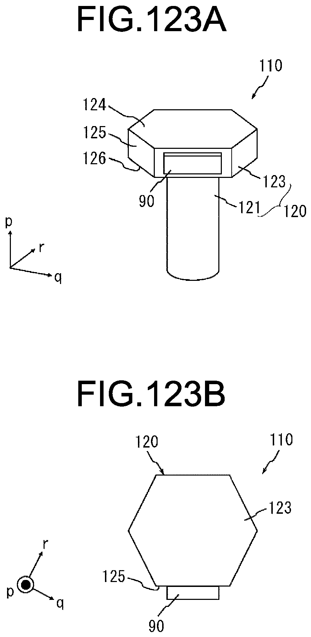

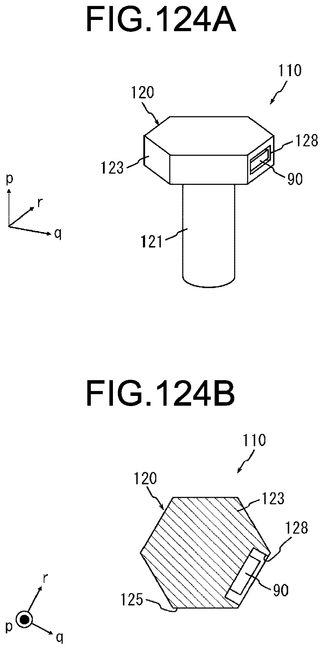

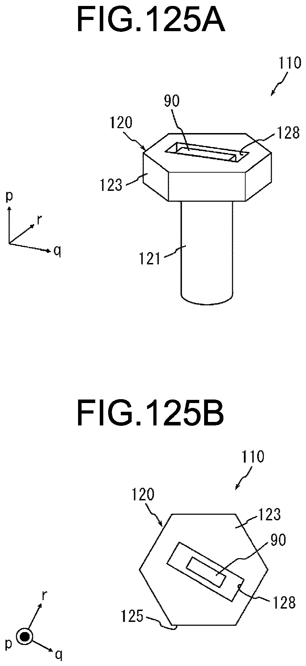

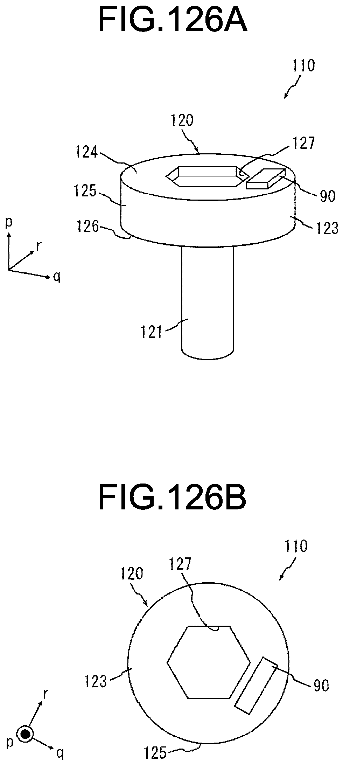

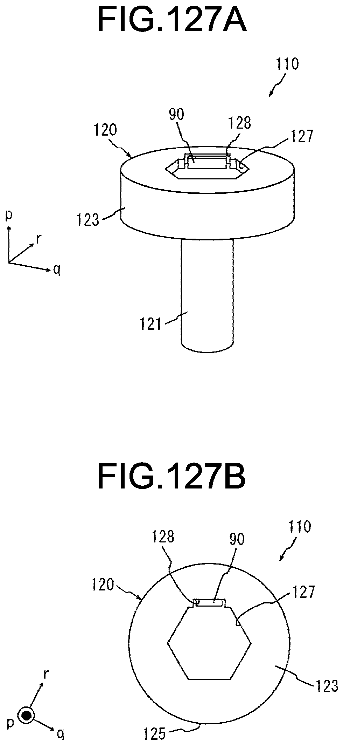

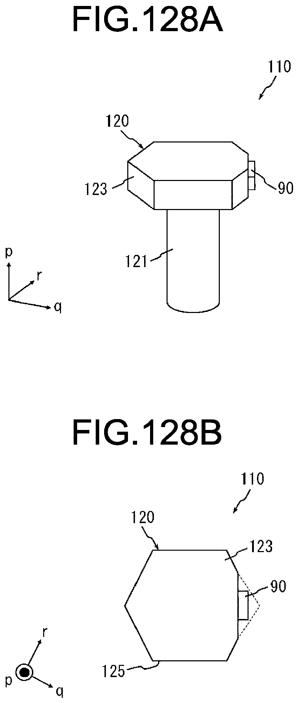

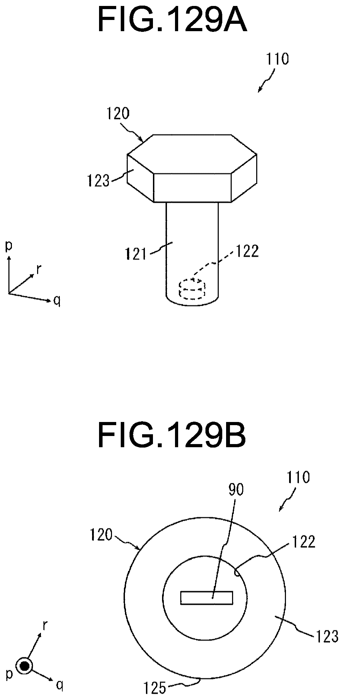

FIGS. 123A to 129B are schematic views illustrating an embodiment of the wireless communication bolt 110. FIGS. 123A, 124A, 125A, 126A, 127A, 128A, and 129A are perspective views each illustrating an embodiment of the wireless communication bolt 110. FIGS. 123B, 125B, 126B, 127B, 128B, and 129B are plan views each illustrating an embodiment of the wireless communication bolt 110. FIG. 124B is a cross-sectional view illustrating an embodiment of the wireless communication bolt 110.

The wireless communication bolt 110 can include the wireless communication module 80 and the bolt 120. The wireless communication bolt 110 may use various bolts as the bolt 120. The bolt 120 includes a shaft part 121. A thread is provided on at least a portion of an outer circumference of the shaft part 121. The first antenna 60 can be positioned on the outer circumference of the shaft part 121. The first antenna 60 can be positioned at a tip end portion of the shaft part 121.

The shaft part 121 can have a first groove 122. The first groove 122 can accommodate the first antenna 60. The first groove 122 can accommodate the wireless communication module 80. The first groove 122 can accommodate the wireless communication device 90 including the wireless communication module 80. The first groove 122 can be a part of a case of the wireless communication device 90.

For example, the bolt 120 can have the first groove 122 at a tip end portion of the shaft part 121. Since the bolt 120 has the first groove 122 at the tip end portion of the shaft part 121, electromagnetic waves can be easily radiated to the outside of the first antenna 60 when the bolt 120 is engaged with the nut 140. The position of the first groove 122 is not limited to the tip end portion of the shaft part 121, and for example, the bolt 120 can have the first groove 122 in the outer circumference of the shaft part 121.

The bolt 120 can include a head part 123 that is integrated with the shaft part 121. The head part 123 is positioned at an end of the shaft part 121. The outer diameter of the head part 123 is larger than the outer diameter of the shaft part 121. The head part 123 protrudes from the shaft part 121. The head part 123 can include a head surface 124, an around surface 125, and a seating surface 126.

The shape of an outer periphery of the head part 123 can be a polygon. Examples of the shape of the outer periphery of the head part 123 include a triangle, a quadrangle, and a hexagon. When the first antenna 60 is positioned on the outer periphery of the head part 123, examples of the shape of the outer periphery of the head part 123 include a quadrangle, a pentagon, and a heptagon. The bolt 120 including the polygonal head part 123 is tightened with a tool such as a wrench. The wrench includes a variety of wrenches such as an open end wrench and a box end wrench. The open end wrench includes a spanner. The shape of the outer periphery of the head part 123 is not limited to a polygon, and can be a shape corresponding to various tools such as a hexa-lobular type tool.

The head part 123 can include a second groove 127. The second groove 127 can have a polygonal inner periphery. Examples of the shape of the inner periphery of the second groove 127 include a triangle, a quadrangle, a hexagon, and a star shape. The bolt 120 in which the second groove 127 has the polygonal inner periphery is tightened with a tool such as a wrench. The wrench includes a variety of wrenches such as a socket screw key. The shape of the inner periphery of the second groove 127 is not limited to a polygon, and can be a shape corresponding to various tools such as a plus type tool, a minus type tool, or a hexa-lobular type tool.

The head part 123 can include a third groove 128. The third groove 128 can accommodate the first antenna 60. The third groove 128 can accommodate the wireless communication module 80. The third groove 128 can accommodate the wireless communication device 90 including the wireless communication module 80. The third groove 128 can be a part of the case of the wireless communication device 90. The third groove 128 can have a function as the second groove 127.

For example, the bolt 120 can have the third groove 128 in the head surface 124 of the head part 123. For example, the bolt 120 can have the third groove 128 in the around surface 125 of the head part 123. Since the bolt 120 has the third groove 128 at the head surface 124 or the around surface 125, electromagnetic waves can be easily radiated to the outside of the first antenna 60 when the bolt 120 is engaged with the nut 140. For example, the bolt 120 can have the third groove 128 in an inner peripheral surface of the second groove 127.

The third groove 128 may be integrated with the second groove 127. The third groove 128 and the second groove 127 can be integrally recessed from the head surface 124. The third groove 128 can be recessed from the inner peripheral surface of the second groove 127.

The bolt 120 is an eye bolt having a ring-shaped head part 123 or a wing bolt having a handle on a head thereof. The first antenna 60 can be positioned on the surface of the bolt 120. The wireless communication bolt 110 does not have to have the first groove 122 and the third groove 128. The first antenna 60 can be positioned on a tip end of the shaft part 121, on the head surface 124 of the head part 123, or on the around surface 125 of the head part 123. The first antenna 60 can be positioned on a ring portion of the eye bolt or on a handle portion of the wing bolt.

When the bolt 120 that does not include the wireless communication module 80 is used instead of the wireless communication bolt 110, in the bolt 120, the first groove 122 and the third groove 128 can be omitted. When the bolt 120 that does not include the wireless communication module 80 is used instead of the wireless communication bolt 110, the bolt 120 can have the second groove 127 as necessary.

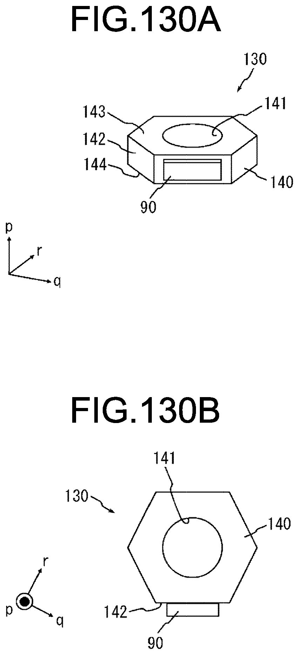

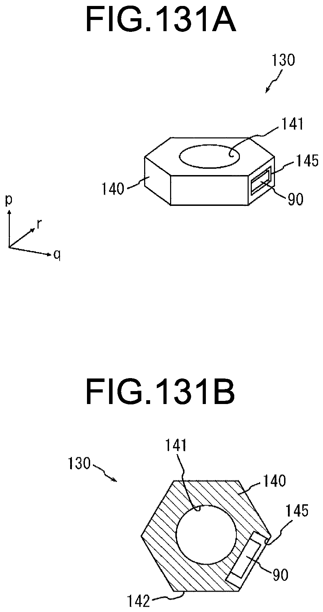

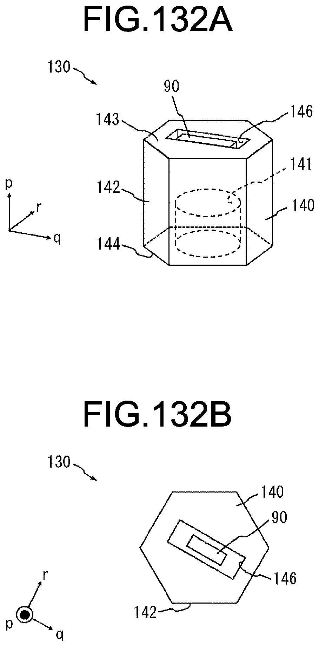

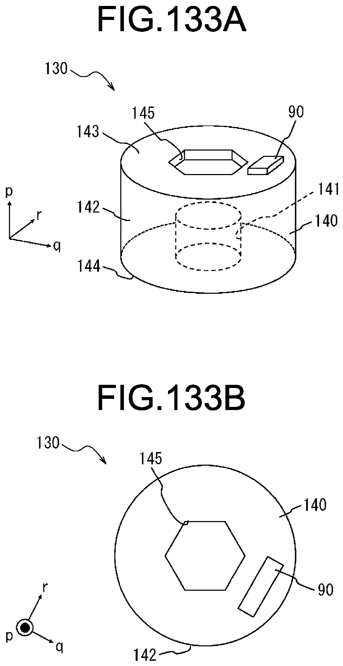

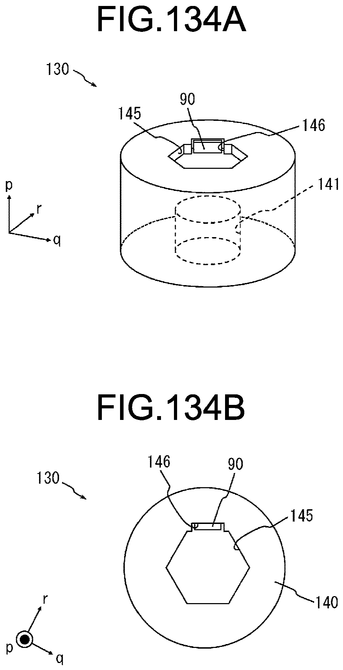

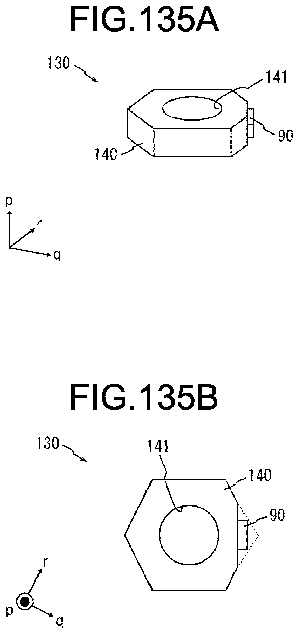

FIGS. 130A to 135B are schematic views each illustrating an embodiment of the wireless communication nut 130. FIGS. 130A, 131A, 132A, 133A, 134A, and 135A are perspective views each illustrating an embodiment of the wireless communication nut 130. FIGS. 130B, 132B, 133B, 134B, and 135B are plan views each illustrating an embodiment of the wireless communication nut 130. FIG. 131B is a cross-sectional view illustrating an embodiment of the wireless communication nut 130.

The wireless communication nut 130 can include the wireless communication module 80 and the nut 140. The wireless communication nut 130 may use various nuts as the nut 140. The nut 140 includes a screw hole 141, an around surface 142, a head surface 143, and a seating surface 144. The screw hole 141 is engaged with the thread of the shaft part 121 of the bolt 120. The screw hole 141 can penetrate from the seating surface 144 to the head surface 143. The screw hole 141 may be a non-penetrating recess in the seating surface 144. When the bolt 120 without the head part 123 is used, the wireless communication fastener 100 includes two nuts 140. In the wireless communication fastener 100, the first fastening body 101 and the second fastening body 102 are fastened between the two nuts 140.

The shape of an outer periphery of the nut 140 can be a polygon. Examples of the shape of the outer periphery of the nut 140 include a triangle, a quadrangle, and a hexagon. When the first antenna 60 is positioned on the outer periphery of the nut 140, examples of the shape of the outer periphery of the nut 140 include a quadrangle, a pentagon, and a heptagon. The bolt 120 including the polygonal nut 140 is tightened with a tool such as a wrench. The wrench includes a variety of wrenches such as an open end wrench and a box end wrench. The open end wrench includes a spanner. The shape of the outer periphery of the nut 140 is not limited to a polygon, and can be a shape corresponding to various tools such as a hexa-lobular type tool.

The nut 140 can include a fourth groove 145. The fourth groove 145 can have a polygonal inner periphery. Examples of the shape of the inner periphery of the fourth groove 145 include a triangle, a quadrangle, a hexagon, and a hexa-lobular shape. The nut 140 in which the fourth groove 145 has the polygonal inner periphery is tightened with a tool such as a wrench. The wrench includes a variety of wrenches such as a socket screw key. The shape of the inner periphery of the fourth groove 145 is not limited to a polygon, and can be a shape corresponding to various tools such as a plus type tool, a minus type tool, or a hexa-lobular type tool.

The nut 140 can include a fifth groove 146. The fifth groove 146 can accommodate the first antenna 60. The fifth groove 146 can accommodate the wireless communication module 80. The fifth groove 146 can accommodate the wireless communication device 90 including the wireless communication module 80. The fifth groove 146 can be a part of the case of the wireless communication device 90. The fifth groove 146 can have a function as the fourth groove 145.

For example, the nut 140 can have the fifth groove 146 in the head surface 143. For example, the nut 140 can have the fifth groove 146 in the around surface 142. Since the nut 140 has the fifth groove 146 at the around surface 142 or the head surface 143, electromagnetic waves can be easily radiated to the outside of the first antenna 60 when the nut 140 is engaged with the bolt 120. For example, the nut 140 can have the fifth groove 146 in an inner peripheral surface of the fourth groove 145.

The fifth groove 146 may be integrated with the fourth groove 145. The fifth groove 146 and the fourth groove 145 can be integrally recessed from the head surface 143. The fifth groove 146 can be recessed from the inner peripheral surface of the fourth groove 145.

The nut 140 is an eye nut having a ring-shaped head surface 143 or a wing nut having a handle. The first antenna 60 can be positioned on the surface of the nut 140. The wireless communication nut 130 does not have to have the fifth groove 146. The first antenna 60 can be positioned on the head surface 143 or the around surface 142. The first antenna 60 can be positioned on a ring portion of the eye nut or on a handle portion of the wing nut.

When the nut 140 that does not include the wireless communication module 80 is used instead of the wireless communication nut 130, in the nut 140, the fifth groove 146 can be omitted. When the nut 140 that does not include the wireless communication module 80 is used instead of the wireless communication nut 130, the nut 140 can have the fourth groove 145 as necessary.

The wireless communication washer 150 can include the wireless communication module 80 and the washer 160. The washer 160 is positioned between each of the bolt 120 and the nut 140, and a fastening target. The wireless communication washer 150 can use various washers as the washer 160. Examples of the washer 160 include a plain washer, a spring washer, a disc spring washer, a wave washer, or a tongued washer. The washer 160 includes a terminal lug. The terminal lug has an opening through which the shaft part 121 passes.

The washers 160 can include a first washer and a second washer. The washer 160 can include only one of the first washer or the second washer. For example, the first washer is positioned between the first fastening body 101 and the head part 123 of the bolt 120. For example, the second washer is positioned between the second fastening body 102 and the nut 140.

Each of the first washer and the second washer can be an assembly of a plurality of washers. At least one of the first washer or the second washer may be, for example, a stack of a plain washer and a spring washer.

The washer 160 has a second through hole 163. The diameter of the second through hole 163 is smaller than that of the head part 123 of the bolt 120. The outer diameter of the first washer can be larger than the outer diameter of the head part 123 of the bolt 120. At least a portion of the first washer can extend outward from the head part 123 of the bolt 120. The outer diameter of the second washer can be larger than the outer diameter of the nut 140. At least a portion of the second washer can extend outward from the nut 140.

In the wireless communication washer 150, the first antenna 60 is positioned on a portion extending outward from the head part 123 of the bolt 120 or a portion extending outward from the nut 140. When the washer 160 that does not include the wireless communication module 80 is used instead of the wireless communication washer 150, in the washer 160, the portion extending outward from the head part 123 of the bolt 120, and the portion extending outward from the nut 140 can be omitted, the portions being unnecessary for the function of the washer.

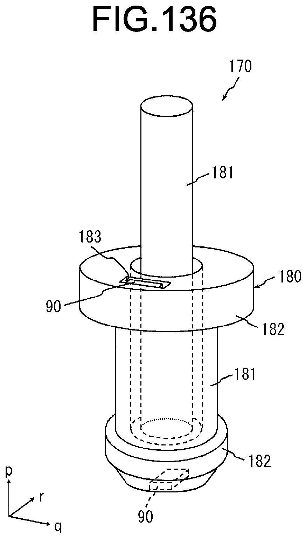

FIG. 136 is a perspective view illustrating an embodiment of a wireless communication rivet 170. The wireless communication fastener 100 can use a rivet 180 instead of the bolt 120 and the nut 140. The wireless communication rivet 170 includes the wireless communication module 80 and the rivet 180. The rivet 180 includes a body part 181 and a head part 182. In the wireless communication module 80, the first antenna 60 is positioned on the head part 182. The wireless communication rivet 170 can use various rivets as the rivet 180. The head part 182 can be referred to as a rivet head, a mandrel head, or a flange. The body part 181 may be referred to as a sleeve or a mandrel.

The head part 182 can have a sixth groove 183. The sixth groove 183 can accommodate the first antenna 60. The sixth groove 183 can accommodate the wireless communication module 80. The third groove 128 can accommodate the wireless communication device 90 including the wireless communication module 80. The third groove 128 can be a part of the case of the wireless communication device 90.

The wireless communication rivet 170 can include the wireless communication module 80 attached after fastening the rivet 180. The wireless communication rivet 170 can include the wireless communication module 80 attached on the body part 181 after fastening.

The wireless communication fastener 100 can include at least one wireless communication device 90 including the wireless communication module 80. The wireless communication device 90 includes a sensor 92. In one example of embodiments, the wireless communication fastener 100 detects the loosening of a corresponding fastening portion by the sensor 92. In one example of embodiments, the wireless communication fastener 100 is used to search for mechanical resonance points of a fastened structure by the sensor 92.

Examples of the sensor 92 of the wireless communication device 90 include an acceleration sensor (to detect vibration and rotation), an angular velocity sensor (to detect rotation and vibration), a geomagnetic hall sensor or geomagnetic sensor (to detect rotation), a magnet sensor, an optical sensor or optical hall sensor (to detect the loosening by light leakage), and a pressure sensor (to detect pressing). The acceleration sensor detects the rotation of the wireless communication fastener 100 by using applied acceleration. The angular velocity sensor detects the rotation of the wireless communication fastener 100 by using the applied angular velocity. The geomagnetic sensor detects the rotation of the wireless communication fastener 100 by using a change in direction of geomagnetism. The magnet sensor detects the relative rotation of the wireless communication fastener 100 by using a change in magnetic force. When a magnet sensor is used as the sensor 92, a magnet is attached to any one of another component of the wireless communication fastener 100 or an object to be fastened. The optical sensor detects leaked light caused by the loosening of the wireless communication fastener 100. The pressure sensor detects a pressure change caused by the loosening of the wireless communication fastener 100. The wireless communication fastener 100 and these sensors 92 may detect breakage instead of loosening. For example, the sensor 92 may detect breakage of a corresponding lock wire by using a change in pressure of the lock wire.

As described above, in embodiments of the present disclosure, the wireless communication bolt 110 includes the bolt 120 and the wireless communication module 80. The bolt 120 includes the shaft part 121 and the head part 123. The wireless communication module 80 includes an antenna. The antenna includes the first conductor 31, the second conductor 32 facing the first conductor 31 along the first axis, a plurality of third conductors 40 positioned between the first conductor 31 and the second conductor 32 and extending along the first axis, the fourth conductor 50 connected to the first conductor 31 and the second conductor 32 and extending along the first axis, and the first feeding line 61 which is a feeding line electromagnetically connected to the third conductor 40.

In one example, the fourth conductor 50 faces the head part 123.

In one example, the head part 123 has a flat portion at the top thereof. The fourth conductor 50 faces the flat portion of the head part 123.

In one example, the head part 123 has a flat portion at the top thereof. The flat portion of the head part 123 has the second groove 127 which is a recess having a hexagonal shape. The antenna is positioned around the second groove 127. The first axis extends along an outer periphery of the hexagonal shape of the second groove 127.

In one example, the head part 123 has a flat portion at the top thereof. The flat portion of the head part 123 has the third groove 128 which is a recess. The fourth conductor 50 faces a bottom surface of the third groove 128.

In one example, the head part 123 has an outer periphery having a polygonal shape. The fourth conductor 50 faces one side of the polygonal shape of the head part 123.

In one example, the head part 123 has an outer periphery having a polygonal shape. The head part 123 has the third groove 128 that is a recess at one side of the polygonal shape. The fourth conductor 50 faces a bottom surface of the third groove 128.

In one example, the polygonal shape of the head part 123 is a triangle, a quadrangle, a pentagon, a hexagon, or a heptagon.

In one example, the head part 123 has a ring on the top thereof. The first axis of the antenna is along a circumferential direction of the ring of the head part 123.

In one example, the antenna is positioned at the tip end portion of the shaft part 121.

In one example, the wireless communication module 80 includes the sensor 92.

In one example, the sensor 92 is a geomagnetic sensor, a pressure sensor, an acceleration sensor, an angular velocity sensor, or an optical hall sensor.

In one example, the sensor 92 is a geomagnetic hall sensor.

In embodiments of the present disclosure, the wireless communication fastener 100 includes the wireless communication bolt 110 and the nut 140 that includes a magnet facing the geomagnetic hall sensor.

In embodiments of the present disclosure, the wireless communication fastener 100 includes the wireless communication bolt 110, the washer 160 that includes a magnet facing the geomagnetic hall sensor, and the nut 140.

In embodiments of the present disclosure, the wireless communication fastener 100 includes the wireless communication bolt 110 and the nut 140.

In embodiments of the present disclosure, the wireless communication nut 130 includes the nut 140 and the wireless communication module 80. The wireless communication module 80 includes an antenna. The antenna includes the first conductor 31, the second conductor 32 facing the first conductor 31 along the first axis, a plurality of third conductors 40 positioned between the first conductor 31 and the second conductor 32 and extending along the first axis, the fourth conductor 50 connected to the first conductor 31 and the second conductor 32 and extending along the first axis, and the first feeding line 61 which is a feeding line electromagnetically connected to the third conductor 40.

In one example, the fourth conductor 50 faces the nut 140.

In one example, the nut 140 has an outer periphery having a polygonal shape. The fourth conductor 50 faces one side of the polygonal shape of the nut 140.

In one example, the nut 140 has an outer periphery having a polygonal shape. The nut 140 has the fourth groove 145 that is a recess at one side of the polygonal shape. The fourth conductor 50 faces a bottom surface of the fourth groove 145.

In one example, the polygonal shape of the nut 140 is a triangle, a quadrangle, a pentagon, a hexagon, or a heptagon.

In one example, the nut 140 has the screw hole 141 which is a through hole having a screw groove. The antenna is positioned around the screw hole 141. The first axis extends along an outer circumference of the screw hole 141.

In one example, the nut 140 has a ring. The first axis of the antenna is along a circumferential direction of the ring of the nut 140.

In one example, the wireless communication module 80 includes the sensor 92.

In one example, the sensor 92 is a geomagnetic sensor, a pressure sensor, an acceleration sensor, or an angular velocity sensor.

In one example, the sensor 92 is a geomagnetic hall sensor.

In embodiments of the present disclosure, the wireless communication fastener 100 includes the wireless communication nut 130, and the bolt 120 that includes a magnet facing the geomagnetic hall sensor.

In embodiments of the present disclosure, the wireless communication fastener 100 includes the wireless communication nut 130, the washer 160 that includes a magnet facing the geomagnetic hall sensor, and the bolt 120.

In embodiments of the present disclosure, the wireless communication fastener 100 includes the wireless communication nut 130 and the bolt 120.

In embodiments of the present disclosure, the wireless communication washer 150 includes the washer 160 and the wireless communication module 80. The washer 160 has an extension extending outward from an outer periphery of the nut 140 or the bolt 120. The wireless communication module 80 includes an antenna. The antenna includes the first conductor 31, the second conductor 32 facing the first conductor 31 along the first axis, a plurality of third conductors 40 positioned between the first conductor 31 and the second conductor 32 and extending along the first axis, the fourth conductor 50 connected to the first conductor 31 and the second conductor 32 and extending along the first axis, and the first feeding line 61 which is a feeding line electromagnetically connected to the third conductor 40.

In one example, the antenna is positioned on the extension of the washer 160.

In one example, the outer diameter of the washer 160 is larger than the outer diameter of the nut 140 or bolt 120.

In one example, the wireless communication module 80 includes the sensor 92.

In one example, the sensor 92 is a geomagnetic sensor, a pressure sensor, an acceleration sensor, or an angular velocity sensor.

In one example, the sensor 92 is a geomagnetic hall sensor.

In embodiments of the present disclosure, the wireless communication fastener 100 includes the wireless communication washer 150, the bolt 120 that includes a magnet facing the geomagnetic hall sensor, and the nut 140.

In embodiments of the present disclosure, the wireless communication fastener 100 includes the wireless communication washer 150, the nut 140 that includes a magnet facing the geomagnetic hall sensor, and the bolt 120.

In embodiments of the present disclosure, the wireless communication fastener 100 includes the wireless communication washer 150, the bolt 120, and the nut 140.

A structure according to embodiments of the present disclosure includes the wireless communication fastener 100, and is fixed with the wireless communication fastener 100.

In embodiments of the present disclosure, the wireless communication rivet 170 includes the rivet 180 and the wireless communication module 80. The rivet 180 includes the head part 182. The wireless communication module 80 includes an antenna. The antenna includes the first conductor 31, the second conductor 32 facing the first conductor 31 along the first axis, a plurality of third conductors 40 positioned between the first conductor 31 and the second conductor 32 and extending along the first axis, the fourth conductor 50 connected to the first conductor 31 and the second conductor 32 and extending along the first axis, and the first feeding line 61 which is a feeding line electromagnetically connected to the third conductor 40.

In one example, the fourth conductor 50 faces the head part 182.

A structure according to embodiments of the present disclosure includes the wireless communication rivet 170 and is fixed with the wireless communication rivet 170.

The configurations according to the present disclosure are not limited to the above-described embodiments and can be changed or modified in a variety of manners. For example, functions and the like of each constituent element and the like can be rearranged without a logical inconsistency, and a plurality of constituent elements can be combined or a constituent element can be subdivided.

The drawings illustrating the configurations of the present disclosure are schematic. The drawings are not necessarily to scale.

In the present disclosure, descriptions such as "first", "second", and "third" are examples of an identifier for distinguishing a corresponding component. The components distinguished by the descriptions such as "first" and "second" in the present disclosure can exchange the numbers thereof with each other. For example, the first frequency and the second frequency can exchange the identifiers "first" and "second" with each other. The exchange of the identifier is made simultaneously. Even after exchanging the identifiers, the components are distinguished from each other. The identifier may be removed. The component from which the identifier is removed is distinguished by a reference sign. For example, the first conductor 31 can be the conductor 31. The identifiers such as "first" and "second" should not be used alone as a basis for interpretation of the order of a corresponding component, and a basis for the existence of an identifier with a small number, and the existence of an identifier with a large number. The present disclosure includes a configuration in which the second conductive layer 42 includes the second unit slot 422, but the first conductive layer 41 does not include the first unit slot 412.

### Reference Signs List

- 10: RESONATOR
- 10X: UNIT STRUCTURE
- 20: BASE
- 20a: CAVITY
- 21: FIRST BASE
- 22: SECOND BASE
- 23: CONNECTOR
- 24: THIRD BASE
- 25: FORTH BASE
- 30: PAIR CONDUCTORS
- 301: FIFTH CONDUCTIVE LAYER
- 302: FIFTH CONDUCTOR
- 303: SIXTH CONDUCTOR
- 31: FIRST CONDUCTOR
- 32: SECOND CONDUCTOR
- 40: THIRD CONDUCTOR
- 401: FIRST RESONATOR
- 402: SLOT
- 403: SEVENTH CONDUCTOR
- 40X: UNIT RESONATOR
- 401: CURRENT PATH
- 41: FIRST CONDUCTIVE LAYER
- 411: FIRST UNIT CONDUCTOR
- 412: FIRST UNIT SLOT
- 413: FIRST CONNECTING CONDUCTOR
- 414: FIRST FLOATING CONDUCTOR
- 415: FIRST FEEDING CONDUCTOR
- 41X: FIRST UNIT RESONATOR
- 41Y: FIRST DIVISIONAL RESONATOR
- 42: SECOND CONDUCTIVE LAYER
- 421: SECOND UNIT CONDUCTOR
- 422: SECOND UNIT SLOT
- 423: SECOND CONNECTING CONDUCTOR
- 424: SECOND FLOATING CONDUCTOR
- 42X: SECOND UNIT RESONATOR
- 42Y: SECOND DIVISIONAL RESONATOR
- 45: IMPEDANCE ELEMENT
- 46: CONDUCTIVE COMPONENT
- 47: DIELECTRIC COMPONENT
- 50: FOURTH CONDUCTOR
- 50a: FIRST WIDER PART
- 50b: SECOND WIDER PART
- 51: REFERENCE POTENTIAL LAYER
- 52: THIRD CONDUCTIVE LAYER
- 53: FOURTH CONDUCTIVE LAYER
- 60: FIRST ANTENNA
- 61: FIRST FEEDING LINE
- 62: NINTH CONDUCTOR
- 70: SECOND ANTENNA
- 71: SECOND FEEDING LAYER
- 72: SECOND FEEDING LINE
- 80: WIRELESS COMMUNICATION MODULE
- 81: CIRCUIT BOARD
- 811: GROUND CONDUCTOR
- 811a: THIRD WIDER PART
- 811b: FOURTH WIDER PART
- 82: RF MODULE
- 90: WIRELESS COMMUNICATION DEVICE
- 91: BATTERY
- 92: SENSOR
- 93: MEMORY
- 94: CONTROLLER
- 95: FIRST CASE
- 95A: UPPER SURFACE
- 96: SECOND CASE
- 96A: UNDER SURFACE
- 961: EIGHTH CONDUCTOR
- 9612: FIRST BODY
- 9613: FIRST EXTRA-BODY
- 9614: SECOND EXTRA-BODY
- 97: THIRD ANTENNA
- 98: ATTACH MEMBER
- 99: ELECTRICAL CONDUCTIVE BODY
- 99A: UPPER SURFACE
- 99h: THROUGH HOLE
- 100: WIRELESS COMMUNICATION FASTENER
- 101: FIRST FASTENING BODY
- 101a: THROUGH HOLE
- 102: SECOND FASTENING BODY
- 102a: THROUGH HOLE
- 110: WIRELESS COMMUNICATION BOLT
- 120: BOLT
- 121: SHAFT PART
- 122: FIRST GROOVE
- 123: HEAD PART
- 124: HEAD SURFACE
- 125: AROUND SURFACE
- 126: SEATING SURFACE
- 127: SECOND GROOVE
- 128: THIRD GROOVE
- 130: WIRELESS COMMUNICATION NUT
- 140: NUT
- 141: SCREW HOLE
- 142: AROUND SURFACE
- 143: HEAD SURFACE
- 144: SEATING SURFACE
- 145: FOURTH GROOVE
- 146: FIFTH GROOVE
- 150: WIRELESS COMMUNICATION WASHER
- 160: WASHER
- 163: SECOND THROUGH HOLE
- 170: WIRELESS COMMUNICATION RIVET
- 180: RIVET
- 181: BODY PART
- 182: HEAD PART
- 183: NINTH GROOVE
- f_{c}: OPERATING FREQUENCY OF THIRD ANTENNA
- λ_{c}: OPERATING WAVELENGTH OF THIRD ANTENNA

## Claims

1. A wireless communication bolt comprising:
a bolt; and
a wireless communication module,
wherein the bolt includes a shaft part and a head part,
the wireless communication module includes an antenna,
the antenna includes:
a first conductor;
a second conductor facing the first conductor along a first axis;
a plurality of third conductors positioned between the first conductor and the second conductor and extending along the first axis;
a fourth conductor connected to the first conductor and the second conductor and extending along the first axis; and
a feeding line electromagnetically connected to the third conductor, and
the fourth conductor faces the head part.

2. The wireless communication bolt according to claim 1, wherein
the head part has a flat portion at a top of the head part, and
the fourth conductor faces the flat portion.

3. The wireless communication bolt according to claim 1, wherein
the head part has a flat portion at a top of the head part,
the flat portion has a recess having a hexagonal shape,
the antenna is positioned around the recess, and
the first axis extends along an outer periphery of the hexagonal shape.

4. The wireless communication bolt according to claim 1, wherein
the head part has a flat portion at a top of the head part,
the flat portion has a recess, and
the fourth conductor faces a bottom surface of the recess.

5. The wireless communication bolt according to claim 1, wherein
the head part has an outer periphery having a polygonal shape, and
the fourth conductor faces one side of the polygonal shape.

6. The wireless communication bolt according to claim 1, wherein
the head part has an outer periphery having a polygonal shape,
the head part has a recess at one side of the polygonal shape, and
the fourth conductor faces a bottom surface of the recess.

7. The wireless communication bolt according to claim 5 or 6, wherein
the polygonal shape is a triangle, a rectangle, a pentagon, a hexagon, or a heptagon.

8. The wireless communication bolt according to claim 1, wherein
the head part has a ring at a top of the head part, and
the first axis of the antenna is along a circumferential direction of the ring.

9. A wireless communication bolt comprising:
a bolt; and
a wireless communication module,
wherein the bolt includes a shaft part and a head part,
the wireless communication module includes an antenna,
the antenna includes:
a first conductor;
a second conductor facing the first conductor along a first axis;
a plurality of third conductors positioned between the first conductor and the second conductor and extending along the first axis;
a fourth conductor connected to the first conductor and the second conductor and extending along the first axis; and
a feeding line electromagnetically connected to the third conductor, and
the antenna is positioned at a tip end portion of the shaft part.

10. The wireless communication bolt according to any one of claims 1 to 9, wherein
the wireless communication module includes a sensor.

11. The wireless communication bolt according to claim 10, wherein
the sensor is a geomagnetic sensor, a pressure sensor, an acceleration sensor, an angular velocity sensor, or an optical hall sensor.

12. The wireless communication bolt according to claim 10, wherein
the sensor is a geomagnetic hall sensor.

13. A wireless communication fastener comprising:
the wireless communication bolt according to claim 12; and
a nut that includes a magnet facing the geomagnetic hall sensor.

14. A wireless communication fastener comprising:
the wireless communication bolt according to claim 12;
a washer that includes a magnet facing the geomagnetic hall sensor; and
a nut.

15. A wireless communication fastener comprising:
the wireless communication bolt according to any one of claims 1 to 12; and
a nut.

16. A wireless communication nut comprising:
a nut; and
a wireless communication module,
wherein the wireless communication module includes an antenna,
the antenna includes:
a first conductor;
a second conductor facing the first conductor along a first axis;
a plurality of third conductors positioned between the first conductor and the second conductor and extending along the first axis;
a fourth conductor connected to the first conductor and the second conductor and extending along the first axis; and
a feeding line electromagnetically connected to the third conductor, and
the fourth conductor faces the nut.

17. The wireless communication nut according to claim 16, wherein
the nut has an outer periphery having a polygonal shape, and
the fourth conductor faces one side of the polygonal shape.

18. The wireless communication nut according to claim 16, wherein
the nut has an outer periphery having a polygonal shape,
the nut has a recess at one side of the polygonal shape, and
the fourth conductor faces a bottom surface of the recess.

19. The wireless communication nut according to claim 17 or 18, wherein
the polygonal shape is a triangle, a rectangle, a pentagon, a hexagon, or a heptagon.

20. The wireless communication nut according to claim 16, wherein
the nut has a through hole having a screw groove,
the antenna is positioned around the through hole, and the first axis extends along an outer circumference of the through hole.

21. The wireless communication nut according to claim 16, wherein
the nut has a ring, and
the first axis of the antenna is along a circumferential direction of the ring.

22. The wireless communication nut according to any one of claims 16 to 21, wherein
the wireless communication module includes a sensor.

23. The wireless communication nut according to claim 22, wherein
the sensor is a geomagnetic sensor, a pressure sensor, an acceleration sensor, or an angular velocity sensor.

24. The wireless communication nut according to claim 22, wherein
the sensor is a geomagnetic hall sensor.

25. A wireless communication fastener comprising:
the wireless communication nut according to claim 24; and
a bolt that includes a magnet facing the geomagnetic hall sensor.

26. A wireless communication fastener comprising:
the wireless communication nut according to claim 24;
a washer that includes a magnet facing the geomagnetic hall sensor; and
a bolt.

27. A wireless communication fastener comprising:
the wireless communication nut according to any one of claims 16 to 24; and
a bolt.

28. A wireless communication washer comprising:
a washer; and
a wireless communication module,
wherein the washer has an extension extending outward from an outer periphery of a nut or a bolt,
the wireless communication module includes an antenna,
the antenna includes:
a first conductor;
a second conductor facing the first conductor along a first axis;
a plurality of third conductors positioned between the first conductor and the second conductor and extending along the first axis;
a fourth conductor connected to the first conductor and the second conductor and extending along the first axis; and
a feeding line electromagnetically connected to the third conductor, and
the antenna is positioned on the extension.

29. The wireless communication washer according to claim 28, wherein
an outer diameter of the washer is larger than an outer diameter of the nut or the bolt.

30. The wireless communication washer according to claim 28 or 29, wherein
the wireless communication module includes a sensor.

31. The wireless communication washer according to claim 30, wherein
the sensor is a geomagnetic sensor, a pressure sensor, an acceleration sensor, or an angular velocity sensor.

32. The wireless communication washer according to claim 31, wherein
the sensor is a geomagnetic hall sensor.

33. A wireless communication fastener comprising:
the wireless communication washer according to claim 32;
a bolt that includes a magnet facing the geomagnetic hall sensor; and
a nut.

34. A wireless communication fastener comprising:
the wireless communication washer according to claim 32;
a nut that includes a magnet facing the geomagnetic hall sensor; and
a bolt.

35. A wireless communication fastener comprising:
the wireless communication washer according to any one of claims 28 to 32;
a bolt; and
a nut.

36. A structure comprising
the wireless communication fastener according to any one of claims 13 to 15, 25 to 27, and 33 to 35,
the structure being fixed with the wireless communication fastener.

37. A wireless communication rivet comprising:
a rivet; and
a wireless communication module,
wherein the rivet includes a head part,
the wireless communication module includes an antenna,
the antenna includes:
a first conductor;
a second conductor facing the first conductor along a first axis;
a plurality of third conductors positioned between the first conductor and the second conductor and extending along the first axis;
a fourth conductor connected to the first conductor and the second conductor and extending along the first axis; and
a feeding line electromagnetically connected to the third conductor, and
the fourth conductor faces the head part.

38. A structure comprising
the wireless communication rivet according to claim 37,
the structure being fixed with the wireless communication rivet.
